# EUROPEAN PATENT APPLICATION

(11) **EP 4 811 520 A1**
(43) Date of publication of application: **23.09.2026**
(21) Application number: 24923125.9
(22) Date of filing: 15.04.2024
(51) Int. Cl.: H01M 50/244

(54) **CASE, BATTERY AND ELECTRICAL DEVICE**

(30) Priority: 06.02.2024 CN 202410171624
(71) Applicant: Contemporary Amperex Technology Co., Limited, Ningde, Fujian 352100 (CN)
(72) Inventor: WANG, Yong, Ningde, Fujian 352100 (CN); WANG, Qing, Ningde, Fujian 352100 (CN); ZHANG, Wei, Ningde, Fujian 352100 (CN)
(74) Representative: Lorenz Seidler Gossel Part. mbB
(86) International application number: PCT/CN2024/087815
(87) International publication number: WO 2025/166900

(57) **Abstract**

Provided are a box (300), a battery (400), and an electrical apparatus (500). The box (300) includes a frame (310) and a supporting plate (320), where the supporting plate (320) is disposed on one side of the frame (310) and defines, in an enclosing mode, an accommodating space with the frame (310), the supporting plate (320) includes a plurality of structural plates (321), a buffer layer (322) disposed between adjacent structural plates (321), and a heat exchange member (100) disposed on the structural plate (321) adjacent to the accommodating space on a side away from the frame (320).

## Description

### CROSS-REFERENCE TO RELATED APPLICATIONS

The present application claims priority to Chinese Patent Application No. 202410171624.3, filed on February 06, 2024 by the Contemporary Amperex Technology Co., Ltd., entitled "BOX, BATTERY, AND ELECTRICAL APPARATUS".

### TECHNICAL FIELD

The present application relates to the technical field of batteries, and in particular, to a box, a battery, and an electrical apparatus.

### BACKGROUND

In the related arts, the box is suitable for accommodating battery cells. During the charging and discharging process, the battery cells may generate a large amount of heat. Cooling structures can be disposed to cool the battery cells. When the battery cells are used in cold environments, their range may be significantly reduced. Heating structures can be disposed to heat the battery cells.

However, even with the heat exchange plate integrated at the bottom of the box at present, the reliability of the box still needs further improvement.

### SUMMARY OF THE INVENTION

The present application is intended to solve at least one of the technical problems existing in the prior art. Therefore, embodiments of the present application provide a box, a battery, and an electrical apparatus, so as to improve the reliability of the battery, an energy storage system, and the electrical apparatus by improving the reliability of the box.

Embodiments of the present application provides a box, including: a frame and a supporting plate, where the supporting plate is disposed on one side of the frame and defines, in an enclosing mode, an accommodating space with the frame, the supporting plate includes a plurality of structural plates, a buffer layer disposed between adjacent structural plates, and a heat exchange member disposed on the structural plate adjacent to the accommodating space on a side away from the frame, and at least one of the structural plates is connected to the frame.

According to some embodiments of the present application, the heat exchange member includes a first heat exchange flow channel, and the first heat exchange flow channel includes a first heat exchange segment and a second heat exchange segment; and the second heat exchange segment is bent to form a U-shaped region, and the first heat exchange segment is bent to be disposed in the U-shaped region and bent to be connected to the second heat exchange segment.

According to some embodiments of the present application, the second heat exchange segment is located on an outermost side of the first heat exchange flow channel in a circumferential direction.

According to some embodiments of the present application, the first heat exchange segment and the second heat exchange segment are bent in a same plane.

According to some embodiments of the present application, the first heat exchange segment includes a plurality of first heat exchange portions, and the plurality of first heat exchange portions are spaced apart from each other and sequentially bent to be connected.

According to some embodiments of the present application, the plurality of first heat exchange portions are spaced apart from each other in a first direction, each first heat exchange portion extends linearly in a second direction, and the first direction and the second direction are arranged at an angle.

According to some embodiments of the present application, the second heat exchange segment includes a second heat exchange portion, a third heat exchange portion, and a fourth heat exchange portion, the second heat exchange portion extends along a first side periphery of the first heat exchange segment, the third heat exchange portion is connected between the second heat exchange portion and the first heat exchange segment and extends along a second side periphery of the first heat exchange segment, a first end of the third heat exchange portion is connected to the second heat exchange portion at an angle, and a second end of the third heat exchange portion is connected to the first heat exchange segment at an angle; and the fourth heat exchange portion is in communication with the second heat exchange portion, is connected to the second heat exchange portion at an angle, and extends along a third side periphery of the first heat exchange segment.

According to some embodiments of the present application, the first heat exchange segment includes a plurality of first heat exchange portions, and the plurality of first heat exchange portions are sequentially bent to be connected in a first direction, where the second heat exchange portion is located on one side of the plurality of first heat exchange portions in the first direction, and the third heat exchange portion is located on one side of the plurality of first heat exchange portions in a second direction, and the first direction and the second direction are arranged at an angle; the first end of the third heat exchange portion is connected to one end of the second heat exchange portion in the second direction, the second end of the third heat exchange portion is connected to the first heat exchange portion, furthest from the second heat exchange portion in the first direction, in the plurality of first heat exchange portions, the fourth heat exchange portion is located on the other side of the plurality of first heat exchange portions in the second direction, one end of the fourth heat exchange portion is connected to an end of the second heat exchange portion away from the third heat exchange portion, and the other end of the fourth heat exchange portion extends, in the first direction, in a direction away from the second heat exchange portion; or the second heat exchange portion is located on one side of the plurality of first heat exchange portions in the second direction, the third heat exchange portion is located on one side of the plurality of first heat exchange portions in the first direction, and the first direction and the second direction are arranged at an angle; the first end of the third heat exchange portion is connected to one end of the second heat exchange portion in the first direction, the second end of the third heat exchange portion is connected to the first heat exchange portion, closest to the third heat exchange portion in the first direction, in the plurality of first heat exchange portions, the fourth heat exchange portion is located on the other side of the plurality of first heat exchange portions in the first direction, one end of the fourth heat exchange portion is connected to an end of the second heat exchange portion away from the third heat exchange portion, and the other end of the fourth heat exchange portion extends, in the second direction, in a direction away from the second heat exchange portion.

According to some embodiments of the present application, the third heat exchange portion and the fourth heat exchange portion extend in the first direction, and both the first heat exchange portion and the second heat exchange portion extend in the second direction; or the first heat exchange portion, the third heat exchange portion, and the fourth heat exchange portion all extend in the second direction, and the second heat exchange portion extends in the first direction.

According to some embodiments of the present application, both the third heat exchange portion and the fourth heat exchange portion extend in the first direction, and in the first direction, a length of the fourth heat exchange portion is less than or equal to a length of the third heat exchange portion; or the first heat exchange portion and the third heat exchange portion extend in the second direction, the second heat exchange portion extends in the first direction, and in the second direction, a length of the third heat exchange portion is greater than or equal to a length of the first heat exchange portion

According to some embodiments of the present application, the fourth heat exchange portion extends in the first direction and extends to a position close to the first heat exchange portion, furthest from the second heat exchange portion, in the plurality of first heat exchange portions.

According to some embodiments of the present application, the second heat exchange segment further includes a fifth heat exchange portion, and the fifth heat exchange portion extends along a fourth side periphery of the first heat exchange segment and closes at least part of an opening of the U-shaped region formed by the second heat exchange portion, the third heat exchange portion, and the fourth heat exchange portion.

According to some embodiments of the present application, the fifth heat exchange portion is arranged opposite to the second heat exchange portion, the fifth heat exchange portion is connected between the second end of the third heat exchange portion and the first heat exchange segment, connected at an angle to the third heat exchange portion, and connected at an angle to the first heat exchange segment; or, one end of the fifth heat exchange portion is connected to an end of the fourth heat exchange portion away from the second heat exchange portion, and the fifth heat exchange portion and the fourth heat exchange portion are connected at an angle.

According to some embodiments of the present application, the first heat exchange flow channel further includes a third heat exchange segment, the first heat exchange segment is connected between the third heat exchange segment and the second heat exchange segment, and the third heat exchange segment and the first heat exchange segment are connected at an angle.

According to some embodiments of the present application, the first heat exchange segment includes a plurality of first heat exchange portions, and the plurality of first heat exchange portions are sequentially bent to be connected in the first direction; and the third heat exchange segment is arranged on a side of the first heat exchange segment away from the third heat exchange portion, and the third heat exchange segment is connected to the first heat exchange portion, closest to the second heat exchange portion in the first direction, in the plurality of first heat exchange portions.

According to some embodiments of the present application, the third heat exchange segment extends, in the first direction, in the direction away from the second heat exchange portion, and the first heat exchange portion extends in the second direction, where the first direction and the second direction are arranged at an angle.

According to some embodiments of the present application, the third heat exchange segment extends in the first direction to a position close to the first heat exchange portion, furthest from the second heat exchange portion, in the plurality of first heat exchange portions.

According to some embodiments of the present application, the first heat exchange segment is connected downstream of the second heat exchange segment in a fluid flow direction; or, the heat exchange member is configured such that: when a battery assembly is heated, the first heat exchange segment is connected downstream of the second heat exchange segment in the fluid flow direction; and when the battery assembly of the battery is cooled, the first heat exchange segment is connected upstream of the second heat exchange segment in the fluid flow direction.

According to some embodiments of the present application, the box is provided with one or more heat exchange flow channels, when a plurality of heat exchange flow channels are disposed, the plurality of heat exchange flow channels are spaced apart from each other in the first direction or arranged around each other, at least one of the heat exchange flow channels is formed as the first heat exchange flow channel, and the plurality of heat exchange flow channels are arranged in parallel.

According to some embodiments of the present application, the plurality of heat exchange flow channels are spaced apart from each other in the first direction, and two heat exchange flow channels located at two ends in the first direction are both the first heat exchange flow channels; and the two first heat exchange flow channels are symmetrically arranged about a centerline of the box in a second direction, where the second direction and the first direction are arranged at an angle.

According to some embodiments of the present application, the plurality of heat exchange flow channels are symmetrically arranged about the centerline of the box in the second direction.

According to some embodiments of the present application, the plurality of heat exchange flow channels further includes at least one second heat exchange flow channel, and the second heat exchange flow channel is disposed between the two first heat exchange flow channels, where a structure of any second heat exchange flow channel is same as or different from a structure of the first heat exchange flow channel.

According to some embodiments of the present application, the second heat exchange flow channel includes a plurality of fourth heat exchange segments, and the plurality of fourth heat exchange segments are sequentially connected, where the fourth heat exchange segment extends in the second direction, and the plurality of fourth heat exchange segments are spaced apart from each other in the first direction.

According to some embodiments of the present application, the heat exchange member is provided with a plurality of heat exchange flow channels, the plurality of heat exchange flow channels include one first heat exchange flow channel and at least one fourth heat exchange flow channel, the fourth heat exchange flow channel is bent to be disposed in the U-shaped region of the first heat exchange flow channel, the first heat exchange flow channel and the fourth heat exchange flow channel are bent in a same plane, and bending structures of the first heat exchange flow channel and the fourth heat exchange flow channel are same or different.

According to some embodiments of the present application, the fourth heat exchange flow channel includes a U-shaped region structurally identical to the first heat exchange flow channel, and at least part of the first heat exchange segment of the first heat exchange flow channel is disposed in the U-shaped region of the fourth heat exchange flow channel.

According to some embodiments of the present application, the U-shaped region of the first heat exchange flow channel is located in a circumferential direction of an outermost side of the heat exchange member.

According to some embodiments of the present application, the box includes at least one heat exchange tube, when a plurality of heat exchange tubes are disposed, the plurality of heat exchange tubes are spaced apart from each other in the first direction, and each heat exchange tube defines a heat exchange flow channel on an inner side thereof.

According to some embodiments of the present application, the buffer layer is constructed as a porous structure.

According to some embodiments of the present application, a hole in the buffer layer extends in an opposite direction of an adjacent structural plate.

According to some embodiments of the present application, the buffer layer is constructed as a plastic material member or a metal material member; when the buffer layer is constructed as the plastic material member, the buffer layer is connected to the structural plate through thermocompression bonding; and when the buffer layer is constructed as the metal material member, the buffer layer is connected to the structural plate through brazing.

According to some embodiments of the present application, the structural plates include a first structural plate to an Nth structural plate sequentially disposed in an arrangement direction of the frame and the supporting plate, N≥2, and at least the first structural plate and the Nth structural plate are connected to the frame.

According to some embodiments of the present application, a connecting flange is disposed on a side of the frame facing the supporting plate, a structural dimension of the buffer layer is less than a structural dimension of the structural plate to define an inserting groove, and the connecting flange extends into the inserting groove; or the connecting flange is connected to the first structural plate in an overlapping mode.

According to some embodiments of the present application, a minimum overlapping dimension of the structural plate and the connecting flange is 6 mm.

According to some embodiments of the present application, a structural dimension of the first structural plate is less than a structural dimension of the Nth structural plate, and the first structural plate is connected to the connecting flange, while the Nth structural plate is connected to an end surface of the frame; or the structural dimension of the first structural plate is equal to the structural dimension of the Nth structural plate, and both the first structural plate and the Nth structural plate are connected to the connecting flange.

The present application provides a battery, including the box in the above embodiments.

The present application provides an electrical apparatus, including the battery in the above embodiment.

Additional aspects and advantages of the present application will be partially given in the following description, and will partially become apparent from the following description, or will be understood from the practice of the present application.

### BRIEF DESCRIPTION OF DRAWINGS

The above and/or additional aspects and advantages of the present application will become apparent and easily understood from the description of the embodiments in conjunction with the drawings below, in which:
FIG. 1 is a schematic diagram of an electrical apparatus according to an embodiment of the present application;
FIG. 2 is a schematic diagram of a battery according to an embodiment of the present application.
FIG. 3 is a schematic diagram of a battery assembly and a heat exchange member according to the first embodiment of the present application;
FIG. 4 is a schematic diagram of a battery assembly and a heat exchange member according to the second embodiment of the present application;
FIG. 5 is a schematic diagram of a battery assembly and a heat exchange member according to the third embodiment of the present application;
FIG. 6 is a schematic diagram of a battery assembly and a heat exchange member according to the fourth embodiment of the present application;
FIG. 7 is a schematic diagram of a battery assembly and a heat exchange member according to the fifth embodiment of the present application;
FIG. 8 is a schematic diagram of a heat exchange member and a box of a battery according to some embodiments of the present application;
FIG. 9 is a schematic diagram of a heat exchange member and a box according to some other embodiments of the present application;
FIG. 10 is a schematic diagram of a battery assembly and a heat exchange member according to the sixth embodiment of the present application;
FIG. 11 is a schematic diagram of a battery assembly and a heat exchange member according to the seventh embodiment of the present application;
FIG. 12 is a schematic diagram of a battery assembly and a heat exchange member according to the eighth embodiment of the present application;
FIG. 13 is a schematic diagram of a battery assembly and a heat exchange member according to the ninth embodiment of the present application;
FIG. 14 is a schematic diagram of a battery assembly and a heat exchange member according to the tenth embodiment of the present application;
FIG. 15 is a schematic diagram of a battery assembly and a heat exchange member according to the eleventh embodiment of the present application;
FIG. 16 is an exploded schematic diagram of a box according to an embodiment of the present application;
FIG. 17 is a schematic diagram of a supporting plate according to an embodiment of the present application;
FIG. 18 is a schematic exploded view of a supporting plate according to an embodiment of the present application;
FIG. 19 is a partially enlarged schematic view of a buffer layer according to an embodiment of the present application;
FIG. 20 is a schematic partial view of cooperation of a supporting plate and a frame according to an embodiment of the present application; and
FIG. 21 is a schematic partial view of cooperation of another supporting plate and a frame according to an embodiment of the present application.

### DETAILED DESCRIPTION

The embodiments of the present application are described in detail below, and examples of which are shown in the accompanying drawings, in which the same or similar reference numerals throughout denote the same or similar elements or elements having the same or similar functions. The embodiments described below with reference to the accompanying drawings are exemplary and are used only for explaining the present application, and are not to be construed as limiting the present application.

In the descriptions of the present application, it should be understood that orientations or positional relationships indicated by "center", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting the present application.

It is to be noted that the terms "first" and "second" are used for descriptive purposes only and should not be construed as indicating or implying relative importance or implying the number of technical features indicated. From this, features defined as "first" and "second" may explicitly or implicitly include one or more features. Further, in the description of the present application, "a plurality of" means two or more, unless otherwise noted.

During operation, battery cells may generate significant heat. If this heat cannot be dissipated in time, the operating temperature of the battery cell may become too high, potentially leading to thermal runaway. Conversely, in cold environments, the activation energy of the electrolyte within the battery cell decreases, resulting in the reduced efficiency of the battery cell and a reduced range. Therefore, a temperature regulation structure is needed to adjust the operating temperature of the battery cell, which prevents the operating temperature of the battery cell from becoming too high, improves the operating stability and reliability of the battery cell, reduces the probability of thermal runaway of the battery cell, and prevents the operating temperature of the battery cell from becoming too low, thereby maintaining the stable efficiency of the battery cell, alleviating or even preventing a reduction in the range, enhancing the user experience, and expanding the application scenarios.

The battery cell may be a secondary battery, and the secondary battery refers to a battery cell that can be reused by activating an active material by means of charging after the battery cell is discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like, which is not limited in the embodiments of the present utility model.

The battery mentioned in the embodiments of the present utility model refers to a single physical module including one or more battery cells to provide higher voltage and capacity. When a plurality of battery cells are provided, the plurality of battery cells are connected in series, in parallel, or in series-parallel through busbar components.

In some embodiments, the plurality of battery cells may form a battery module, that is, when there are a plurality of battery cells, the plurality of battery cells are arranged and fixed to form a battery module.

In some embodiments, the battery includes a box and battery cells, at least one battery cell or at least one battery module is accommodated in the box, the box is provided with an accommodating space, and at least one battery cell or at least one battery module is accommodated in the accommodating space.

In some embodiments, the box may be a part of a vehicle chassis structure. For example, a part of the box may become at least a part of a floor of the vehicle, or a part of the box may be at least a part of a cross beam and a longitudinal beam of the vehicle.

In some embodiments, the battery or the battery module may be a part of an energy storage system. The energy storage system can be an energy storage container, an energy storage cabinet, or the like, in which batteries and energy shut-off modules are integrated.

With the development of the battery technology, it is necessary to consider many design factors, such as an energy density, a cycle life, a discharge capacity, a charge-discharge rate and other performance parameters. In addition, the safety performance of the battery should also be considered.

The technical solutions described in the embodiments of the present utility model are applicable to a battery and an electrical apparatus using the battery.

The electrical apparatus may be a vehicle, a mobile phone, a portable device, a laptop, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The embodiments of the present utility model do not impose special restrictions on the above electrical apparatuses.

The following embodiments, for the sake of convenience, are illustrated by taking a vehicle as an electrical apparatus.

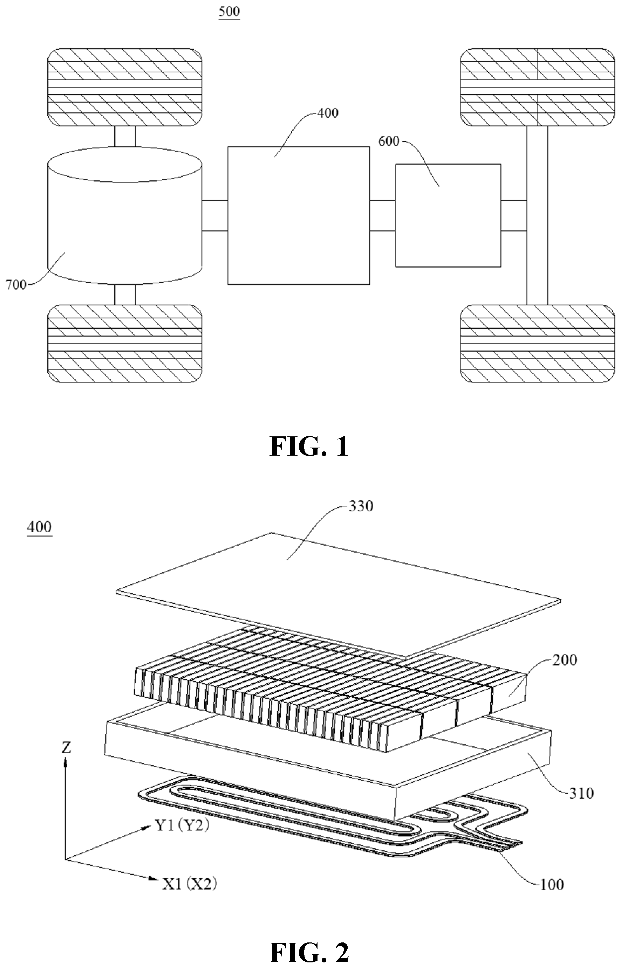

Referring to FIG. 1, FIG. 1 is a structural schematic view of a vehicle according to some embodiments of the present application. A battery 400 is disposed inside the vehicle, and the battery 400 may be disposed at the bottom, the front or the back of the vehicle. The battery 400 may be used to power the vehicle. For example, the battery 400 may be used as an operating power source of the vehicle.

The vehicle may further include a controller 600 and a motor 700. The controller 600 is used to control the battery 400 to supply power to the motor 700, with the motor 700 formed as a load, for example, for the operating power demand during the starting, navigating, and driving of the vehicle.

In some embodiments of the present utility model, the battery 400 not only may serve as an operating power source for the vehicle, but also may serve as a driving power source for the vehicle, thus replacing or partially replacing fuel or natural gas to provide driving power for the vehicle.

Referring to FIG. 2, FIG. 2 is an exploded diagram of a battery 400 according to some embodiments of the present utility model. The battery 400 includes a battery module 201 and a box 300. The box 300 is configured to accommodate the battery module 201.

The box 300 is a component that accommodates the battery module 201. The box 300 provides a storage space for a plurality of battery cells 2011 in the battery module 201. A variety of structures may be used for the box 300. In some embodiments, the box 300 may include a tray and the box 300, the tray and the box 300 cover each other to define the storage space for accommodating the battery cell 2011. The tray and the box 300 may be in various shapes, such as a cuboid or a cylinder. The tray may be a unilaterally open hollow structure, and the box 300 may also be a unilaterally open hollow structure. The open side of the box 300 covers the open side of the tray to form the box 300 with the storage space. Alternatively, the tray may be a unilaterally open hollow structure, and the box 300 may be a platy structure. The box 300 covers the open side of the tray to form the box 300 with the storage space. As an example, the battery cell 2011 may be a cylindrical battery cell 2011, a prismatic battery cell 2011, a pouch battery cell 2011, or a battery cell 2011 in another shape, which is not particularly limited in the present utility model.

There may be one or more battery cells 2011 in the battery 400. If there are a plurality of battery cells 2011, the plurality of battery cells 2011 may be connected in series or parallel or in series-parallel, where the series-parallel connection means that the plurality of battery cells 2011 are connected in both series and parallel. The plurality of battery cells 2011 may be connected in series or in parallel or in series-parallel first to form the battery modules 201, and the plurality of battery modules 201 may then be connected in series or in parallel or in series-parallel to form a whole that is accommodated in the box 300. Alternatively, all the battery cells 2011 may be directly connected in series or in parallel or in series-parallel, and then the whole formed by all the battery cells 2011 is accommodated in the box 300.

In the battery 400, a heat exchange member 100 can be disposed between the plurality of battery cells 2011 and the top wall of the box 300, or between the plurality of battery cells 2011 and the bottom wall of the box 300, or between the bottom wall of the box 300 and a bottom protective plate, or between two adjacent battery cells 2011, to provide heat exchange for the plurality of battery cells 2011. In the embodiments of the present application, the heat exchange member 100 may include a heat exchange tube integrated on the bottom wall of the box 300. The heat exchange tube may be a flat tube, a round tube, a harmonica-shaped tube, or tubes in other shapes.

The battery cell 2011 serves as a smallest energy unit in the battery module 201 and the battery 400. The battery module 201 or the battery 400 includes a plurality of battery cells 2011 inside. The battery cell 2011 includes a large surface of the battery 400 defined by a width edge and a length edge of the battery cell 2011, a small surface of the battery 400 defined by the width edge and a height edge thereof, and an end surface of the battery 400 defined by the length edge and the width edge thereof. To enable the battery cell 2011 to be used in cold environments, a heating film may be attached to the surface of the battery cell 2011 (such as the large surface of the battery 400, the small surface of the battery 400, or the end surface of the battery 400) to heat the battery cell 2011. Meanwhile, a cooling structure can be disposed corresponding to the large surface of the battery 400, the small surface of the battery 400, or the end surface of the battery 400 to cool the battery cell 2011, thereby cooling the battery 400 as a whole. Of course, a heat exchange structure can also be disposed on the large surface of the battery 400, the small surface of the battery 400, or the end surface of the battery 400, and the heat exchange structure can achieve both cooling and heating.

However, in the prior art, a heat exchange plate can be disposed on the bottom surface of the box 300, which requires a sealing structure that cooperates with the heat exchange plate, such as a sealing gasket, a mounting structure, and an installation structure. This results in a complex overall structure of the battery 400, a large number of parts, cumbersome installation, and high costs. The number of sealing interfaces between the heat exchange plate and the box 300 is also large, resulting in higher sealing costs. The heat exchange plate uses more materials and has a more complex process, which also increases the costs. Meanwhile, both a bottom plate and the heat exchange plate are planar structures, the bottom plate is used for load-bearing, and the heat exchange plate needs to be disposed thereon, which may reduce the bottom profile accuracy of the box 300, resulting in poor bottom profile accuracy of the box 300.

In view of this, embodiments of the present utility model provide a box 300, a bottom plate (i.e., supporting plate 320) of the box 300 is constructed as a structure of a plurality of structural plates 321, a buffer layer 322 is disposed between adjacent structural plates 321, and a heat exchange member 100 is disposed below the structural plate 321 at an uppermost end. The supporting plate 320 is constructed as an integrated plate structure, without the need to dispose a separate heat exchange plate structure. On the one hand, the structure of the box 300 can be simplified, thereby making the overall structure of the battery 400 simpler, with fewer parts, lower installation difficulty, and lower costs, and the number of sealing members and the number of sealing interfaces can be reduced, so as to lower the sealing costs and improve the sealing performance. On the other hand, the structural strength and rigidity of the supporting plate 320 can be improved through the buffer layer 322. The weight of a cooling member disposed in the supporting plate 320 is much lower than the structural weight of the heat exchange plate, which can reduce the load on the supporting plate 320 and improve the structural rigidity of the supporting plate 320, so as to improve the bottom profile accuracy of the box 300, thereby making the bottom surface of the box 300 flatter, reducing the probability of scratches and bottoming out, prolonging the service life, and improving the stability.

The box 300, the battery 400, the energy storage system, and the electrical apparatus according to the embodiments of the present application will be described below with reference to FIG. 1 to FIG. 21.

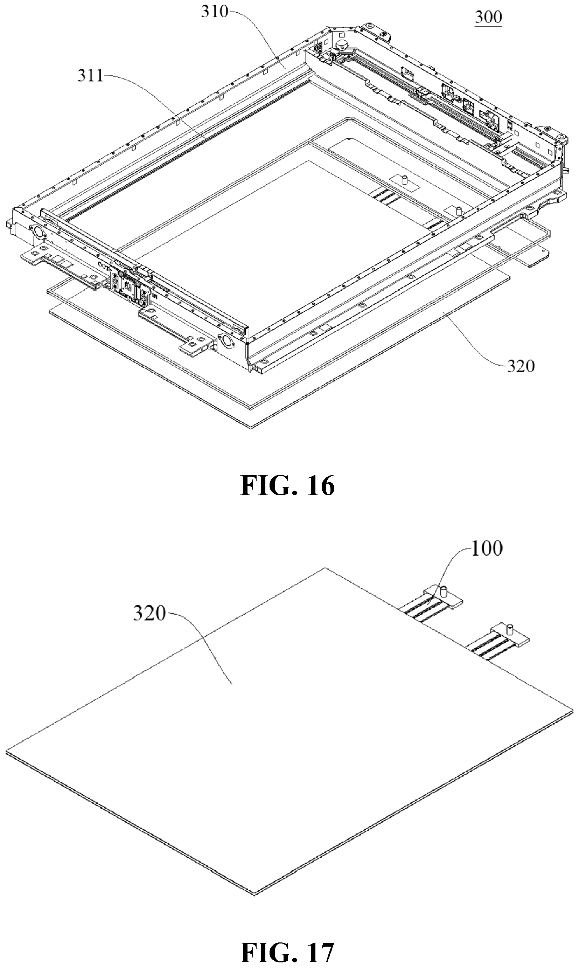

As shown in FIG. 2 and FIG. 16, an embodiment of the present application provides a box 300, including: a frame 310 and a supporting plate 320, where the supporting plate 320 is disposed on one side of the frame 310 and defines, in an enclosing mode, an accommodating space with the frame 310, the supporting plate 320 includes a plurality of structural plates 321, a buffer layer 322 disposed between adjacent structural plates 321, and a heat exchange member 100 disposed on the structural plate 321 adjacent to the accommodating space on a side away from the frame 310, and at least one structural plate 321 is connected to the frame 310.

Taking the front-to-back direction (length direction) of the box 300 as a first direction (i.e., the Z direction shown in the figure), the left-to-right direction (width direction) as a second direction (i.e., the Y1 direction shown in the figure), and the up-to-down direction (height direction) as a third direction (i.e., the X1 direction shown in the figure) as an example, the box 300 according to the embodiment of the present application is specifically described.

The frame 310 is generally a rectangular frame and is provided with a first opening and a second opening opposite to each other in the height direction. The supporting plate 320 is disposed at the bottom end of the frame 310 and is suitable for blocking the first opening. The box 300 can also be provided with a cover plate 330, and the cover plate 330 is suitable for blocking the second opening, so that the box 300 forms an accommodating space selective in opening and closing, and it is suitable to accommodate components such as the battery cell 2011 and a battery 400 management unit in the accommodating space.

The supporting plate 320 can be constructed as a sandwich plate structure or a multi-layer sandwich plate structure, including the at least two structural plates 321, and the buffer layer 322 can be disposed between adjacent structural plates 321. The heat exchange member 100 can be disposed on a side of a lower surface of the structural plate 321 at the uppermost end (i.e. the side of the structural plate 321 adjacent to the accommodating space that is away from the frame 310) to improve the structural strength and rigidity of the supporting plate 320 through the buffer layer 322. The temperature regulation (e.g., heating or cooling) of the battery cell 2011 can be achieved by the heat exchange member 100 disposed inside the supporting plate 320.

The supporting plate 320, namely the bottom plate of the box 300, integrates the structural plate 321, the heat exchange member 100, and the buffer layer 322 into a composite plate. This can integrate thermal management functions, without the need to dispose the heat exchange plate. Correspondingly, it is not needed to dispose the mounting structure, the installation structure, and the sealing structure matched with the heat exchange plate, which can simplify the structure of the box 300, reduce installation steps, lower the installation difficulty, reduce the costs, and improve the reliability of the box 300, and furthermore, can reduce the number of the sealing interfaces, with the sealing interface formed only between the frame 310 and the supporting plate 320, thereby making sealing easier and the sealing costs lower. The buffer layer 322 can improve the structural rigidity and strength of the supporting plate 320, thereby achieving higher profile accuracy of the lower surface of the box 300, having a flatter surface, reducing the probability of scratches and bottoming out, improving the stability and reliability of the box 300, and prolonging the service life.

In the box 300 according to the embodiment of the present application, the supporting plate 320 adopts the integrated composite plate structure of the structural plate 321, the buffer layer 322, and the heat exchange member 100. This not only simplifies the structure of the box 300 and reduces the installation difficulty and the number of the sealing interfaces, thereby reducing the sealing costs and production costs of the box 300, but also improves the structural strength and rigidity of the box 300, thereby improving the bottom surface profile accuracy of the box 300, improving the reliability and stability of the box 300, and prolonging the service life of the box 300.

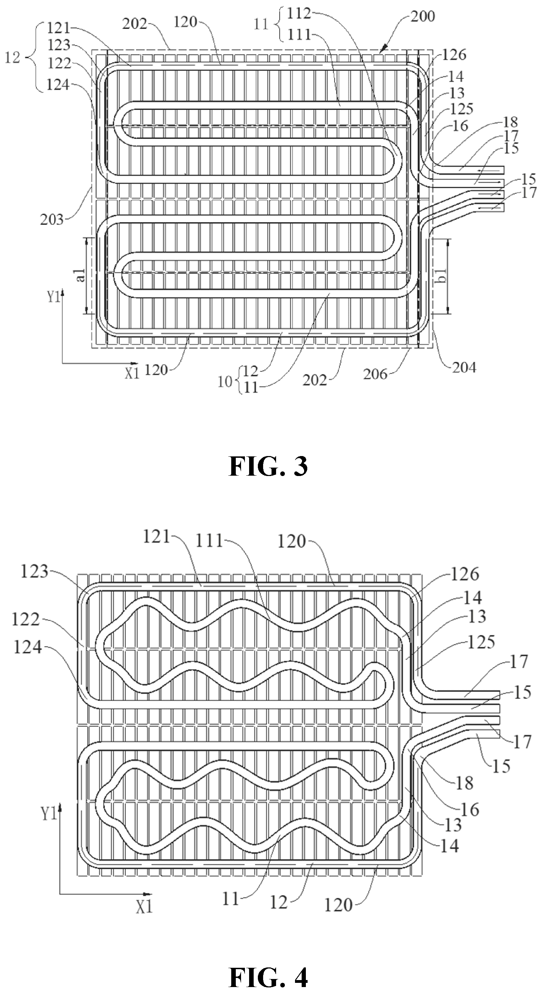

An embodiment of the present application provides a heat exchange member 100, as shown in FIG. 3, the heat exchange member 100 is used for the battery 400, the heat exchange member 100 includes a first heat exchange flow channel 10, and the first heat exchange flow channel 10 includes a first heat exchange segment 11 and a second heat exchange segment 12; and the second heat exchange segment 12 is bent to form a U-shaped region 120, and the first heat exchange segment 11 is bent to be disposed in the U-shaped region 120 and bent to be connected to the second heat exchange segment 12.

The battery 400 may include a plurality of battery cells 2011. The first heat exchange flow channel 10 is configured to exchange heat with the plurality of battery cells 2011 of the battery 400, so that the temperature of the battery 400 can be limited within a range of the safe operating temperature, thereby ensuring the operational reliability of the battery 400.

The above expression "the second heat exchange segment 12 is bent to form the U-shaped region 120, and the first heat exchange segment 11 is bent to be disposed in the U-shaped region 120" is intended to illustrate that the second heat exchange segment 12 is disposed on a circumferential periphery of the first heat exchange segment 11, and can be arranged on three side edges of the first heat exchange segment 11 in the circumferential direction. The second heat exchange segment 12 can be arranged closer to the peripheral edge of the battery 400 relative to the first heat exchange segment 11.

The second heat exchange segment 12 is bent to form the U-shaped region 120, that is, in a direction from one end of the second heat exchange segment 12 to the other end, the second heat exchange segment 12 extends along a U-shaped line to form the U-shaped region 120.

The first heat exchange segment 11 is bent to be disposed in the U-shaped region 120, that is, the first heat exchange segment 11 is arranged in the space defined, in an enclosing mode, by the second heat exchange segment 12, and the first heat exchange segment 11 extends non-linearly on the inner side of the second heat exchange segment 12, and is provided with at least one bent position.

In this embodiment, it is only limited that the first heat exchange segment 11 is bent to be disposed in the U-shaped region 120. The bending form of the first heat exchange segment 11 is not limited. That is, the specific bending form of the first heat exchange segment 11 can be designed according to the heat exchange requirement of the battery 400. For example, the first heat exchange segment 11 can extend in the length direction of the battery cell 2011 (that is, the Y1 direction in FIG. 3), is bent towards the width direction of the battery cell 2011 (that is, the X1 direction in FIG. 3) after extending to have a certain length, then continues to extend in the length direction of the battery cell 2011, and is bent in the width direction. Alternatively, the first heat exchange segment 11 can extend in the width direction of the battery cell 2011, is bent towards the length direction of the battery cell 2011 after extending to have a certain length, then continues to extend in the width direction of the battery cell 2011, and is bent in the length direction.

The first heat exchange segment 11 and the second heat exchange segment 12 are connected by bending. That is, one end of the first heat exchange segment 11 and one end of the second heat exchange segment 12 are connected, and the connection position of the first heat exchange segment 11 and the second heat exchange segment 12 is a bent non-linear structure. For example, the connection position of the first heat exchange segment 11 and the second heat exchange segment 12 can be bent into an arc segment.

The first heat exchange segment 11 and the second heat exchange segment 12 are connected. Thus, one of the end of the first heat exchange segment 11 away from the second heat exchange segment 12 and the end of the second heat exchange segment 12 away from the first heat exchange segment 11 can be used as a liquid input end and the other one can be used as a liquid output end. Therefore, when the first heat exchange flow channel 10 performs heat exchange, the heat exchange medium can flow from the first heat exchange segment 11 to the second heat exchange segment 12, or from the second heat exchange segment 12 to the first heat exchange segment 11.

As the heat exchange fluid flows in the first heat exchange flow channel 10, the temperature of the heat exchange fluid gradually changes, resulting in a gradual decline in the heat exchange effect. For example, when the heat exchange member 100 cools a battery assembly 200, the heat of the battery cell 2011 is gradually transferred to the heat exchange fluid, causing the temperature of the heat exchange fluid to gradually increase as it flows along the first heat exchange flow channel 10, and the temperature difference between the heat exchange fluid and the battery cell 2011 gradually decreases, resulting in a gradual decline in the heat exchange efficiency. When the heat exchange member 100 heats the battery assembly 200, the heat in the heat exchange fluid is gradually transferred to the battery cell 2011, causing the temperature of the heat exchange fluid to gradually decrease as it flows along the first heat exchange flow channel 10, and the temperature difference between the heat exchange fluid and the battery cell 2011 gradually decreases, resulting in a gradual decline in the heat exchange efficiency.

In this embodiment, when the heat exchange member 100 is used for cooling the battery assembly 200, the heat exchange fluid can also flow from the first heat exchange segment 11 to the second heat exchange segment 12, but the heat exchange fluid can also flow from the second heat exchange segment 12 to the first heat exchange segment 11. When the heat exchange fluid flows from the first heat exchange segment 11 to the second heat exchange segment 12, the battery cells 2011 in the middle of the battery 400 (i.e., the inner battery cell 2011 on the inner side of the periphery) can be cooled first, and then the battery cells 2011 at the peripheral edge of the battery 400 can be cooled. Since the heat dissipation of the battery cells 2011 at the peripheral edge of the battery 400 is better than that of the inner battery cells 2011, the lower-temperature heat exchange fluid in the first heat exchange segment 11 can better meet the heat dissipation requirements of the battery cells 2011 in the middle of the battery 400. The battery cells 2011 at the peripheral edge can directly face the external environment for natural heat dissipation. When the temperature of the heat exchange fluid in the second heat exchange segment 12 is slightly higher, the heat exchange fluid can still meet the heat dissipation requirements of the peripheral battery cells 2011, thereby making the cooling effect of the battery cells 2011 at the peripheral edge of the battery 400 and the cooling effect of the battery cells 2011 in the middle of the battery 400 roughly the same. Then, the temperature of the battery cells 2011 at the peripheral edge of the battery 400 and the temperature of the battery cells 2011 in the middle of the battery 400 are relatively consistent after cooling, making the temperature distribution inside the battery 400 more uniform.

When the heat exchange member 100 is used for heating the battery assembly 200, the heat exchange fluid can flow from the first heat exchange segment 11 to the second heat exchange segment 12, but the heat exchange fluid can also flow from the second heat exchange segment 12 to the first heat exchange segment 11. Illustratively, when the heat exchange fluid flows from the second heat exchange segment 12 to the first heat exchange segment 11, the battery cells 2011 at the periphery of the battery assembly 200 can be heated first, and then the battery cells 2011 in the middle of the battery assembly 200 are cooled by the heat exchange fluid. Since the battery cells 2011 at the periphery of the battery 400 dissipate more heat to the external environment, it is easier to lower the temperature of the battery cells 2011 at the periphery of the battery 400, the battery cells 2011 at the periphery of the battery 400 are heated first by the heat exchange fluid, the higher-temperature heat exchange fluid can not only raise the temperature of the battery cells 2011 at the periphery, but also compensate for the heat loss of the battery cells 2011 caused by heat dissipation to the external environment, thereby meeting the heating requirements thereof. The battery cells 2011 in the middle of the battery assembly 200 have a less contact area with the external environment, resulting in the minimal heat loss. The lower-temperature heat exchange fluid flowing in the first heat exchange segment 11 can cooperate with the heat generated by the battery cells 2011 themselves to adequately meet the heating requirements thereof. As a result, both the battery cells 2011 at the periphery of the battery 400 and the battery cells 2011 in the middle of the battery assembly 200 can achieve a substantially consistent heating effect. This ensures that the temperature of the battery cells 2011 at the periphery of the battery 400 and the temperature of the battery cells 2011 in the middle of the battery assembly 200 become more uniform after heating, achieving a more even temperature distribution within the battery 400.

In the above embodiment, by bending the second heat exchange segment 12 to form the U-shaped region 120, and bending the first heat exchange segment 11 to be disposed in the U-shaped region 120, when the heat exchange member 100 exchanges heat with the battery assembly 200, the U-shaped region 120 formed by the peripheral second heat exchange segment 12 can be aligned with the battery cells at the periphery of the battery, and the first heat exchange segment 11 in the U-shaped region 120 can be aligned with the inner battery cells. This allows the heat exchange member 100 to compensate for the internal and external temperature difference caused by the heat exchange between the peripheral battery cells 2011 and the environment, which makes the heat exchange effect of the battery cells 2011 at the periphery of the battery assembly 200 and the battery cells 2011 inside the battery assembly 200 more consistent, and improves the temperature uniformity of the battery 400, thereby prolonging the service life of the battery 400 to a certain extent.

According to some embodiments of the present application, as shown in FIG. 3, the second heat exchange segment 12 can be located on an outermost side of the first heat exchange flow channel 10 in a circumferential direction.

The second heat exchange segment 12 is formed as the outermost flow channel of the first heat exchange flow channel 10. In this way, the second heat exchange segment 12 can be configured to exchange heat with the battery cells 2011 at the peripheral edge of the battery 400, thereby improving the temperature uniformity of the battery cells 2011 at the periphery of the battery 400 in the circumferential direction.

In the above embodiment, by disposing the second heat exchange segment 12 to be located on the outermost side of the first heat exchange flow channel 10 in the circumferential direction, the second heat exchange segment 12 can exchange heat with the battery cells 2011 in the circumferential direction of the outer side of the battery assembly 200, which is beneficial to alleviating the internal and external temperature difference of the battery assembly 200 caused by heat exchange with the environment, thereby prolonging the service life of the battery assembly 200 to a certain extent.

According to some embodiments of the present application, the first heat exchange segment 11 and the second heat exchange segment 12 can be bent in a same plane.

In the above embodiment, by disposing the first heat exchange segment 11 and the second heat exchange segment 12 to be bent in the same plane, the first heat exchange flow channel 10 can exchange heat with the battery 400 in the same plane, which thus can simplify the structure of the first heat exchange flow channel 10, reduce the producing difficulty of the first heat exchange flow channel 10, and also reduce the space occupied by the first heat exchange flow channel 10, thereby increasing the volumetric energy density of the battery 400.

According to some embodiments of the present application, as shown in FIG. 3 and FIG. 4, the first heat exchange segment 11 can include a plurality of first heat exchange portions 111, and the plurality of first heat exchange portions 111 are spaced apart from each other and sequentially bent to be connected.

The plurality of first heat exchange portions 111 are sequentially connected, and the connection position of two connected first heat exchange portions 111 is bent. For example, the two connected first heat exchange portions 111 can be bent along a broken line or along an arc. The number of the first heat exchange portions 111 can be two, three, four, five or more.

The shape of the first heat exchange portion 111 can be varied, for example, the first heat exchange portion 111 can be in a straight line shape or an arc shape, etc. The extension direction of the first heat exchange portion 111 can also be varied. For example, the first heat exchange portion 111 can extend in the length direction or the thickness direction of the battery cell 2011. In this way, the plurality of first heat exchange portions 111 are sequentially bent to connected, which allows the first heat exchange segment 11 to form heat exchange flow channels in the form of an S shape, a Chinese character " 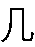 " shape, a V shape, etc.

In the above embodiment, on the one hand, by disposing the plurality of first heat exchange portions 111, the heat exchange area of the first heat exchange segment 11 can be increased, thereby increasing the heat exchange area of the first heat exchange flow channel 10, and further improving the heat exchange effect of the first heat exchange flow channel 10; on the other hand, since the internal battery cells are wrapped by the external battery cells, the temperature difference between the internal battery cells is not large. Therefore, by disposing the plurality of first heat exchange portions 111, the overall heat exchange effect can be guaranteed while ensuring that the temperature difference between the internal and external battery cells is small.

According to some embodiments of the present application, as shown in FIG. 3, the plurality of first heat exchange portions 111 are spaced apart from each other in the first direction (i.e., the Y1 direction shown in FIG. 4), each first heat exchange portion 111 extends linearly in the second direction (i.e., the X1 direction shown in FIG. 4), and the first direction and the second direction are arranged at an angle.

The expression "the first direction and the second direction are arranged at an angle" is intended to indicate that the first direction and the second direction can be arranged perpendicularly or can only intersect without being perpendicular. For example, the first direction and the second direction can be arranged at an angle of 30°, 60°, 80°, 120°, 150° or 170°. For example, as shown in FIG. 4, the first direction is the length direction of the battery cell 2011, the second direction is the thickness direction of the battery cell 2011, and the first heat exchange portions 111 extend in the length direction of the battery cell 2011 and are spaced apart from each other in the thickness direction of the battery cell 2011. In this way, the plurality of first heat exchange portions 111 can be bent to be connected to form an S-shaped heat exchange flow channel, which can achieve heat exchange for the plurality of battery cells 2011.

In the above embodiment, by disposing the first heat exchange portion 111 to extend linearly in the second direction, the production difficulty of the first heat exchange portion 111 can be reduced, thereby reducing the production complexity of the first heat exchange flow channel 10. Meanwhile, the straight tube can also increase the flow velocity of the heat exchange fluid, thereby improving the heat exchange effect of the first heat exchange flow channel 10.

According to some embodiments of the present application, as shown in FIG. 3, the first heat exchange segment 11 may further include a first bending portion 112, and the first bending portion 112 is in an arc shape and bent to be connected between two adjacent first heat exchange portions 111.

The first bending portion 112 is in an arc shape, that is, the first bending portion 112 extends along an arc. The fluid flow directions at both ends of the first bending portion 112 have a certain angle. Thus, the first bending portion 112 can change the flow direction of the fluid, thereby allowing the two connected first heat exchange portions 111 to extend and be disposed within a preset region, thereby increasing the heat exchange area of the first heat exchange segment 11 and improving the heat exchange efficiency of the first heat exchange segment 11. Meanwhile, the first bending portion 112 is in an arc shape, where the arc shape can reduce the flow resistance of the fluid and reduce the pressure drop, thereby increasing the flow rate of the fluid and further improving the heat exchange efficiency of the first heat exchange segment 11.

The number of the first bending portion 112 can be one, two, three or more. The first bending portion 112 can allow the first heat exchange segment 11 to be disposed in a winding mode, thereby increasing the heat exchange area of the first heat exchange flow channel 10 and improving the heat exchange efficiency of the first heat exchange flow channel 10.

In the above embodiment, by disposing the first bending portion 112, the fluid flow direction in the first heat exchange segment 11 can be changed, achieving a smooth transition connection between the two first heat exchange portions 111 and realizing the winding extension of the first heat exchange flow channel 10, which thus can increase the contact area between a single battery cell and the first heat exchange flow channel 10, thereby increasing the heat exchange area and improving the heat exchange efficiency of the first heat exchange flow channel 10. Meanwhile, the first bending portion 112 is in an arc shape, which can also reduce the flow resistance of the fluid and reduce the pressure drop, thereby increasing the flow rate of the fluid and further improving the heat exchange efficiency of the first heat exchange segment 11. In addition, the first bending portion 112 is disposed, which makes the structure of the first heat exchange segment 11 more compact so as to occupy a smaller overall space, thereby facilitating the miniaturization design of the battery 400 and ensuring the volumetric energy density of the battery 400.

According to some embodiments of the present application, as shown in FIG. 3, the first bending portion 112 can be in a shape of a semi-circle arc.

The first bending portion 112 can extend along a semi-circle arc. Specifically, the first bending portion 112 can extend along the semi-circle arc that protrudes away from the direction of the two first heat exchange portions 111 connected by the first bending portion 112. The angle between an inlet and an outlet of the first bending portion 112 is 180°, and the flow directions at the outlet and the inlet of the first bending portion 112 are opposite, which makes the two adjacent first heat exchange portions 111 closer, so that the structure of the entire first heat exchange segment 11 is more compact and reliable. The first bending portion 112 is configured to connect two first heat exchange portions 111 that are disposed parallel to each other and spaced apart from each other. In other embodiments, the bending degree of the first bending portion 112 can be adjusted as needed, for example, it can be 150°, 135°, etc., which is not limited in the embodiments of the present application.

Two first heat exchange portions 111 can be connected by the first bending portion 112 to form a "U"-shaped heat exchange channel. The first heat exchange segment 11 can include one or more "U"-shaped heat exchange channels. The plurality of "U"-shaped heat exchange channels are sequentially connected, and the connected "U"-shaped heat exchange channels are connected by the first bending portion 112.

In the above embodiment, by disposing the first bending portion 112 to be in the semi-circle arc shape, the design diversity of the heat exchange flow channel can be increased, thereby improving the compatibility between the heat exchange member 100 and the battery 400; and meanwhile, the structure in the semi-circle arc shape is relatively simple, thereby reducing the production difficulty of the heat exchange member 100 and increasing the production speed of the heat exchange member 100.

According to some embodiments of the present application, as shown in FIG. 3, the second heat exchange segment 12 may include a second heat exchange portion 121, a third heat exchange portion 122, and a fourth heat exchange portion 125, the second heat exchange portion 121 extends along a first side periphery of the first heat exchange segment 11, the third heat exchange portion 122 is connected between the second heat exchange portion 121 and the first heat exchange segment 11 and extends along a second side periphery of the first heat exchange segment 11, a first end of the third heat exchange portion 121 is connected to the second heat exchange portion 122 at an angle, and a second end of the third heat exchange portion 122 is connected to the first heat exchange segment 11 at an angle; and the fourth heat exchange portion 125 is in communication with the second heat exchange portion 121, is connected to the second heat exchange portion 121 at an angle, and extends along a third side periphery of the first heat exchange segment 11.

The fourth heat exchange portion 125 is connected to the end of the second heat exchange portion 121 away from the third heat exchange portion 122. The fourth heat exchange portion 125, the second heat exchange portion 121, and the third heat exchange portion 122 are sequentially connected to form the U-shaped region 120. The first heat exchange segment 11 is arranged in the U-shaped region 120 and is connected to the end of the third heat exchange portion 122 away from the second heat exchange portion 121.

The first end of the third heat exchange portion 122 is connected to the second heat exchange portion 121 at an angle, that is, the third heat exchange portion 122 is connected to the second heat exchange portion 121, and the third heat exchange portion 122 and the second heat exchange portion 121 are not collinear or parallel, but are arranged at an angle greater than 0° and less than 180°. For example, the third heat exchange portion 122 is connected to the second heat exchange portion 121 and the angle therebetween is 30°, 45°, 60°, 90°, 120°, 135°, 150°, etc.

The second end of the third heat exchange portion 122 is connected to the first heat exchange segment 11 at an angle, that is, the second end of the third heat exchange portion 122 is connected to the second heat exchange portion 121, and the second end of the third heat exchange portion 122 and the first heat exchange segment 11 are arranged at an angle greater than 0° and less than 180°. For example, the second end of the third heat exchange portion 122 is connected to the first heat exchange segment 11 and the angle therebetween is 30°, 45°, 60°, 90°, 120°, 135°, 150°, etc.

The fourth heat exchange portion 125 is in communication with the second heat exchange portion 121 and is connected to the second heat exchange portion 121 at an angle, that is, the fourth heat exchange portion 125 and the second heat exchange portion 121 are connected and arranged at an angle greater than 0° and less than 180°. For example, the fourth heat exchange portion 125 is connected to the second heat exchange portion 121 and the angle therebetween is 30°, 45°, 60°, 90°, 120°, 135°, 150°, etc.

This embodiment defines the second heat exchange segment 12 as being arranged on three sides of the first heat exchange segment 11 in the circumferential direction, and does not define the specific positions of the second heat exchange portion 121, the third heat exchange portion 122, and the fourth heat exchange portion 125 relative to the first heat exchange segment 11. Therefore, the specific positions of the second heat exchange portion 121, the third heat exchange portion 122, and the fourth heat exchange portion 125 can be designed according to actual conditions. For example, if the second heat exchange portion 121 can be arranged on one side of the first heat exchange segment 11 in the first direction, then the third heat exchange portion 122 and the fourth heat exchange portion 125 can be arranged on both sides of the first heat exchange segment 11 in the second direction, respectively; if the second heat exchange portion 121 is arranged on one side of the first heat exchange segment 11 in the second direction, then the third heat exchange portion 122 and the fourth heat exchange portion 125 can be arranged on both sides of the first heat exchange segment 11 in the first direction, respectively.

In the above embodiment, by arranging the second heat exchange portion 121, the third heat exchange portion 122, and the fourth heat exchange portion 125 on three sides of the first heat exchange segment 11, respectively, the second heat exchange segment 12 can surround the first heat exchange segment 11, thereby increasing the compactness of the arrangement of the first heat exchange flow channel 10, and realizing the miniaturization of the structure of the first heat exchange flow channel 10, which is beneficial to ensuring the volumetric energy density of the battery 400. Meanwhile, it can also simplify the structure of the first heat exchange flow channel 10 and facilitate the processing and production of the heat exchange member 100.

According to some embodiments of the present application, as shown in FIG. 3, the first heat exchange segment 11 may include a plurality of first heat exchange portions 111, the plurality of first heat exchange portions 111 are sequentially bent to be connected in the first direction; the second heat exchange portion 121 is located on one side of the plurality of first heat exchange portions 111 in the first direction, the third heat exchange portion 122 is located on one side of the plurality of first heat exchange portions 111 in the second direction, and the first direction and the second direction are arranged at an angle; the first end of the third heat exchange portion 122 is connected to an end of the second heat exchange portion 121 in the second direction, and the second end of the third heat exchange portion 122 is connected to the first heat exchange portion, furthest from the second heat exchange portion 121 in the first direction, in the plurality of first heat exchange portions 111, the fourth heat exchange portion 125 is located on the other side of the plurality of first heat exchange portions 111 in the second direction, one end of the fourth heat exchange portion 125 is connected to the end of the second heat exchange portion 121 away from the third heat exchange portion 122, and the other end of the fourth heat exchange portion 125 extends, in the first direction, in a direction away from the second heat exchange portion 121.

The plurality of first heat exchange portions 111 are sequentially bent to be connected in the first direction. That is, the plurality of first heat exchange portions 111 are sequentially arranged in the first direction, and in the first direction, two adjacent and connected first heat exchange portions 111 are bent to be connected. The first heat exchange portion 111 may extend along a straight line parallel to the second direction, or the first heat exchange portion 111 may extend along a straight line arranged at an angle to the second direction, or the first heat exchange portion 111 may extend along a curve and/or a broken line in the second direction.

The fourth heat exchange portion 125, the second heat exchange portion 121, the third heat exchange portion 122, and the first heat exchange portion 111 furthest from the second heat exchange portion 121 are sequentially connected, and the plurality of first heat exchange portions 111 are spaced apart from each other in the first direction and sequentially connected. In this way, the heat exchange fluid can flow sequentially through the fourth heat exchange portion 125, the second heat exchange portion 121, and the third heat exchange portion 122, and then enters the first heat exchange segment 11. In the first heat exchange segment 11, the fluid first passes through the first heat exchange portion 111 furthest from the second heat exchange portion 121, and finally flows to the first heat exchange portion 111 closest to the second heat exchange portion 121. Alternatively, the heat exchange fluid can first flow into the first heat exchange segment 11, and in the first heat exchange segment 11, the fluid first flows through the first heat exchange portion 111 closest to the second heat exchange portion 121, flows out from the first heat exchange portion 111 furthest from the second heat exchange portion 121, then flows to the third heat exchange portion 122, and then flows sequentially through the second heat exchange portion 121 and the fourth heat exchange portion 125 through the third heat exchange portion 122.

The expression "the first direction and the second direction are arranged at an angle" is intended to indicate that the first direction and the second direction can be arranged perpendicularly or can only intersect without being perpendicular. For example, the first direction and the second direction can be arranged at an angle of 30°, 60°, 80°, 120°, 150° or 170°.

For example, as shown in FIG. 3, the first direction can be the length direction of the battery cell 2011, i.e., the Y1 direction shown in FIG. 4, and the second direction is the thickness direction of the battery cell 2011, i.e., the X1 direction shown in FIG. 3. Taking the first heat exchange flow channel 10 arranged away from the origin of coordinates in the Y1 direction in FIG. 3 as an example, the first heat exchange portion 111 extends along a straight line in the X1 direction, and the plurality of first heat exchange portions 111 are spaced apart from each other in the Y1 direction. The second heat exchange portion 121 is arranged on the side of the plurality of first heat exchange portions 111 away from the origin of coordinates in the Y1 direction, extends along a straight line in the X1 direction, and is configured to exchange heat with the side edge of the battery assembly 200 away from the origin of coordinates in the Y1 direction. The third heat exchange portion 122 is arranged on the side of the plurality of first heat exchange portions 111 close to the origin of coordinates in the X1 direction and extends along a straight line in the Y1 direction. The third heat exchange portion 122 is configured to exchange heat with the side edge of the battery assembly 200 close to the origin of coordinates in the X1 direction. The fourth heat exchange portion 125 is arranged on the side of the plurality of first heat exchange portions 111 away from the origin of coordinates in the X1 direction and extends along a straight line in the Y1 direction. The fourth heat exchange portion 125 can be configured to exchange heat with the side edge of the battery assembly 200 away from the origin of coordinates in the X1 direction.

In the above embodiment, by disposing the plurality of first heat exchange portions 111 to be sequentially bent to be connected in the first direction, the second heat exchange portion 121 to be located on one side of the plurality of first heat exchange portions 111 in the first direction, the third heat exchange portion 122 to be located on one side of the plurality of first heat exchange portions 111 in the second direction, and the fourth heat exchange portion 125 to be located on the other side of the plurality of first heat exchange portions 111 in the second direction, the positional relationship of the second heat exchange portion 121, the third heat exchange portion 122, the fourth heat exchange portion 125, and the first heat exchange portion 111 is defined, and the layout of the first heat exchange flow channel 10 is further defined, thereby simplifying the structure of the first heat exchange flow channel 10, and facilitating processing and manufacturing.

According to some embodiments of the present application, as shown in FIG. 3, the third heat exchange portion 122 and the fourth heat exchange portion 125 extend in the first direction (e.g., the Y1 direction shown in FIG. 3), and both the first heat exchange portion 111 and the second heat exchange portion 121 extend in the second direction.

Both the third heat exchange portion 122 and the fourth heat exchange portion 125 extend linearly in the first direction, and both the first heat exchange portion 111 and the second heat exchange portion 121 extend linearly in the second direction. The linear structure is simple, thereby making production convenient and facilitating arrangement, which can further reduce the production complexity and the production costs of the first heat exchange flow channel 10.

In the above embodiment, by disposing the third heat exchange portion 122 and the fourth heat exchange portion 125 to extend in the first direction, and both the first heat exchange portion 111 and the second heat exchange portion 121 to extend in the second direction, it facilitates arranging the first heat exchange flow channel 10 in the winding mode, thereby reducing the production difficulty of the first heat exchange flow channel 10 and reducing the production costs of the heat exchange member 100.

According to some embodiments of the present application, as shown in FIG. 3, both the third heat exchange portion 122 and the fourth heat exchange portion 125 extend in the first direction, and in the first direction, a length b1 of the fourth heat exchange portion 125 is less than or equal to a length a1 of the third heat exchange portion 122.

When the length b1 of the fourth heat exchange portion 125 is equal to the length a1 of the third heat exchange portion 122, the fourth heat exchange portion 125, the second heat exchange portion 121, and the third heat exchange portion 122 are sequentially connected to form the standard U-shaped flow channel. When the length b1 of the fourth heat exchange portion 125 is less than the length a1 of the third heat exchange portion 122, it facilitates avoiding other flow channel segments of the first heat exchange flow channel 10 (for example, avoiding the first input and output segment 15 shown in FIG. 3), avoiding other heat exchange flow channels or avoiding other parts, which thus is beneficial for the layout of the first heat exchange flow channel 10, achieving a compact structure.

In the above embodiment, by setting the length of the fourth heat exchange portion 125 to be equal to the length of the third heat exchange portion 122, the dimensions of the two ends of the U-shaped region 120 can be made close, which is beneficial to controlling the temperature difference of the battery cells 2011 at both ends of the battery assembly 200 in the second direction and improving the temperature uniformity of the battery assembly 200. By setting the length of the fourth heat exchange portion 125 to be less than the length of the third heat exchange portion 122 in the first direction, it is convenient for the fourth heat exchange portion 125 to be connected to the current collector, and the fourth heat exchange portion 125 can also avoid other flow channel segments, other flow channel structures or other parts of the first heat exchange flow channel 10.

According to some embodiments of the present application, as shown in FIG. 3, the fourth heat exchange portion 125 extends in the first direction and extends to a position close to the first heat exchange portion, furthest from the second heat exchange portion 121, in the plurality of first heat exchange portions 111.

The fourth heat exchange portion 125 extends in the first direction. One end of the fourth heat exchange portion 125 is connected to the second heat exchange portion 121, and the other end of the fourth heat exchange portion 125 extends to a position close to the first heat exchange portion, furthest from the second heat exchange portion 121, in the plurality of first heat exchange portions 111. That is, the other end of the fourth heat exchange portion 125 extends to be flush with the first heat exchange portion 111 furthest from the second heat exchange portion 121, or the other end of the fourth heat exchange portion 125 extends to be close to the first heat exchange portion 111 furthest from the second heat exchange portion 121, or the other end of the fourth heat exchange portion 125 extends beyond the first heat exchange portion 111 furthest from the second heat exchange portion 121.

This can increase the length of the fourth heat exchange portion 125, increase the heat exchange area between the fourth heat exchange portion 125 and the battery assembly 200, further improves the heat exchange effect of the heat exchange member 100, and also benefits the layout of the first heat exchange flow channel 10.

In the above embodiment, by disposing the fourth heat exchange portion 125 to extend in the first direction to a position close to the first heat exchange portion, furthest from the second heat exchange portion 121, in the plurality of first heat exchange portions 111, the heat exchange area of the fourth heat exchange portion 125 can be increased, so that the first heat exchange flow channel 10 can exchange heat with the plurality of battery cells 2011 arranged corresponding to the first heat exchange flow channel 10 as much as possible, thereby improving the heat exchange comprehensiveness of the first heat exchange flow channel 10 and further improving the heat exchange effect of the battery 400.

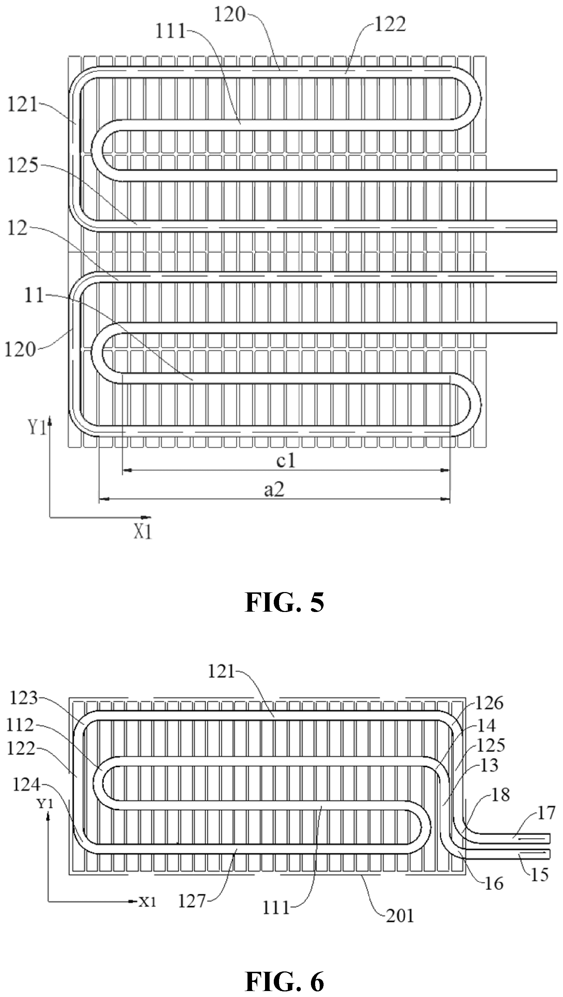

According to some embodiments of the present application, as shown in FIG. 5, the first heat exchange segment 11 may include a plurality of first heat exchange portions 111, and the plurality of first heat exchange portions 111 are sequentially bent to be connected in the first direction; the second heat exchange portion 121 is located on one side of the plurality of first heat exchange portions 111 in the second direction, and the third heat exchange portion 122 is located on one side of the plurality of first heat exchange portions 111 in the first direction, and the first direction and the second direction are arranged at an angle; the first end of the third heat exchange portion 122 is connected to one end of the second heat exchange portion 121 in the first direction, the second end of the third heat exchange portion 122 is connected to the first heat exchange portion, closest to the third heat exchange portion 122 in the first direction, in the plurality of first heat exchange portions 111, the fourth heat exchange portion 125 is located on the other side of the plurality of first heat exchange portions 111 in the first direction, one end of the fourth heat exchange portion 125 is connected to an end of the second heat exchange portion 121 away from the third heat exchange portion 122, and the other end of the fourth heat exchange portion 125 extends, in the second direction, in a direction away from the second heat exchange portion 121.

The plurality of first heat exchange portions 111 are sequentially bent to be connected in the first direction. That is, the plurality of first heat exchange portions 111 are sequentially arranged in the first direction, and in the first direction, two adjacent and connected first heat exchange portions 111 are bent to be connected. The first heat exchange portion 111 may extend along a straight line parallel to the second direction, or the first heat exchange portion 111 may extend along a straight line arranged at an angle to the second direction, or the first heat exchange portion 111 may extend along a curve and/or a broken line in the second direction.

The fourth heat exchange portion 125, the second heat exchange portion 121, the third heat exchange portion 122, and the first heat exchange portion 111 closest to the third exchange portion 122 are sequentially connected, and the plurality of first heat exchange portions 111 are spaced apart from each other in the first direction and sequentially connected. In this way, the heat exchange fluid can flow sequentially through the fourth heat exchange portion 125, the second heat exchange portion 121, and the third heat exchange portion 122, and then enter the first heat exchange segment 11. In the first heat exchange segment 11, the fluid first passes through the first heat exchange portion 111 closest to the third heat exchange portion 122, and finally flows to the first heat exchange portion 111 furthest from the third heat exchange portion 122. Alternatively, the heat exchange fluid can first flow into the first heat exchange segment 11, and in the first heat exchange segment 11, the fluid first flows through the first heat exchange portion 111 furthest from the third heat exchange portion 122, flows out from the first heat exchange portion 111 closest to the third heat exchange portion 122, then flows to the third heat exchange portion 122, and then flows sequentially through the second heat exchange portion 121 and the fourth heat exchange portion 125 through the third heat exchange portion 122.

For example, as shown in FIG. 5, the first direction can be the length direction of the battery cell 2011, i.e., the Y1 direction shown in FIG. 5, and the second direction is the thickness direction of the battery cell 2011, i.e., the X1 direction shown in FIG. 5. Taking the first heat exchange flow channel 10 arranged away from the origin of coordinates in the Y1 direction in the figure as an example, the first heat exchange portion 111 extends along a straight line in the X1 direction, and the plurality of first heat exchange portions 111 are spaced apart from each other in the Y1 direction. The second heat exchange portion 121 is arranged on the side of the plurality of first heat exchange portions 111 close to the origin of the coordinates in the X1 direction, extends along a straight line in the Y1 direction, and is configured to exchange heat with the side edge of the battery assembly 200 close to the origin of coordinates in the X1 direction. The third heat exchange portion 122 is arranged on the side of the plurality of first heat exchange portions 111 away from the origin of coordinates in the Y1 direction and extends along a straight line in the X1 direction. The third heat exchange portion 122 is configured to exchange heat with the side edge of the battery assembly 200 away from the origin of coordinates in the Y1 direction. The fourth heat exchange portion 125 is arranged on the side of the plurality of first heat exchange portions 111 close to the origin of coordinates in the Y1 direction, extends along a straight line in the X1 direction, and can be configured to exchange heat with the side edge of the battery assembly 200 close to the origin of coordinates in the Y1 direction.

In the above embodiment, by disposing the plurality of second heat exchange portions 121 to be located on one side of the plurality of first heat exchange portions 111 in the second direction, the third heat exchange portion 122 to be located on one side of the plurality of first heat exchange portions 111 in the first direction, and the fourth heat exchange portion 125 to be located on the other side of the plurality of first heat exchange portions 111 in the first direction, the layout of the other first heat exchange flow channel 10 is defined, so that the diversity of the first heat exchange flow channel 10 can be increased and the heat exchange requirements of different batteries 400 can be met, thereby simplifying the structure of the first heat exchange flow channel 10, and facilitating processing and manufacturing.

According to some embodiments of the present application, as shown in FIG. 5, the first heat exchange portion 111, the third heat exchange portion 122, and the fourth heat exchange portion 125 extend in the second direction (e.g., the X1 direction shown in FIG. 5), and the second heat exchange portion 121 extends in the first direction (e.g., the Y1 direction shown in FIG. 5).

The first heat exchange portion 111, the third heat exchange portion 122, and the fourth heat exchange portion 125 extend linearly in the second direction, and the second heat exchange portion 121 extends linearly in the first direction. The linear structure is simple, thereby making production convenient and facilitating arrangement, which can further reduce the production complexity and the production costs of the first heat exchange flow channel 10.

In the above embodiment, by disposing the first heat exchange portion 111, the third heat exchange portion 122, and the fourth heat exchange portion 125 to extend in the second direction, and the second heat exchange portion 121 to extend in the first direction, it facilitates arranging the first heat exchange flow channel 10 in the winding mode, thereby reducing the production difficulty of the first heat exchange flow channel 10 and reducing the production costs of the heat exchange member 100. Meanwhile, such arrangement further makes the structure of the first heat exchange flow channel 10 more compact and reliable.

According to some embodiments of the present application, as shown in FIG. 5, the first heat exchange portion 111 and the third heat exchange portion 122 extend in the second direction, the second heat exchange portion 121 extends in the first direction, and in the second direction, a length a2 of the third heat exchange portion 122 is greater than or equal to a length c1 of the first heat exchange portion 111.

In the above embodiment, by setting the length a2 of the third heat exchange portion 122 to be greater than the length c1 of the first heat exchange portion 111 in the second direction, the first heat exchange segment 11 can be wrapped in the U-shaped region 120 of the second heat exchange segment 12, increasing the length of the third heat exchange portion 122 and increasing the heat exchange area of the third heat exchange portion 122, so that the second heat exchange segment 12 can define, in an enclosing mode, a larger U-shaped region 120, thereby improving the heat exchange effect of the heat exchange member 100. By setting the length a2 of the third heat exchange portion 122 to be equal to the length c1 of the first heat exchange portion 111, the length dimensions of the third heat exchange portion 122 of the first heat exchange flow channel 10 extending in the second direction and the plurality of first heat exchange portions 121 are close, which is beneficial to controlling the temperature difference of the battery assembly 200 in the first direction, thereby improving the temperature uniformity of the battery assembly 200.

According to some embodiments of the present application, as shown in FIG. 3, the second heat exchange segment 12 may further include a second bending portion 123 and a third bending portion 124, both the second bending portion 123 and the third bending portion 124 are in an arc shape, the second bending portion 123 is connected between the first end of the third heat exchange portion 122 and the second heat exchange portion 121, and the third bending portion 124 is connected between the second end of the third heat exchange portion 122 and the first heat exchange portion 111.

The second bending portion 123 and the third bending portion 124 are configured to connect the second heat exchange portion 121 with the third heat exchange portion 122 and the third heat exchange portion 122 with the first heat exchange portion 111, respectively. The second bending portion 123 is in an arc shape, that is, the second bending portion 123 extends along an arc, and the fluid flow directions at both ends of the second bending portion 123 have a certain angle. The third bending portion 124 is in an arc shape, that is, the third bending portion 124 extends along an arc, and the fluid flow directions at both ends of the third bending portion 124 have a certain angle.

The second bending portion 123 and the third bending portion 124 can change the flow direction of the heat exchange fluid, so that the second heat exchange segment 12 extends within a preset region and is configured to exchange heat with the battery assembly 200. Meanwhile, the second bending portion 123 and the third bending portion 124 in the arc shape can reduce the flow resistance of the fluid and reduce the pressure drop, thereby increasing the flow rate of the heat exchange fluid and further improving the heat exchange efficiency of the first heat exchange flow channel 10.

In the above embodiment, by disposing the second bending portion 123 and the third bending portion 124, the flow direction of the fluid within the first heat exchange flow channel 10 can be changed, thereby achieving a smooth transition connection between the third heat exchange portion 122 and the second heat exchange portion 121, as well as a smooth transition connection between the third heat exchange portion 122 and the first heat exchange portion 111. Thus, the second bending portion 123 and third bending portion 124 can reduce the flow resistance of the fluid flowing within the second heat exchange segment 12, thereby reducing the pressure drop, increasing the flow velocity of the heat exchange fluid, and further enhancing the heat exchange efficiency of the first heat exchange flow channel 10.

According to some embodiments of the present application, as shown in FIG. 3, the second bending portion 123 can be in a shape of a quarter-circle arc.

The second bending portion 123 may extend along a semi-circle arc. Specifically, the first bending portion 112 may extend along a quarter-circle arc that protrudes away from the first connecting segment. The angle between an inlet and an outlet of the second bending portion 123 can be 90°. The second bending portion 123 is similar to a 90° elbow in a pipe material, which can change the direction of the flow channel, so that the flow direction of the fluid changes by 90° after the fluid passes through the second bending portion 123. For example, the flow direction of the liquid can be changed from the Y1 direction to the X1 direction, or from the X1 direction to the Y1 direction.

The second bending portion 123 connects the second heat exchange portion 121 and the third heat exchange portion 122. In this case, the second heat exchange portion 121 and the third heat exchange portion 122 are arranged perpendicularly to each other.

In the above embodiment, by setting the second bending portion 123 to be in the shape of a quarter-circle arc, the flow direction of the fluid can be changed from the original flow direction to a direction perpendicular to the original flow direction after the fluid passes through the second bending portion 123. Meanwhile, the arc shape can also reduce the flow resistance of the fluid, which allows the fluid to flow smoothly in the second bending portion 123, thereby effectively preventing the decline of the heat exchange efficiency caused by slow flow of the fluid.

According to some embodiments of the present application, as shown in FIG. 3, the third bending portion 124 is in a shape of a quarter-circle arc.

The third bending portion 124 can extend along a semi-circle arc. Specifically, the third bending portion 124 can extend along the quarter-circle arc that protrudes away from the first connecting segment. The angle between an inlet and an outlet of the third bending portion 124 is 90°. The third bending portion 124 is similar to a 90° elbow in a pipe material, which can change the direction of the flow channel, so that the flow direction of the fluid changes by 90° after the fluid passes through the third bending portion 124. For example, the flow direction of the liquid can be changed from the Y1 direction to the X1 direction, or from the X1 direction to the Y1 direction.

The third bending portion 124 connects the third heat exchange portion 122 and the first heat exchange portion 111. In this case, the third heat exchange portion 122 and the first heat exchange portion 111 are arranged perpendicularly to each other.

In the above embodiment, by setting the third bending portion 124 to be in the shape of a quarter-circle arc, the flow direction of the fluid can be changed from the original flow direction to a direction perpendicular to the original flow direction after the fluid passes through the third bending portion 124. Meanwhile, the third bending portion 124 in the arc shape can also reduce the flow resistance of the fluid, which allows the fluid to flow smoothly in the third bending portion 124, thereby effectively preventing the decline of the heat exchange efficiency caused by slow flow of the fluid.

According to some embodiments of the present application, as shown in FIG. 6, the second heat exchange segment 12 may further include a fifth heat exchange portion 127, the fifth heat exchange portion 127 extends along a fourth side periphery of the first heat exchange segment 11 and closes at least part of an opening of the U-shaped region 120 formed by the second heat exchange portion 121, the third heat exchange portion 122, and the fourth heat exchange portion 125.

The fifth heat exchange portion 127 can close part of the opening of the U-shaped region 120 or completely close the opening of the U-shaped region 120. Thus, the second heat exchange segment 12 can basically cover the peripheral edge of the battery assembly 200 and exchange heat with the peripheral edge of the battery assembly 200. In this way, the second heat exchange segment 12 can exchange heat with all or most of the peripheral edge of the battery assembly 200. Therefore, the structure of the first heat exchange flow channel 10 can be disposed according to the actual arrangement mode or heat exchange requirements of the battery assembly 200, and the second heat exchange segment 12 provided with the fifth heat exchange portion 127 is disposed to optimize the heat exchange structure of the first heat exchange flow channel 10, thereby improving the heat exchange efficiency.

In the above embodiment, by disposing the fifth heat exchange portion 127, the second heat exchange segment 12 can perform heat exchange on four peripheral edges of the battery assembly 200, so that the second heat exchange segment 12 of one first heat exchange flow channel 10 can be used to perform heat exchange on the four peripheral edges of the battery assembly 200. Thus, the heat exchange effect of the four peripheral edges of the battery assembly 200 can be enhanced, thereby improving the temperature uniformity of the battery assembly 200.

According to some embodiments of the present application, as shown in FIG. 6, the fifth heat exchange portion 127 is arranged opposite to the second heat exchange portion 121, and the fifth heat exchange portion 127 is connected between the second end of the third heat exchange portion 122 and the first heat exchange segment 11, connected to the third heat exchange portion 122 at an angle, and connected to the first heat exchange segment 11 at an angle.

In the above embodiment, the second heat exchange portion 121 is arranged on one side of the first heat exchange segment 11 in the first direction (e.g., the side of the plurality of first heat exchange portions 111 in FIG. 6 away from the origin of coordinates in the Y1 direction), the fifth heat exchange portion 127 is arranged opposite to the second heat exchange portion 121, that is, the fifth heat exchange portion 127 is arranged on the other side of the first heat exchange segment 11 in the first direction (e.g., the side of the plurality of first heat exchange portions 111 in FIG. 6 close to the origin of coordinates in the Y1 direction), the third heat exchange portion 122 is arranged on one side of the first heat exchange segment 11 in the second direction of the first heat exchange segment 11 (e.g., the side of the plurality of first heat exchange portions 111 in FIG. 6 close to the origin of coordinates in the X1 direction), and both ends of the third heat exchange portion 122 in the Y1 direction are respectively connected to the second heat exchange portion 121 and the fifth heat exchange portion 127.

The fifth heat exchange portion 127 is connected to the third heat exchange portion 122 at an angle, for example, the fifth heat exchange portion 127 and the third heat exchange portion 122 are connected and arranged at an angle greater than 0° and less than or equal to 180°. For example, the angle between the fifth heat exchange portion 127 and the third heat exchange portion 122 is 30°, 45°, 60°, 90°, 120°, 135°, 150°, etc. The fifth heat exchange portion 127 is connected to the first heat exchange segment 11 at an angle, for example, the fifth heat exchange portion 127 and the first heat exchange segment 11 are connected and arranged at an angle greater than 0° and less than or equal to 180°. For example, the angle between the fifth heat exchange portion 127 and the third heat exchange portion 122 is 30°, 45°, 60°, 90°, 120°, 135°, 150°, etc.

The fifth heat exchange portion 127 and the third heat exchange portion 122 can be connected by an arc segment, for example, the fifth heat exchange portion 127 and the third heat exchange portion 122 can be connected by a quarter-circle arc.

The fifth heat exchange portion 127 and the first heat exchange segment 11 can be connected by an arc segment, for example, the fifth heat exchange portion 127 and the first heat exchange segment 11 can be connected by a semi-circle arc.

In the above embodiment, by disposing the fifth heat exchange portion 127 opposite to the second heat exchange portion 121 and connecting the fifth heat exchange portion 127 between the third heat exchange portion 122 and the first heat exchange segment 11, the structure of the first heat exchange flow channel 10 can be further optimized according to the heat exchange requirements of the battery assembly 200.

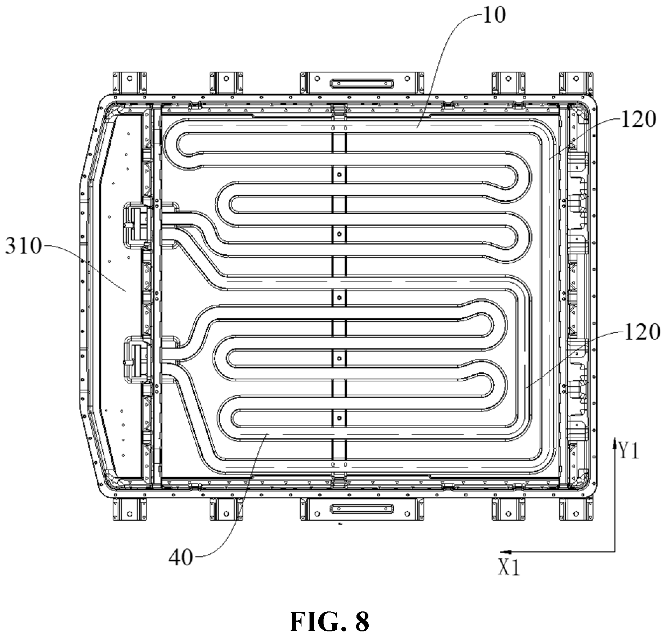

In some other embodiments, as shown in FIG. 8, the fifth heat exchange portion 127 is arranged opposite to the second heat exchange portion 121, one end of the fifth heat exchange portion 127 is connected to the end of the fourth heat exchange portion 125 away from the second heat exchange portion 121, and the fifth heat exchange portion 127 and the fourth heat exchange portion 125 are connected at an angle.

The fifth heat exchange portion 127 and the fourth heat exchange portion 125 are connected at an angle, for example, the fifth heat exchange portion 127 and the fourth heat exchange portion 125 are connected and arranged at an angle greater than 0° and less than or equal to 180°. For example, the angle between the fifth heat exchange portion 127 and the third heat exchange portion 122 is 30°, 45°, 60°, 90°, 120°, 135°, 150°, etc.

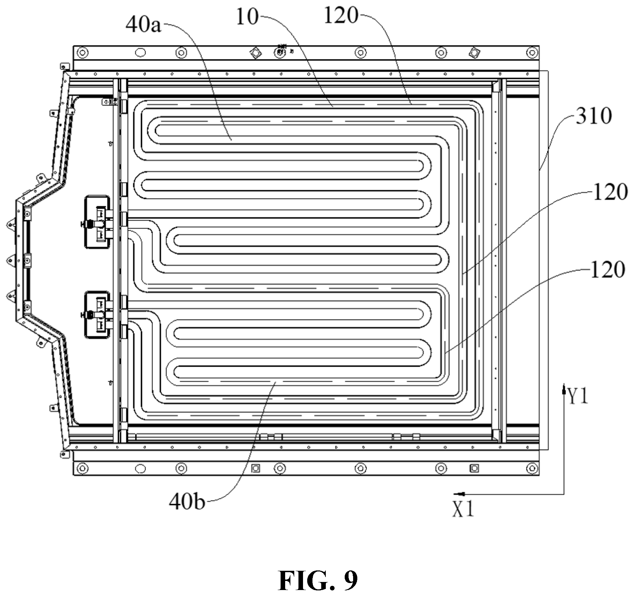

Referring to FIG. 9, the second heat exchange portion 121 and the fifth heat exchange portion 127 are respectively arranged on both sides of the first heat exchange segment 11 in the X1 direction, the third heat exchange portion 122 and the fourth heat exchange portion 125 are respectively arranged on both sides of the first heat exchange segment 11 in the Y1 direction, the fifth heat exchange portion 127 extends in the Y1 direction, the end of the fifth heat exchange portion 127 close to the origin of coordinates in the Y1 direction is connected to the fourth heat exchange portion 125, and the end of the fifth heat exchange segment away from the origin of coordinates in the Y1 direction extends toward the third heat exchange segment 13.

The fifth heat exchange portion 127 and the fourth heat exchange portion 125 can be connected by an arc, for example, the fifth heat exchange portion 127 and the fourth heat exchange portion 125 can be connected by a quarter-circle arc.

In the above embodiment, by disposing the fifth heat exchange portion 127 opposite to the second heat exchange portion 121 and connecting the fifth heat exchange portion 127 to the fourth heat exchange portion 125, the structure of the first heat exchange flow channel 10 can be further optimized according to the heat exchange requirements of the battery assembly 200.

In the above embodiments, by disposing the fifth heat exchange portion 127 opposite to the second heat exchange portion 121, and connecting the fifth heat exchange portion 127 between the second end of the third heat exchange portion 122 and the first heat exchange segment 11, or connecting one end of the fifth heat exchange portion 127 to the end of the fourth heat exchange portion 125 away from the second heat exchange portion 121, various arrangements of the heat exchange flow channel can be achieved, thereby meeting the heat exchange requirements of various batteries 400.

According to some embodiments of the present application, as shown in FIG. 3 to FIG. 7, the first heat exchange flow channel 10 may further include a third heat exchange segment 13, the first heat exchange segment 11 is connected between the third heat exchange segment 13 and the second heat exchange segment 12, and the third heat exchange segment 13 and the first heat exchange segment 11 are connected at an angle.

In the first heat exchange flow channel 10, the second heat exchange segment 12, the first heat exchange segment 11, and the third heat exchange segment 13 are sequentially connected. The heat exchange fluid can flow from the second heat exchange segment 12 through the first heat exchange segment 11 to the third heat exchange segment 13, or can flow from the third heat exchange segment 13 through the first heat exchange segment 11 to the second heat exchange segment 12.

The third heat exchange segment 13 and the first heat exchange segment 11 are connected and arranged at an angle greater than 0° and less than or equal to 180°. For example, the angle between the third heat exchange segment 13 and the first heat exchange segment 11 is 30°, 45°, 60°, 90°, 120°, 135°, 150°, etc.

In the above embodiment, by disposing the third heat exchange segment 13, the heat exchange area of the first heat exchange flow channel 10 can further be increased, thereby improving the heat exchange effect of the first heat exchange flow channel 10.

According to some embodiments of the present application, as shown in FIG. 3 to FIG. 7, the first heat exchange segment 11 includes a plurality of first heat exchange portions 111, the plurality of first heat exchange portions 111 are sequentially connected in the first direction (e.g., the Y1 direction shown in FIG. 3); and the third heat exchange segment 13 is arranged on a side of the first heat exchange segment 11 away from the third heat exchange portion 122, and the third heat exchange segment 13 is connected to the first heat exchange portion, closest to the second heat exchange portion 121 in the first direction, in the plurality of first heat exchange portions 111.

The third heat exchange segment 13 is arranged adjacent to the fourth heat exchange portion 125 and arranged between the fourth heat exchange portion 125 and the first heat exchange portion 111. Thus, the third heat exchange segment 13 is also arranged on the outer side of the first heat exchange segment 11 in the circumferential direction. Therefore, the heat exchange area of the first heat exchange flow channel 10 in the circumferential direction can be increased, and the heat exchange efficiency of the first heat exchange flow channel 10 on the peripheral side is improved.

The third heat exchange segment 13 and the fourth heat exchange portion 125 may be arranged both internally and externally on the same side of the first heat exchange segment 11, which can further increase the heat exchange area at this position, thereby enhancing the heat exchange efficiency. In addition, since the third heat exchange segment 13 and the fourth heat exchange portion 125 are located at both ends of the first flow channel in the fluid flow direction, the third heat exchange segment 13 and the fourth heat exchange portion 125 can exchange heat with the same region of the battery assembly 200, thereby improving the temperature uniformity of the region.

The third heat exchange segment 13 is connected to the first heat exchange portion, closest to the second heat exchange portion 121 in the first direction, in the plurality of first heat exchange portions 111. The plurality of first heat exchange portions 111 are connected sequentially in the first direction. The third heat exchange portion 122 is connected to the first heat exchange portion, furthest from the second heat exchange portion 121 in the first direction, in the plurality of first heat exchange portions 111. In this way, during heat exchange with the battery assembly 200, in the first heat exchange flow channel 10, the temperature of the heat exchange fluid in the first heat exchange portion 111 closest to the second heat exchange portion 121 and the temperature of the heat exchange fluid in the third heat exchange segment 13, as well as the temperature of the heat exchange fluid in the second heat exchange portion 121 and the fourth heat exchange portion 125, are respectively the relatively highest and lowest temperatures in the first heat exchange flow channel 10, while the temperatures of the remaining parts are moderate.

Due to the heat dissipation effect of the battery 400, the edge temperature of the battery 400 is lower than the middle temperature thereof. Thus, the second heat exchange portion 121 and the first heat exchange portion 111 closest to the second heat exchange portion 121 exchange heat in the same region. The third heat exchange segment 13 and the fourth heat exchange portion 125 exchange heat in the same region. This can further improve the temperature uniformity within the battery assembly 200, balance the temperature difference of the battery assembly 200, and thus improve the temperature uniformity of the battery assembly 200.

In the above embodiment, by additionally disposing the third heat exchange segment 13 and disposing the third heat exchange segment 13 to be connected to the first heat exchange portion, closest to the second heat exchange portion 121 in the first direction, in the plurality of first heat exchange portions 111, the heat exchange area can be increased, and the temperature difference of the battery assembly 200 can be balanced, thereby improving the temperature uniformity of the battery assembly 200.

According to some embodiments of the present application, as shown in FIG. 3 to FIG. 7, the third heat exchange segment 13 extends, in the first direction, in a direction away from the second heat exchange portion 121, the first heat exchange portion 111 always extends in the second direction, and the first direction and the second direction are arranged at an angle.

One end of the third heat exchange portion 122 is connected to the first heat exchange portion, furthest from the second heat exchange portion 121 in the first direction, in the plurality of first heat exchange portions 111. The other end of the third heat exchange portion 122 extends toward the first heat exchange portion 111 furthest from the second heat exchange portion 121. Meanwhile, the fourth heat exchange portion 125 also extends toward the first heat exchange portion 111 furthest from the second heat exchange portion 121.

The third heat exchange segment 13 is arranged on the side of the first heat exchange segment 11 away from the third heat exchange portion 122, and in this case, the third heat exchange segment 13 and the fourth heat exchange portion 125 are arranged on the same outer side of the first heat exchange portion 111 in the circumferential direction. The third heat exchange segment 13 and the fourth heat exchange portion 125 are respectively located at both ends of the first flow channel in the fluid flow direction. When the third heat exchange segment 13 and the fourth heat exchange portion 125 jointly exchange heat with the same region of the battery assembly 200, the temperature difference at the edge position of the battery assembly 200 can be balanced, thereby improving the temperature uniformity at the edge position of the battery assembly 200.

In the above embodiment, by extending the third heat exchange segment 13, in the first direction, in a direction away from the second heat exchange portion 121, the heat exchange area of the first heat exchange flow channel 10 can be increased, thereby improving the heat exchange effect of the first heat exchange flow channel 10 on the battery cell 2011. Simultaneously, when the third heat exchange segment 13 and the fourth heat exchange portion 125 jointly exchange heat with the battery assembly 200, the temperature difference in a region at the edge position of the battery assembly 200 can be balanced, thereby improving the temperature uniformity at the edge position of the battery assembly 200.

According to some embodiments of the present application, as shown in FIG. 3 to FIG. 7, the third heat exchange segment 13 extends in the first direction to a position close to the first heat exchange portion, furthest from the second heat exchange portion 121, in the plurality of first heat exchange portions 111.

In the above embodiment, by disposing the third heat exchange segment 13 to extend in the first direction to a position close to the first heat exchange portion, furthest from the second heat exchange portion 121, in the plurality of first heat exchange portions 111, the length of the third heat exchange portion 122 can be increased, so that the heat exchange area of the third heat exchange portion 122 is increased, thereby improving the heat exchange effect of the first heat exchange flow channel 10.

According to some embodiments of the present application, as shown in FIG. 3 to FIG. 7, the first heat exchange flow channel 10 may further include a fourth bending portion 14, and the fourth bending portion 14 is in an arc shape and bent to be connected between the third heat exchange segment 13 and the first heat exchange portion 111.

The fourth bending portion 14 is in an arc shape, that is, the fourth bending portion 14 extends along an arc. The fluid flow directions at both ends of the fourth bending portion 14 have a certain angle. Thus, the fourth bending portion 14 can change the flow direction of the fluid, thereby allowing the third heat exchange segment 13 to extend in a preset direction. Meanwhile, the arc shape can reduce the flow resistance of the fluid and reduce the pressure drop, thereby increasing the flow rate of the fluid and further improving the heat exchange efficiency of the first heat exchange flow channel 10.

In the above embodiment, by disposing the fourth bending portion 14, the flow direction of the fluid between the third heat exchange segment 13 and the first heat exchange portion 111 can be changed. Meanwhile, the fourth bending portion 14 in the arc shape can reduce the flow resistance of the fluid and reduce the pressure drop, thereby increasing the flow rate of the fluid and further improving the heat exchange efficiency of the first heat exchange flow channel 10.

According to some embodiments of the present application, as shown in FIG. 3 to FIG. 7, the fourth bending portion 14 is in a shape of a quarter-circle arc.

The fourth bending portion 14 can extend along a semi-circle arc. Specifically, the fourth bending portion 14 can extend along the quarter-circle arc that protrudes to the connection position of the second heat exchange portion 121 and the fourth heat exchange portion 125. The angle between an inlet and an outlet of the fourth bending portion 14 is 90°. The fourth bending portion 14 is similar to a 90° elbow in a pipe material, which can change the direction of the flow channel, so that the flow direction of the fluid changes by 90° after the fluid passes through the fourth bending portion 14. For example, the flow direction of the liquid can be changed from the X1 direction to the Y1 direction, or from the Y1 direction to the X1 direction.

The fourth bending portion 14 connects the third heat exchange segment 13 and the first heat exchange portion 111. The third heat exchange segment 13 and the first heat exchange portion 111 can be arranged perpendicularly to each other. The first heat exchange portion 111 extends in the second direction. The third heat exchange segment 13 extends in the first direction. The first direction is perpendicular to the second direction.

In the above embodiment, by setting the fourth bending portion 14 to be in the shape of a quarter-circle arc, the flow direction of the fluid can be changed from the original flow direction to a direction perpendicular to the original flow direction after the fluid passes through the fourth bending portion 14; and meanwhile, the arc shape can also reduce the flow resistance of the fluid, which allows the fluid to flow smoothly in the fourth bending portion 14, thereby effectively preventing the decline of the heat exchange efficiency caused by slow flow of the fluid.

According to some embodiments of the present application, as shown in FIG. 3 to FIG. 7, the first heat exchange flow channel 10 may further include: a first input/output segment 15, one end of the first input/output segment 15 is connected to the third heat exchange segment 13 at an angle, and the other end of the first input/output segment 15 forms the first inlet/outlet of the first heat exchange flow channel 10.

The first inlet/outlet is configured to allow the heat exchange fluid to be input or output. When the first inlet/outlet is configured to allow the heat exchange fluid to be input, the first input/output segment 15 is configured to convey the heat exchange fluid into the third heat exchange segment 13. When the first inlet/outlet is configured to output the heat exchange fluid, the first input/output segment 15 is configured to guide the heat exchange fluid after heat exchange through the first inlet/outlet into the first heat exchange flow channel 10.

The first input/output segment 15 is connected to the third heat exchange segment 13 at an angle, for example, the first input/output segment 15 and the third heat exchange segment 13 are connected and arranged at an angle greater than 0° and less than or equal to 180°. For example, the angle between the first input/output segment 15 and the third heat exchange segment 13 is 30°, 45°, 60°, 90°, 120°, 135°, 150°, etc.

In the above embodiment, by disposing the first input/output segment 15, the external pipeline can be conveniently connected, so that the heat exchange medium can enter or be discharged from the first heat exchange flow channel 10. Meanwhile, the heat exchange fluid entering or being discharged from the first heat exchange flow channel 10 can be guided, so that the heat exchange fluid can enter or be discharged quickly, thereby improving the heat exchange rate.

According to some embodiments of the present application, as shown in FIG. 3 to FIG. 7, the first input/output segment 15 extends, in the second direction, in a direction away from the first heat exchange segment 11, and the third heat exchange segment 13 extends in the first direction.

A certain angle is formed between the first input/output segment 15 and the third heat exchange segment 13. As a result, a certain space may be formed on the side of the third heat exchange segment 13 facing the first input/output segment 15, which can facilitate the layout of other components within the battery 400.

In the above embodiment, by disposing the first input/output segment 15 to extend, in the second direction, in the direction away from the first heat exchange segment 11, the pipe layout of the first heat exchange flow channel 10 can be made more reasonable and connection with the external pipe is facilitated. Meanwhile, the first inlet/outlet can be made to be away from the battery assembly 200, which helps to reduce the occurrence of damage to the battery assembly 200 caused by water leakage from the first inlet/outlet.

According to some embodiments of the present application, as shown in FIG. 3 to FIG. 7, the first heat exchange flow channel 10 may further include a fifth bending portion 16, and the fifth bending portion 16 is in an arc shape and bent to be connected between the third heat exchange segment 13 and the first input/output segment 15.

The fifth bending portion 16 is in an arc shape, that is, the fifth bending portion 16 extends along an arc, and the fluid flow directions at both ends of the fifth bending portion 16 have a certain angle. This allows the third heat exchange segment 13 and the first input/output segment 15 to be in communication, enabling the heat exchange fluid to circulate smoothly from the third heat exchange segment 13 to the first input/output segment 15 or from the first input/output segment 15 to the third heat exchange segment 13, thus achieving liquid input or output of the first input/output segment 15. Meanwhile, the arc shape can also reduce the flow resistance of the fluid and reduce the pressure drop, thereby increasing the flow rate of the heat exchange fluid and further improving the heat exchange efficiency of the first heat exchange flow channel 10.

In the above embodiment, by disposing the fifth bending segment, the heat exchange fluid can smoothly circulate from the third heat exchange segment 13 to the first input/output segment 15 or from the first input/output segment 15 to the third heat exchange segment 13, thereby achieving liquid input or output from the first input/output segment 15. Meanwhile, the fifth bending portion 16 in the arc shape can reduce the flow resistance of the fluid and reduce the pressure drop, thereby increasing the flow rate of the heat exchange fluid and further improving the heat exchange efficiency of the first heat exchange flow channel 10.

According to some embodiments of the present application, as shown in FIG. 3 to FIG. 7, the fifth bending portion 16 is in the arc shape, and the central angle corresponding to the fifth bending portion 16 is greater than or equal to 90° and less than 180°.

The central angle corresponding to the fifth bending portion 16 can be 90°, 120°, 150° or 170°.

As shown in FIG. 3, the heat exchange member 100 includes two first heat exchange flow channels 10. The fifth bending portion 16 of the first heat exchange flow channel 10 located on the side away from the origin of coordinates in the Y1 direction is in the shape of a quarter-circle arc. The third heat exchange segment 13 is arranged perpendicular to the first input/output segment 15. Meanwhile, the first input/output segment 15 of the first heat exchange flow channel 10 located on the lower side includes a first extension segment and a second extension segment. The first extension segment is connected between the second extension segment and the third heat exchange segment 13. The first extension segment extends along a straight line inclined relative to the second direction, and the second extension segment extends along a straight line parallel to the second direction. The first extension segment and the third heat exchange segment 13 are connected by the fifth bending portion 16. The central angle corresponding to the arc of the fifth bending portion 16 is greater than 90° and less than 135°.

In the above embodiment, by disposing the fifth bending portion 16 to be in the arc shape, the flow resistance of the fluid can be further reduced, thereby allowing the fluid to flow smoothly within the fifth bending portion 16, and effectively preventing the decline of the heat exchange efficiency caused by slow flow of the fluid. Meanwhile, the central angle corresponding to the fifth bending portion 16 is greater than or equal to 90° and less than 180°, which can also form a certain space on the side of the third heat exchange segment 13 facing the first input/output segment 15, thereby facilitating the arrangement of other components within the battery 400 and improving the layout rationality of the battery 400.

According to some embodiments of the present application, as shown in FIG. 3 to FIG. 7, the second heat exchange segment 12 further includes a sixth bending portion 126, and the sixth bending portion 126 is connected between the fourth heat exchange portion 125 and the second heat exchange portion 121.

The sixth bending portion 126 is in an arc shape, that is, the sixth bending portion 126 extends along an arc. The fluid flow directions at both ends of the sixth bending portion 126 have a certain angle. Thus, the sixth bending portion 126 can change the flow direction of the heat exchange fluid, thereby allowing the second heat exchange portion 121 and the fourth heat exchange portion 125 to extend in a preset direction. Meanwhile, the sixth bending portion 126 in the arc shape can reduce the flow resistance of the fluid and reduce the pressure drop, thereby increasing the flow rate of the heat exchange fluid and further improving the heat exchange efficiency of the first heat exchange flow channel 10.

In the above embodiment, by disposing the sixth bending portion 126, the flow direction of the fluid in the first heat exchange flow channel 10 can be changed, thereby realizing the winding arrangement of the first heat exchange flow channel 10, which thus can increase the heat exchange area of the first heat exchange flow channel 10, thereby improving the heat exchange efficiency of the first heat exchange flow channel 10. Meanwhile, the sixth bending portion 126 is in an arc shape, which can also reduce the flow resistance of the fluid and reduce the pressure drop, thereby increasing the flow rate of the heat exchange fluid and further improving the heat exchange efficiency of the first heat exchange flow channel 10.

According to some embodiments of the present application, as shown in FIG. 3 to FIG. 7, the sixth bending portion 126 is in a shape of a quarter-circle arc.

The sixth bending portion 126 can extend along a semi-circle arc. Specifically, the sixth bending portion 126 can extend along the quarter-circle arc that protrudes away from the first heat exchange segment 11. The angle between an inlet and an outlet of the sixth bending portion 126 is 90°. The sixth bending portion 126 is similar to a 90° elbow in a pipe material, which can change the direction of the flow channel, so that the flow direction of the fluid changes by 90° after the fluid passes through the sixth bending portion 126. For example, the flow direction of the liquid can be changed from the X1 direction to the Y1 direction, or from the Y1 direction to the X1 direction.

The sixth bending portion 126 connects the second heat exchange portion 121 and the fourth heat exchange portion 125. In this case, the second heat exchange portion 121 and the fourth heat exchange portion 125 are arranged perpendicular to each other.

In the above embodiment, by setting the sixth bending portion 126 to be in the shape of a quarter-circle arc, the flow direction of the fluid can be changed from the original flow direction to a direction perpendicular to the original flow direction after the fluid passes through the sixth bending portion 126; and meanwhile, the arc shape can further reduce the flow resistance of the fluid, which allows the fluid to flow smoothly in the sixth bending portion 126, thereby effectively preventing the decline of the heat exchange efficiency caused by slow flow of the fluid.

According to some embodiments of the present application, as shown in FIG. 3 to FIG. 7, the first heat exchange flow channel 10 may further include a second input/output segment 17, one end of the second input/output segment 17 is connected to the fourth heat exchange portion 125 at an angle, and the other end of the second input/output segment 17 forms a second inlet/outlet of the first heat exchange flow channel 10.

The second inlet/outlet is configured to input or output of the heat exchange fluid. When the second inlet/outlet is configured to allow the heat exchange fluid to be input, the second input/output segment 17 is configured to convey the heat exchange fluid into the third heat exchange segment 13. When the second inlet/outlet is configured to output the heat exchange fluid, the second input/output segment 17 is configured to guide the heat exchange fluid after heat exchange through the second inlet/outlet into the first heat exchange flow channel 10.

The second input/output segment 17 is connected to the fourth heat exchange portion 125 at an angle, for example, the second input/output segment 17 and the fourth heat exchange portion 125 are connected and arranged at an angle greater than 0° and less than or equal to 180°. For example, the angle between the second input/output segment 17 and the fourth heat exchange portion 125 is 30°, 45°, 60°, 90°, 120°, 135°, 150°, etc.

In the above embodiment, by disposing the second input/output segment 17, the external pipeline can be conveniently connected, so that the heat exchange medium can enter or be discharged from the first heat exchange flow channel 10 to complete heat exchange on the battery cell 2011. Meanwhile, the heat exchange fluid entering or being discharged from the first heat exchange flow channel 10 can also be guided, so that the heat exchange fluid can enter or be discharged quickly, thereby increasing the heat exchange rate.

According to some embodiments of the present application, as shown in FIG. 3 to FIG. 7, the second input/output segment 17 extends, in the second direction, in the direction away from the first heat exchange segment 11, and the fourth heat exchange portion 125 extends in the first direction (e.g., the Y1 direction shown in FIG. 4).

A certain angle is formed between the second input/output segment 17 and the fourth heat exchange portion 125. As a result, a certain space may be formed on the side of the fourth heat exchange portion 125 facing the second input/output segment 17, which thus can facilitate the layout of other components (such as high-voltage boxes and other structures) within the battery 400.

In the above embodiment, by disposing the second input/output segment 17 to extend, in the second direction, in the direction away from the first heat exchange segment 11, the pipe layout of the first heat exchange flow channel 10 can be made more reasonable and connection with the external pipe is facilitated. Meanwhile, the second inlet/outlet can be made to be away from the battery assembly 200, which helps to reduce the occurrence of damage to the battery assembly 200 caused by water leakage from the second inlet/outlet.

According to some embodiments of the present application, as shown in FIG. 3 to FIG. 7, the first heat exchange flow channel 10 further includes a seventh bending portion 18, and the seventh bending portion 18 is in an arc shape and bent to be connected between the fourth heat exchange portion 125 and the second input/output segment 17.

The seventh bending portion 18 is in an arc shape, that is, the seventh bending portion 18 has a certain angle, and thus the seventh bending portion 18 is bent to be connected between the fourth heat exchange portion 125 and the second input/output segment 17, and communication of the fourth heat exchange portion 125 and the second input/output segment 17 can be achieved, thereby enabling the heat exchange fluid to circulate smoothly from the fourth heat exchange portion 125 to the second input/output segment 17 or from the second input/output segment 17 to the fourth heat exchange portion 125, thus achieving liquid input or output of the second input/output segment 17. Meanwhile, the arc shape can also reduce the flow resistance of the fluid and reduce the pressure drop, thereby increasing the flow rate of the heat exchange fluid and further improving the heat exchange efficiency of the first heat exchange flow channel 10.

In the above embodiment, by disposing the seventh bending portion 18, the heat exchange fluid can smoothly circulate from the fourth heat exchange portion 125 to the second input/output segment 17 or from the second input/output segment 17 to the fourth heat exchange portion 125, thereby achieving liquid input or output from the second input/output segment 17. Meanwhile, the seventh bending portion 18 in the arc shape can reduce the flow resistance of the fluid and reduce the pressure drop, thereby increasing the flow rate of the heat exchange fluid and further improving the heat exchange efficiency of the first heat exchange flow channel 10.

According to some embodiments of the present application, as shown in FIG. 3 to FIG. 7, the seventh bending portion 18 is in the arc shape, and the central angle corresponding to the seventh bending portion 18 is greater than or equal to 90° and less than 180°.

The central angle corresponding to the seventh bending portion 18 can be 90°, 120°, 150° or 170°.

As shown in FIG. 3, the heat exchange member 100 includes two first heat exchange flow channels 10. The seventh bending portion 18 of the first heat exchange flow channel 10 located on the side away from the origin of coordinates in the Y1 direction is in the shape of a quarter-circle arc. The fourth heat exchange portion 125 is arranged perpendicular to the second input/output segment 17. Meanwhile, the second input/output segment 17 of the first heat exchange flow channel 10 located on the lower side includes a third extension segment and a fourth extension segment. The third extension segment is connected between the fourth extension segment and the fourth heat exchange portion 125. The third extension segment extends along a straight line inclined relative to the second direction, and the fourth extension segment extends along a straight line parallel to the second direction. The third extension segment and the fourth heat exchange portion 125 are connected by the seventh bending portion 18. The central angle corresponding to the arc of the seventh bending portion 18 is greater than 90° and less than 135°.

In the above embodiment, by disposing the seventh bending portion 18 to be in the arc shape, the flow resistance of the fluid can be further reduced, thereby allowing the fluid to flow smoothly within the seventh bending portion 18, and effectively preventing the decline of the heat exchange efficiency caused by slow flow of the fluid. Meanwhile, the central angle corresponding to the seventh bending portion 18 is greater than or equal to 90° and less than 180°, which can also form an avoidance space on the side of the fourth heat exchange portion 125 facing the second input/output segment 17, thereby facilitating the arrangement of other components within the battery 400 and improving the layout rationality of the battery 400.

According to some embodiments of the present application, the first heat exchange segment 11 is connected downstream of the second heat exchange segment 12 in the fluid flow direction.

The heat exchange fluid first flows through the second heat exchange segment 12 and then flows into the first heat exchange segment 11. The second heat exchange segment 12 is arranged around the first heat exchange segment 11 in the circumferential direction. When the first heat exchange flow channel 10 exchanges heat with the battery assembly 200, the periphery of the battery assembly 200 dissipates heat quickly, especially under low temperature heating conditions, the high-temperature heat exchange fluid starts to exchange heat from the second heat exchange segment 12, which can make the first heat exchange flow channel 10 preferentially exchange heat on the outer side of the battery assembly 200 in the circumferential direction, thereby being beneficial to alleviating the temperature difference between the inside and outside of the battery assembly 200 and prolonging the service life of the battery 400 to a certain extent.

In the above embodiment, by disposing the first heat exchange segment 11 to be connected downstream of the second heat exchange segment 12 in the fluid flow direction, the first heat exchange flow channel 10 can preferentially perform heat exchange on the outer side of the battery 400 in the circumferential direction, thereby being beneficial to alleviating the temperature difference of the battery 400 in different environments and prolonging the service life of the battery 400 to a certain extent.

According to some embodiments of the present application, the heat exchange member 100 is configured such that: when the battery assembly 200 of the battery 400 is heated, the first heat exchange segment 11 is connected downstream of the second heat exchange segment 12 in the fluid flow direction; and when the battery assembly 200 of the battery 400 is cooled, the first heat exchange segment 11 is connected upstream of the second heat exchange segment 12 in the fluid flow direction.

Specifically, when the battery assembly 200 of the battery 400 is heated, the temperature of the heat exchange fluid flowing inside the heat exchange member 100 is higher than the operating temperature of the battery 400. The heat exchange member 100 heats the battery assembly 200. The high-temperature heat exchange fluid first flows into the second heat exchange segment 12 and then flows to the first heat exchange segment 11. The temperature of the heat exchange fluid flowing inside the second heat exchange segment 12 is higher than the temperature of the heat exchange fluid inside the first heat exchange segment 11.

Since the high-temperature fluid first enters the second heat exchange segment 12 located at the periphery of the first heat exchange flow channel 10, the second heat exchange segment 12 can first heat the battery cells 2011 at the periphery of the battery assembly 200, and the heat exchange fluid enters the first heat exchange segment 11 and then is configured to cool the battery cells 2011 in the middle of the battery assembly 200. Since the battery cells 2011 at the periphery of the battery 400 dissipate more heat to the external environment, it is easier to lower the temperature of the battery cells 2011 at the periphery of the battery 400, the battery cells 2011 at the periphery of the battery 400 are heated first by the heat exchange fluid, the higher-temperature heat exchange fluid can raise the temperature of the battery cells 2011 at the periphery, and meanwhile compensate for the heat loss of the battery cell 2011 caused by heat dissipation to the external environment, thereby meeting the heating requirements thereof. The battery cells 2011 in the middle of the battery assembly 200 have a less contact area with the external environment, resulting in the minimal heat loss. The lower-temperature heat exchange fluid flowing in the first heat exchange segment 11 can cooperate with the heat generated by the battery cells 2011 themselves to adequately meet the heating requirements thereof. As a result, both the battery cells 2011 at the periphery of the battery assembly 200 and the battery cells 2011 in the middle of the battery assembly 200 can achieve a basically consistent heating effect. This ensures that the temperatures of the battery cells 2011 at the periphery of the battery assembly 200 and the battery cells 2011 in the middle of the battery assembly 200 become more uniform after heating, leading to a more even temperature distribution within the battery 400.

When the battery assembly 200 of the battery 400 is cooled, the temperature of the heat exchange fluid flowing inside the heat exchange member 100 is lower than the operating temperature of the battery 400. The heat exchange member 100 is configured to lower the temperature of the battery 400. The heat exchange fluid flows to the second heat exchange segment 12 from the first heat exchange segment 11. The temperature of the heat exchange fluid flowing inside the first heat exchange segment 11 is lower than the temperature of the heat exchange fluid inside the second heat exchange segment 12.

When the battery 400 is cooled, the heat exchange fluid flows from the first heat exchange segment 11 to the second heat exchange segment 12. That is, the heat exchange fluid flows from the middle part of the battery assembly 200 to the edge of the battery assembly 200 and exchanges heat. Since the heat dissipation of the battery cells 2011 at the peripheral edge of the battery 400 is better than that of the inner battery cells 2011, the lower-temperature heat exchange fluid in the first heat exchange segment 11 can better meet the heat dissipation requirements of the battery cells 2011 in the middle of the battery 400. The battery cells 2011 at the peripheral edge of the battery assembly 200 can directly face the external environment for natural heat dissipation. Even when the temperature of the heat exchange fluid in the second heat exchange segment 12 is slightly higher, the heat dissipation requirements of the peripheral battery cells 2011 can still be met, thereby making the cooling effect of the battery cells 2011 at the peripheral edge of the battery 400 and the cooling effect of the battery cells 2011 in the middle of the battery 400 roughly the same. Then, the temperature of the battery cells 2011 at the peripheral edge of the battery 400 and the temperature of the battery cells 2011 in the middle of the battery 400 are relatively consistent after cooling, which reduces the inner and outer temperature difference of the battery assembly 200, thereby making the temperature distribution inside the battery 400 more uniform.

In the above embodiment, the heat exchange member 100 is configured such that: when the battery assembly 200 of the battery 400 is heated, the first heat exchange segment 11 is connected downstream of the second heat exchange segment 12 in the fluid flow direction; and when the battery assembly 200 of the battery 400 is cooled, the first heat exchange segment 11 is connected upstream of the second heat exchange segment 12 in the fluid flow direction, which can further improve the heat exchange effect of the battery 400, thereby improving the temperature uniformity of the battery assembly 200.

According to some embodiments of the present application, as shown in FIG. 3 to FIG. 9, the heat exchange member 100 is provided with one or more heat exchange flow channels, when a plurality of heat exchange flow channels are disposed, the plurality of heat exchange flow channels are spaced apart from each other in the first direction or arranged around each other, at least one of the heat exchange flow channels is formed as the first heat exchange flow channel 10, and the plurality of heat exchange flow channels are arranged in parallel.

The number of the heat exchange flow channels of the heat exchange member 100 can be one, two, three, four or more. When a plurality of heat exchange flow channels are formed, one of the plurality of heat exchange flow channels can be formed as the first heat exchange flow channel 10, or two, three, four or more heat exchange flow channels can be formed as the first heat exchange flow channel 10, or all the plurality of heat exchange flow channels can be formed as the first heat exchange flow channel 10.

In some embodiments, the plurality of heat exchange flow channels are spaced apart from each other in the first direction. For example, as shown in FIG. 3, the heat exchange member 100 can include two heat exchange flow channels, and the two first heat exchange flow channels 10 are spaced apart from each other in the first direction. Further, both the two heat exchange flow channels can be formed as the first heat exchange flow channel 10. For example, the heat exchange member 100 can include three heat exchange flow channels which are arranged sequentially in the first direction. Furthermore, two of the three heat exchange flow channels constitute the first heat exchange flow channel 10, and one constitutes the second heat exchange flow channel 30, with the second heat exchange flow channel 30 arranged between the two first heat exchange flow channels 10.

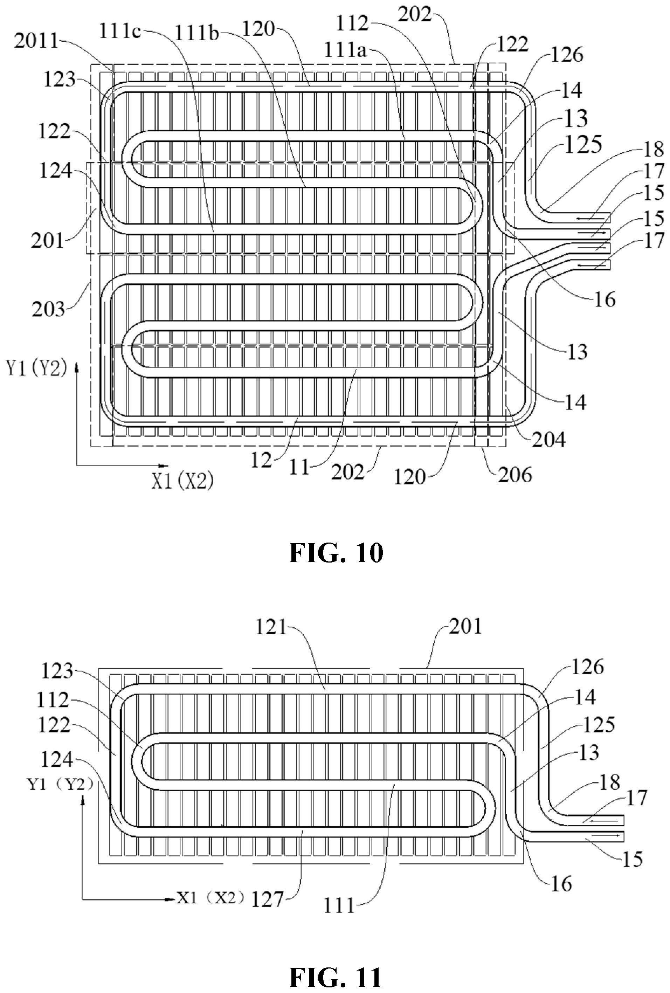

In some other embodiments, the plurality of heat exchange flow channels are arranged around each other. For example, as shown in FIG. 8, the heat exchange member 100 is provided with two heat exchange flow channels arranged in parallel, and the two heat exchange flow channels are arranged around each other. Further, both the two heat exchange flow channels can be formed as the first heat exchange flow channel 10. For another example, as shown in FIG. 10, the heat exchange member 100 is provided with three heat exchange flow channels arranged in parallel, and the three heat exchange flow channels are arranged around each other. Further, all the three heat exchange flow channels can be formed as the first heat exchange flow channel.

The plurality of heat exchange flow channels are arranged in parallel, that is, inlets of the plurality of heat exchange flow channels are connected to the same liquid supply pipe, and outlets of the plurality of heat exchange flow channels are connected to the same liquid output pipe.

In the above embodiment, by disposing the heat exchange member 100 to be provided with one or more heat exchange flow channels, and the plurality of heat exchange flow channels to be spaced apart from each other or arranged around each other in the first direction, the diversity of the heat exchange flow channel can be increased, thereby improving the adaptability of the heat exchange member 100, enabling the heat exchange member to meet the needs of different batteries 400, and further improving the market competitiveness of the battery 400. Meanwhile, the parallel arrangement of the plurality of heat exchange flow channels enables the plurality of heat exchange flow channels to exchange heat simultaneously, thereby shortening the heat exchange time of the heat exchange member 100 and improving the heat exchange efficiency.

According to some embodiments of the present application, as shown in FIG. 3, the plurality of heat exchange flow channels are spaced apart from each other in the first direction, and two heat exchange flow channels located at both ends in the first direction are both the first heat exchange flow channel 10; and the two first heat exchange flow channels 10 are symmetrically arranged about a centerline of the heat exchange member 100 in the second direction, and the second direction and the first direction are arranged at an angle.

Arranging the second heat exchange segment 12 of the first heat exchange flow channel 10 at the peripheral edge of the battery assembly 200 can improve the uniformity of the temperatures inside and outside the battery assembly 200. Therefore, by forming the two heat exchange flow channels at both ends in the first direction as the first heat exchange flow channel 10, the temperature uniformity of the battery cells 2011 at both ends of the battery assembly 200 in the first direction can be better, thus achieving overall temperature uniformity of the battery assembly 200.

The fluid flow direction of the two first heat exchange flow channels 10 and the inlet and the outlet at both ends are symmetrically arranged, so that the two first heat exchange flow channels 10 can simultaneously exchange heat with both ends of the battery assembly 200 in the first direction, thereby achieving better temperature uniformity.

The expression "the second direction and the first direction are arranged at an angle" is intended to indicate that the first direction and the second direction can be arranged perpendicularly or can only intersect without being perpendicular. For example, the first direction and the second direction can be arranged at an angle of 30°, 60° or 80°.

In the above embodiment, by disposing two symmetrically arranged first heat exchange flow channels 10, liquid can be input into both sides simultaneously, the liquid input flow rate can be increased, the length of a single heat exchange flow channel can be shortened, the pressure drop in a single heat exchange flow channel can be reduced, and thus the heat exchange efficiency can be improved.

According to some embodiments of the present application, as shown in FIG. 3, the plurality of heat exchange flow channels are symmetrically arranged about the centerline of the heat exchange member 100 in the second direction.

The flow direction of the plurality of heat exchange flow channels and the inlet and the outlet at both ends are also symmetrically arranged, which can divide the heat exchange member 100 into two symmetrically distributed parts. In this way, during the heat exchange process, the fluid distribution of the two symmetrical parts of the heat exchange member 100 is consistent, thereby improving the temperature consistency of the heat exchange regions of the battery assembly 200 corresponding to the two parts of the heat exchange member 100, and further improving the temperature equalization effect of the battery assembly 200.

In the above embodiment, by disposing the plurality of heat exchange flow channels to be symmetrically arranged about the centerline of the heat exchange member 100 in the second direction, the plurality of heat exchange flow channels can exchange heat with the battery assembly 200 simultaneously, thereby improving the heat exchange efficiency. Meanwhile, the temperature consistency of the regions of the battery assembly 200 exchanging heat with the two symmetrically arranged parts of the heat exchange member 100 can also be improved, thereby further improving the temperature equalization effect of the battery assembly 200.

In some embodiments of the present application, the plurality of heat exchange flow channels are asymmetrically arranged about the centerline of the heat exchange member 100 in the second direction, so that the plurality of heat exchange channels can designed according to the actual conditions of the battery assembly 200, thereby enabling the heat exchange member 100 to meet the heat exchange requirements of the battery assembly 200 and further ensuring the heat exchange effect of the battery assembly 200.

According to some embodiments of the present application, as shown in FIG. 8, the plurality of heat exchange flow channels further include at least one second heat exchange flow channel 30, the second heat exchange flow channel 30 is disposed between the two first heat exchange flow channels 10, and the structure of any second heat exchange flow channel 30 is same as or different from the structure of the first heat exchange flow channel 10.

The second heat exchange flow channel 30 is disposed between the two first heat exchange flow channels 10 and is mainly configured to perform heat exchange with the middle position of the battery assembly 200. The temperature of the battery module 201 disposed in the middle position is relatively balanced. Therefore, the structure of any second heat exchange flow channel 30 can be the same as or different from the structure of the first heat exchange flow channel 10. For example, the structure of the second heat exchange flow channel 30 can be a simple U-shaped structure. Furthermore, the structure of the second heat exchange flow channel 30 can be designed according to the actual heat exchange situation of the battery 400.

The number of the second heat exchange flow channel 30 can be one or more. For example, the number of the second heat exchange flow channel 30 can be one, two, three or more. The number of the second heat exchange flow channel 30 can be selected according to the arrangement of the battery assembly 200.

In the above embodiments, by disposing at least one second heat exchange flow channel 30, the arrangement diversity of the heat exchange flow channel can be increased, thereby enabling the heat exchange member 100 to better exchange heat with the battery assembly 200 and improving the heat exchange effect of the heat exchange member 100.

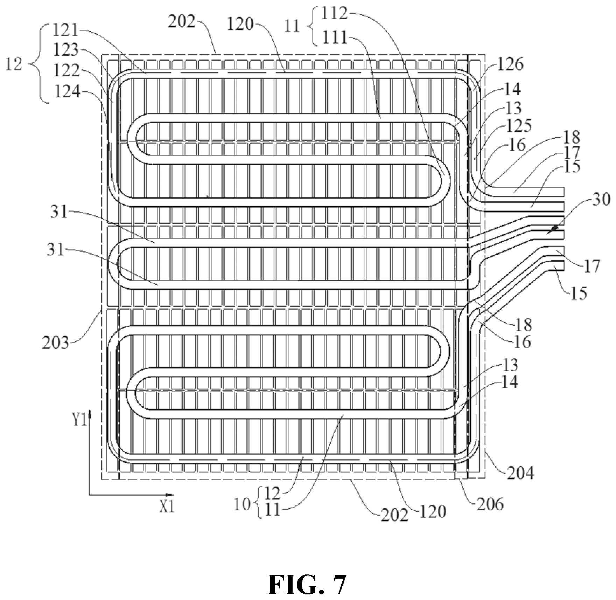

According to some embodiments of the present application, as shown in FIG. 7, the second heat exchange flow channel 30 includes a plurality of fourth heat exchange segments 31, the plurality of fourth heat exchange segments 31 are sequentially connected in the fluid flow direction, the fourth heat exchange segment 31 extends in the second direction, and the plurality of fourth heat exchange segments 31 are spaced apart from each other in the first direction.

The plurality of fourth heat exchange segments 31 are sequentially connected and can form a U-shaped or S-shaped heat exchange flow channel.

The number of the fourth heat exchange segment 31 can be two, three or more, and the number of the fourth heat exchange segment 31 can be designed according to the dimension of the battery assembly 200.

In the above embodiment, by disposing the second heat exchange flow channel 30 to include the plurality of sequentially connected fourth heat exchange segments 31, the structural complexity of the second heat exchange flow channel 30 can be reduced, thereby reducing the production costs of the second heat exchange flow channel 30 and further reducing the production costs of the heat exchange member 100.

According to some embodiments of the present application, as shown in FIG. 8, the heat exchange member 100 is provided with a plurality of heat exchange flow channels, the plurality of heat exchange flow channels include one first heat exchange flow channel 10 and at least one third heat exchange flow channel 40, the third heat exchange flow channel 40 is bent to be disposed in the U-shaped region 120 of the first heat exchange flow channel 10, the first heat exchange flow channel 10 and the third heat exchange flow channel 40 are bent in a same plane, and bending structures of the first heat exchange flow channel 10 and the third heat exchange flow channel 40 are the same or different.

The bending structures of the first heat exchange flow channel 10 and the third heat exchange flow channel 40 can be the same or different. The number of the third heat exchange flow channel 40 can be one or more, for example, the number of the third heat exchange flow channel 40 can be one, two, three or more.

For example, as shown in FIG. 8, the plurality of heat exchange flow channels include one first heat exchange flow channel 10 and one third heat exchange flow channel 40, the third heat exchange flow channel 40 and the first heat exchange flow channel 10 are in the same structure, and the third heat exchange flow channel 40 is bent to be disposed in the U-shaped region 120 of the first heat exchange flow channel 10.

Both the first heat exchange flow channel 10 and the third heat exchange flow channel 40 include the first heat exchange portion 111, the second heat exchange portion 121, the third heat exchange portion 122, and the fourth heat exchange portion 125. The plurality of first heat exchange portions 111, the third heat exchange portion 122, and the fourth heat exchange portion 125 of the first heat exchange flow channel 10 and the third heat exchange flow channel 40 all extend in the X1 direction, and the second heat exchange portion 121 extends in the Y1 direction. The fourth heat exchange portion 125, the second heat exchange portion 121, and the third heat exchange portion 122 are sequentially bent to be connected to form the U-shaped structure with the opening facing the side away from the origin of coordinates in the X1 direction. The plurality of first heat exchange portions 111 are included, and the plurality of first heat exchange portions 111 are arranged in the U-shaped region 120, are spaced apart from each other in the Y1 direction, and sequentially bent to be connected.

The third heat exchange portion 122 of the first heat exchange flow channel 10 is arranged on the side of the plurality of first heat exchange portions 111 away from the origin of coordinates in the Y1 direction, and the fourth heat exchange portion 125 is arranged on the side of the plurality of first heat exchange portions 111 close to the origin of coordinates in the Y1 direction. The third heat exchange flow channel 40 is connected to the first heat exchange portion 111 furthest from the origin of coordinates in the Y1 direction. The third heat exchange portion 122 of the third heat exchange flow channel 40 is arranged on the side of the plurality of first heat exchange portions 111 close to the origin of coordinates in the Y1 direction, and the fourth heat exchange portion 125 is arranged on the side of the plurality of first heat exchange portions 111 close to the origin of coordinates in the Y1 direction. The third heat exchange portion 122 of the third heat exchange flow channel 40 is connected to the first heat exchange portion 111 closest to the origin of coordinates in the Y1 direction. The third heat exchange flow channel 40 is arranged between the fourth heat exchange portion 125 and the plurality of first heat exchange portions 111 of the first heat exchange flow channel 10.

The first heat exchange flow channel 10 and the third heat exchange flow channel 40 also include the first input/output segment 15 and the second inlet/outlet section 17. The first input/output segment 15 of the first heat exchange flow channel 10 is connected to the fourth heat exchange portion 125, and the second inlet/outlet section 17 is connected to the first heat exchange portion 111 closest to the origin of coordinates in the Y1 direction. The first input/output segment 15 of the third heat exchange flow channel 40 is connected to the first heat exchange portion 111 furthest from the origin of coordinates in the Y1 direction, and the second inlet/outlet section 17 is connected to the fourth heat exchange portion 125.

In the above embodiment, by disposing the plurality of heat exchange flow channels, the diversity of the heat exchange flow channel can be increased, so that the arrangement of the heat exchange flow channel can be designed according to the cooling requirement of the battery 400, thereby further improving the heat exchange effect of the heat exchange member 100 and improving the temperature uniformity of the battery 400.

According to some embodiments of the present application, as shown in FIG. 9, the third heat exchange flow channel 40 includes the U-shaped region 120 structurally identical to the first heat exchange flow channel 10, and at least part of the first heat exchange segment 11 of the first heat exchange flow channel 9 is disposed in the U-shaped region 120 of the third heat exchange flow channel 40.

It is possible that the first heat exchange segment 11 of the first heat exchange flow channel 10 may be partially disposed within the U-shaped region 120 of the third heat exchange flow channel 40, or entirely disposed within the U-shaped region 120 of the third heat exchange flow channel 40.

For example, as shown in FIG. 9, the plurality of heat exchange flow channels include one first heat exchange flow channel 10 and two third heat exchange flow channels 40, and the two third heat exchange flow channels 40 and the first heat exchange flow channel 10 are in the same structure.

The first heat exchange flow channel 10 and the two third heat exchange flow channels 40 each include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of the first heat exchange flow channel 10 and any one of the two third heat exchange flow channels 40 are sequentially bent to be connected to form a U-shaped structure with the opening facing the side away from the origin of coordinates in the X1 direction; a plurality of first heat exchange portions 111 are included, the plurality of first heat exchange portions 111 are arranged in the U-shaped region 120, and the plurality of first heat exchange portions 111 extend along a straight line in the X1 direction, and spaced apart from each other in the Y1 direction and sequentially bent to be connected; and the second heat exchange portion 121 extends in the Y1 direction, and the third heat exchange portion 122 and the fourth heat exchange portion 125 both extend in the X1 direction.

The third heat exchange portion 122 of the first heat exchange flow channel 10 is located on the side of the plurality of first heat exchange portions 111 away from the origin of coordinates in the Y1 direction, and connected to the first heat exchange portion 111 furthest from the origin of coordinates in the Y1 direction. The fourth heat exchange portion 125 is located on the side of the plurality of first heat exchange portions 111 close to the origin of coordinates in the Y1 direction

The third heat exchange portion 122 of the third heat exchange flow channel 40a is located on the side of the plurality of first heat exchange portions 111 away from the origin of coordinates in the Y1 direction, and connected to the first heat exchange portion 111 furthest from the origin of coordinates in the Y1 direction. The third heat exchange portion 122 of the third heat exchange flow channel 40a and the first heat exchange portion 111, furthest from the origin of coordinates in the Y1 direction, of the third heat exchange flow channel 40a are located between the third heat exchange portion 122 of the first heat exchange flow channel 10 and the plurality of first heat exchange portions 111 of the first heat exchange flow channel 10. The plurality of first heat exchange portions 111 of the first heat exchange flow channel 10 are located between the first heat exchange portion 111, furthest from the origin of coordinates in the Y1 direction, of the third heat exchange flow channel 40a and the second first heat exchange portion 111, furthest from the origin of coordinates in the Y1 direction, of the third heat exchange flow channel 40a.

The third heat exchange flow channel 40b is located between the fourth heat exchange portion 125 of the third heat exchange flow channel 40a and the plurality of first heat exchange portions 111 of the third heat exchange flow channel 40a, and the fourth heat exchange portion 125 of the third heat exchange flow channel 40b is located on the side of the plurality of first heat exchange portions 111 of the third heat exchange flow channel 40b away from the origin of coordinates in the Y1 direction. The third heat exchange portion 122 of the third heat exchange flow channel 40b is connected to the first heat exchange portion 111, closest to the origin of coordinates in the Y1 direction, of the third heat exchange flow channel 40.

The first heat exchange flow channel 10 and the two third heat exchange flow channels 40 each include the first input/output segment 15 and the second inlet/outlet section 17, where the first input/output segment 15 and the second inlet/outlet segment 17 are respectively connected to the fourth heat exchange portion 125 and the first heat exchange portion 111.

In the above embodiment, by disposing the third heat exchange flow channel 40 to include the U-shaped region 120 with the same structure as the first heat exchange flow channel 10, and disposing at least part of the first heat exchange segment 11 of the first heat exchange flow channel 10 within the U-shaped region 120 of the third heat exchange flow channel 40, the first heat exchange flow channel 10 and at least part of the third heat exchange flow channel 40 can be arranged around each other. In this way, the winding mode of the heat exchange flow channel can be arranged according to the heat exchange requirements of each part of the battery assembly 200, thereby further improving the heat exchange effect of the heat exchange member 100 and improving the temperature uniformity of the battery 400.

According to some embodiments of the present application, as shown in FIG. 8 and FIG. 9, the U-shaped region 120 of the second heat exchange segment 12 of the first heat exchange flow channel 10 is located in a circumferential direction of an outermost side of the heat exchange member 100.

The U-shaped region 120 of the second heat exchange segment 12 of the first heat exchange flow channel 10 is formed as the outermost heat exchange flow channel of the heat exchange member 100. In this way, the U-shaped region 120 of the first heat exchange flow channel 10 can be configured to exchange heat with the outer peripheral edge of the battery assembly 200, thereby improving the heat exchange effect on the peripheral edge of the battery assembly 200.

In the above embodiment, by disposing the U-shaped region 120 of the second heat exchange segment 12 of the first heat exchange flow channel 10 to be located in the circumferential direction of the outermost side of the heat exchange member 100, the second heat exchange segment 12 can perform heat exchange in the circumferential direction of the outer side of the battery 400, thereby being beneficial to alleviating the temperature difference of the battery 400 in different environments and prolonging the service life of the battery 400 to a certain extent.

According to some embodiments of the present application, the heat exchange member 100 includes at least one heat exchange tube, when a plurality of heat exchange tubes are disposed, the plurality of heat exchange tubes are spaced apart from each other in the first direction, and each heat exchange tube defines a heat exchange flow channel on an inner side thereof.

The number of the heat exchange tube can be one, two, three or more, and the number of the heat exchange tube can be designed according to the dimension of the battery assembly 200.

The heat exchange flow channel is defined in the heat exchange tube and configured to circulate the heat exchange fluid. The shape of the heat exchange tube can be varied, such as a round tube, a flat tube, etc. Meanwhile, the shape of the heat exchange flow channel defined by the heat exchange tube can also be varied, such as a U-shaped heat exchange flow channel, a serpentine heat exchange flow channel, etc.

The plurality of heat exchange tubes are arranged in parallel. For example, the inlet ends of the plurality of heat exchange tubes are connected to a diversion cavity of a current collector 20, and the outlet ends of the plurality of heat exchange tubes are all connected to a confluence cavity of the current collector 20.

The plurality of heat exchange tubes can be arranged sequentially in the first direction, for example, the plurality of heat exchange tubes can be spaced apart from each other in the Y1 direction. Of course, the plurality of heat exchange tubes can also be arranged around each other, and further, the plurality of heat exchange tubes can be arranged around each other in the same plane.

In the above embodiment, by disposing the heat exchange member 100 to include at least one heat exchange tube, the process complexity of the heat exchange member 100 can be reduced, thereby increasing the production rate of the heat exchange member 100. In addition, the fluid pressure drop in a single heat exchange tube can be reduced, thereby improving the heat exchange efficiency. In addition, tubular structures are simpler, lower in cost, and easier to process than platy structures.

According to some embodiments of the present application, the heat exchange tube can be formed by bending a single tube.

Formed by bending a single tube refers to the process by which the heat exchange tube is formed by bending a single straight tube many times through processing techniques such as pressing and rolling. For example, a single straight tube can be bent at a plurality of preset positions to form a V shape, a U shape, etc. at the bending position. The bending shape of a single tube can be designed according to the actual situation.

In the above embodiment, by disposing the heat exchange tube to be formed by bending a single tube, the number of welding points of the heat exchange member 100 can be reduced, thereby reducing the risk of leakage of the heat exchange member 100 and improving the using reliability of the heat exchange member 100. Meanwhile, the operation process of forming by bending a single tube is simpler than the manufacturing process of the platy structure, thereby significantly reducing the costs of the heat exchange member 100.

According to some embodiments of the present application, the heat exchange tube is bent in an arc shape at the bending position.

Meanwhile, the arc-shaped bending can reduce the flow resistance of the fluid and reduce the pressure drop, and then the heat exchange tube is bent in an arc shape at the bending position, which can increase the flow rate of the heat exchange fluid in the heat exchange flow channel and further improves the heat exchange efficiency of the heat exchange member 100.

In the above embodiment, by disposing the heat exchange tube to be bent in the arc shape at the bending position, the flow resistance of the fluid can be reduced, and the pressure drop can be reduced, thereby increasing the flow rate of the heat exchange fluid in the heat exchange flow channel and further improving the heat exchange efficiency of the heat exchange member 100.

According to some embodiments of the present application, the bending angle of the heat exchange tube at the bending position is less than 180°.

The bending angle of the heat exchange tube at the bending position can be 30°, 60°, 90°, 120°, 150° or 179°.

In the above embodiment, by setting the bending angle of the heat exchange tube at the bending position to be less than 180°, the probability of the heat exchange tube being damaged by bending can be reduced.

As shown in FIG. 3 and FIG. 4, the width of the heat exchange tube is L1, the distance between adjacent tube segments within the same heat exchange tube and the distance between adjacent tube segments of adjacent heat exchange tubes are both L2, and both satisfy: L1≤L2≤2L1.

A plurality of heat exchange tubes can be disposed, and the plurality of heat exchange tubes can be spaced apart from each other in the first direction. Each heat exchange tube can internally be provided with at least one tube segment (e.g., a partial tube segment defining the first heat exchange segment 11, a partial tube segment defining the second heat exchange segment 12, etc.). The distance between adjacent tube segments in the same heat exchange tube is the same as the distance between adjacent tube segments of adjacent heat exchange tubes (e.g., if two heat exchange tubes, namely the first heat exchange tube and the second heat exchange tube are disposed, then a certain tube segment of the first heat exchange tube located on one side in the first direction is adjacent to a certain tube segment of the second heat exchange tube located on the same side in the first direction) and both the distances are L2. This allows the plurality of tube segments to be arranged more evenly in the first direction, which can improve heat exchange uniformity and make temperature adjustment more consistent.

By ensuring that the width of the heat exchange tube and L2 meet the above ratio, the distance between adjacent tube segments is greater than the width of the heat exchange tube itself during the laying of the heat exchange tube. This can reduce the probability of interference between adjacent heat exchange tubes, reduce the difficulty of laying, improve the assembly efficiency, and make the distance between adjacent tube segments more reasonable, thereby further improving the uniformity and consistency of temperature regulation.

The distance between the adjacent heat exchange tubes shall not be less than 2 mm.

The distance between the adjacent heat exchange tubes is 2 mm, 3 mm, etc., so that the distance between the adjacent heat exchange tubes is more reasonable, which makes the adjacent heat exchange tubes at least have a 2 mm gap therebetween while improving the uniformity and consistency of temperature regulation, thereby further reducing the laying difficulty of the heat exchange tube.

As shown in FIG. 3 and FIG. 4, the supporting plate 320 defines a heat exchange surface perpendicular to the frame 310. The area of the heat exchange surface is S1, the projection coverage area of the heat exchange member 100 on the heat exchange surface is S2, and both satisfy 0.3≤S1/S2≤0.8.

The ratio of the area of the heat exchange surface defined by the supporting plate 320 to the projection coverage area of the heat exchange member 100 on the heat exchange surface is 0.3, 0.4, 0.5, 0.6, 0.7, 0.8, etc. The coverage area of the heat exchange member 100 on the heat exchange surface satisfies the above ratio relationship. The ratio relationship is not less than 0.3, so that the heat exchange efficiency and heat exchange effect of the supporting plate 320 can be improved. The ratio relationship is not greater than 0.8, so that the number of heating members and the laying area can be reduced, and the structural strength and rigidity of the supporting plate 320 can be balanced.

With a value of 0.3≤S1/S2≤0.6, the structural strength, structural stiffness, heat exchange efficiency, and heat exchange effect of the supporting plate 320 can be further balanced.

The heat exchange member 100 is constructed as a flat tube with a width-to-thickness ratio of 1:1 to 40:1. This enables a larger area of the heat exchange member 100 within the plane defined by the first direction and the second direction, achieving a better heat exchange effect and higher heat exchange efficiency.

The width-to-thickness ratio is 4:1 to 8:1. In this way, while taking the heat exchange effect and the heat exchange efficiency into account, a too large width-to-thickness ratio can be avoided to optimize the space occupied by the heat exchange member 100 in the third direction, thereby further reducing the thickness of the supporting plate 320. Fortunately, a too small width-to-thickness ratio can also be avoided to keep the flow resistance of the heat exchange member 100 within a reasonable range, thereby avoiding too large flow resistance, so that the flow velocity of the heat exchange medium in the heat exchange member 100 can be kept stable, and the heat exchange effect can be kept stable.

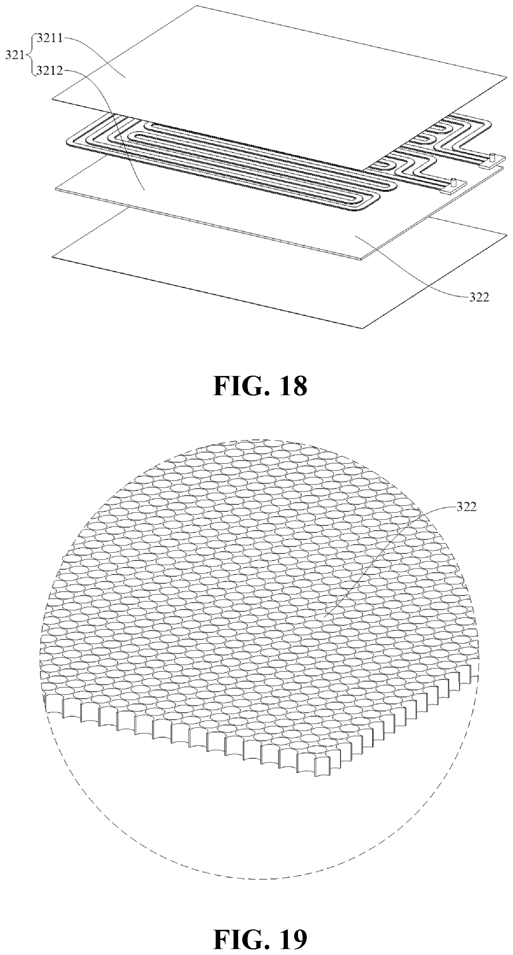

As shown in FIG. 19, according to some embodiments of the present application, the buffer layer 322 is constructed as a porous structure.

The porous structure can be a honeycomb hole structure, a round hole structure, or a square hole structure, as long as the porous structure can be densely laid within the plane defined by the first direction and the second direction. By disposing the porous structure, the weight of the buffer layer 322 can be reduced to improve the load on the supporting plate 320 and improve the profile accuracy of the bottom surface of the supporting plate 320. Furthermore, the structural strength and rigidity of the supporting plate 320 can be increased.

According to some embodiments of the present application, a hole in the buffer layer 322 extends in an opposite direction of an adjacent structural plate 321.

The hole structure of the buffer layer 322 extends in the vertical direction, so that the buffer layer 322 can provide support for the upper structural plate 321 between adjacent structural plates 321, and realize a smooth and uniform mechanical transfer between the upper structural plate 321 and the lower structural plate 321, so as to further improve the structural strength and stiffness of the supporting plate 320.

According to some embodiments of the present application, the buffer layer 322 is constructed as a plastic material member or a metal material member; when the buffer layer 322 is constructed as the plastic material member, the buffer layer 322 is connected to the structural plate 321 through thermocompression bonding; and when the buffer layer 322 is constructed as the metal material member, the buffer layer 322 is connected to the structural plate 321 through brazing.

The structural plate 321 can be made of a stamped aluminum plate, and the heat exchange member 100 is welded (e.g., brazing) to the uppermost structural plate 321. The buffer layer 322 is disposed between the adjacent structural plates 321. If the buffer layer 322 is the plastic material member, thermocompression bonding assembly is used. If the buffer layer 322 is the metal material member, brazing connection is used, so that the connection between the buffer layer 322 and the structural plate 321 is more stable and the overall structural strength of the supporting plate 320 is higher.

The heat exchange member 100 can be constructed as a heat exchange tube structure instead of a plate structure, without the need to dispose the heat exchange plate in a double-layer stamped plate structure, which can reduce the material usage of the heat exchange member 100, thereby lowering the material costs and reducing the process difficulty. Meanwhile, the weight and load of the supporting plate 320 can be reduced, so as to further improve the profile accuracy of the supporting plate 320 and improve the flatness of the bottom surface of the supporting plate 320.

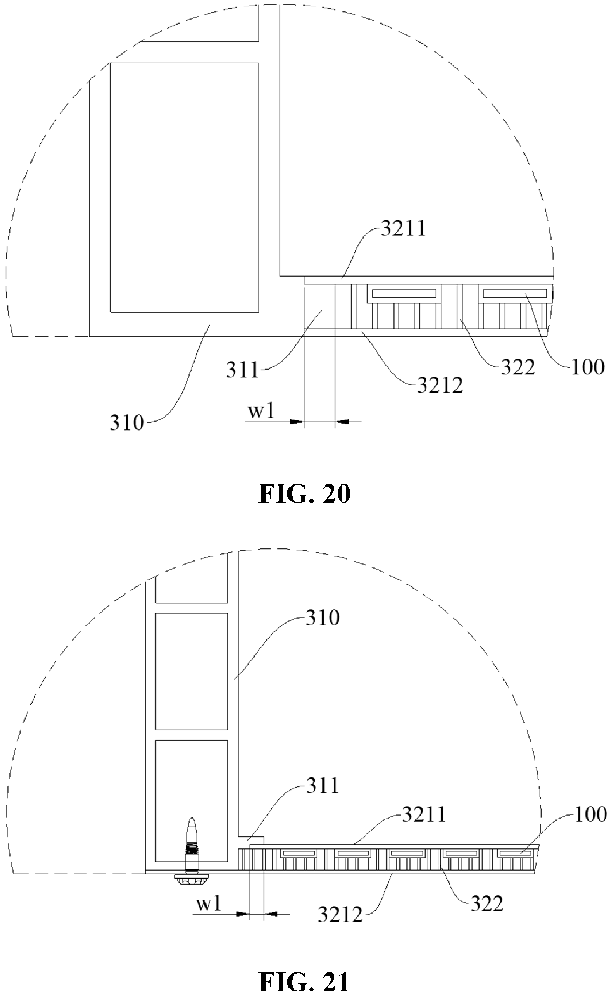

As shown in FIG. 20 and FIG. 21, according to some embodiments of the present application, the structural plates 321 include a first structural plate 3211 to an Nth structural plate 3212 sequentially disposed in an arrangement direction of the frame 310 and the supporting plate 320, where N≥2, and at least the first structural plate 3211 and the Nth structural plate 3212 are connected to the frame 310.

In some embodiments, the structural plates 321 include a first structural plate 3211 and a second structural plate 321, the buffer layer 322 is disposed between the first structural plate 3211 and the second structural plate 321, and a heating member is disposed on the lower surface of the first structural plate 3211; in some other embodiments, the structural plate 321 may include a first structural plate 3211, a second structural plate 321, and a third structural plate 321, the buffer layers 322 are disposed between the first structural plate 3211 and the second structural plate 321, and between the second structural plate 321 and the third structural plate 321, and the heating member is disposed on the lower surface of the first structural plate 3211.

By disposing the plurality of structural plates 321 and connecting at least the two structural plates 321 of the first structural plate 3211 and the Nth structural plate 3212 to the frame 310, the structural strength and structural rigidity of the supporting plate 320 can be further improved, and the connection stability and reliability between the supporting plate 320 and the frame 310 can also be improved.

With reference to FIG. 16, FIG. 20, and FIG. 21, according to some embodiments of the present application, a connecting flange 311 is disposed on a side of the frame 310 facing the supporting plate 320, the structural dimension of the buffer layer 322 is less than the structural dimension of the structural plate 321 to define an inserting groove, and the connecting flange 311 extends into the inserting groove; or the connecting flange 311 is connected to the first structural plate 3211 in an overlapping mode.

In some embodiments, the inserting groove is defined between adjacent structural plates 321, and the connecting flange 311 can be inserted into the inserting groove and connected to the structural plate 321 within the inserting groove, or the connecting flange 311 can be directly connected to the upper surface of the structural plate 321 in an overlapping mode and be connected to the structural plate 321.

In this way, the structural plate 321 and the frame 310 can be connected. By disposing the connecting flange 311, at least part of overlapping allowance is reserved between the frame 310 and the supporting plate 320 to achieve connection and fixation. This can also improve the connection stability and reliability between the structural plate 321 and the frame 310. Meanwhile, based on the overlapping relationship or inserting relationship, only one or two sealing interfaces need to be formed. Compared with the prior art, the number of the sealing interfaces can be reduced, the sealing costs are lower, and the sealing effect is better.

According to some embodiments of the present application, a minimum overlapping dimension w1 of the structural plate 321 and the connecting flange 311 is 6 mm.

Both the overlapping dimensions of the structural plate 321 and the connecting flange 311 on both sides in the first direction are not less than 6 mm, and both the overlapping dimensions of the structural plate 321 and the connecting flange 311 on both sides in the second direction are also not less than 6 mm, so that the area of the connection region between the connecting flange 311 and the structural plate 321 is larger, which improves the connection strength, makes welding easier, and increases the processing efficiency.

According to some embodiments of the present application, the structural dimension of the first structural plate 3211 is less than the structural dimension of the Nth structural plate 3212, and the first structural plate 3211 is connected to the connecting flange 311, while the Nth structural plate 3212 is connected to an end surface of the frame 310; or the structural dimension of the first structural plate 3211 is equal to the structural dimension of the Nth structural plate 3212, and both the first structural plate 3211 and the Nth structural plate 3212 are connected to the connecting flange 311.

As shown in FIG. 21, in the embodiment where the structural dimension of the first structural plate 3211 is less than the structural dimension of the Nth structural plate 3212, and the first structural plate 3211 is connected to the connecting flange 311, while the Nth structural plate 3212 is connected to an end surface of the frame 310, the first structural plate 3211 is connected to the connecting flange 311 via the FSW process, and the Nth structural plate 3212 is connected to the end face of the frame 310 via the FDS process. As shown in FIG. 20, in the embodiment where the structural dimension of the first structural plate 3211 is equal to the structural dimension of the Nth structural plate 3212, and both the first structural plate 3211 and the Nth structural plate 3212 are connected to the connecting flange 311, the first structural plate 3211 is connected to the connecting flange 311 and the Nth structural plate 3212 is connected to the connecting flange 311, both via the FSW process.

The FSW process refers to a friction stir welding process, and the FDW process refers to a flow drill screw process. In the embodiment where both the first structural plate 3211 and the second structural plate 321 are connected by friction stir welding, two sealing interfaces are formed between the first structural plate 3211 and the connecting flange 311, and between the second structural plate 321 and the connecting flange 311. In the embodiment where the second structural plate 321 is connected by the flow drill screw process, three sealing interfaces are formed between the first structural plate 3211 and the connecting flange 311, between the second structural plate 321 and the connecting flange 311, and between a self-tapping screw and the frame. The number of the sealing interfaces is lower than that in the prior art, which can reduce the number of the sealing interfaces and reduce the sealing costs. Moreover, higher connection stability and reliability are achieved, which can improve the structural strength and stability of the box 300.

The present application provides a battery 400, including the box 300 in the above embodiment.

According to some embodiments of the present application, as shown in FIG. 10 to FIG. 15, the battery 400 specifically includes: a battery assembly 200, the battery assembly 200 includes a battery module 201, and the battery module 201 includes a plurality of battery cells 2011 arranged in sequence in a third direction (e.g., the X2 direction shown in FIG. 10 to FIG. 15); a heat exchange member 100 is disposed on one side of the battery assembly 200 in a fourth direction (e.g., the Z direction shown in FIG. 2) and exchanges heat with the battery assembly 200; and the third direction and the fourth direction are arranged at an angle.

The battery assembly 200 is mainly configured to store and release energy and is the core component of the battery 400. The heat exchange member 100 is configured to exchange heat with the battery assembly 200, so that the temperature of the battery assembly 200 can be kept within the safe operating temperature, thereby improving the using reliability and service life of the battery assembly 200.

Furthermore, the expression "the third direction and the fourth direction are arranged at an angle" are intended to indicate that the third direction and the fourth direction can be arranged perpendicularly. For example, as shown in FIG. 2, the third direction can be the thickness direction of the battery cell 2011, i.e., the X2 direction shown in FIG. 2, and the fourth direction can be the height direction of the battery cell 2011, i.e., the Z direction shown in FIG. 2. Thus, the plurality of battery cells 2011 are stacked in the thickness direction of the battery cell 2011 to form the battery module 201, and the heat exchange member 100 is arranged on one side of the battery assembly 200 in the height direction for heat exchange with the battery assembly 200. The third direction and the fourth direction can only intersect without being perpendicular. For example, the third direction and the fourth direction can be arranged at an angle of 30°, 60° or 80°.

The number of the battery module 201 can be one or more, for example, the number of the battery module 201 can be one, two, three or more.

In the above embodiment, the heat exchange member 100 is disposed on one side of the battery assembly 200 in the fourth direction and exchanges heat with the battery assembly 200, so that the temperature of the battery assembly 200 can be kept within the safe operating temperature, thereby improving the using reliability and service life of the battery assembly 200.

According to some embodiments of the present application, as shown in FIG. 3 and FIG. 10, the plurality of battery cells 2011 located on the most periphery of the battery assembly 200 in the circumferential direction form a peripheral battery cell group, and at least part of the second heat exchange segment 12 is attached to the peripheral battery cell group.

The second heat exchange segment 12 can be at least partially attached to the peripheral battery cell group, or can be completely attached to the peripheral battery cell group. Since the peripheral edge of the battery assembly 200 dissipates more heat to the environment, the temperature of the peripheral battery cell group is relatively lower than that of the inner side battery cell. Meanwhile, the temperature of the heat exchange fluid in the second heat exchange segment 12 is always the highest. As a result, at least part of the second heat exchange segment 12 is attached to the peripheral battery cell group, which can improve the heat exchange efficiency of the peripheral battery cell group and further balance the temperature difference caused by heat dissipation in the battery assembly 200.

In the above embodiment, by disposing at least part of the second heat exchange segment 12 to be attached to the peripheral battery cell group, the heat exchange efficiency of the peripheral battery cell group can be improved, thereby further balancing the temperature difference of the battery assembly 200 caused by heat dissipation.

According to some embodiments of the present application, as shown in FIG. 6 and FIG. 11, the battery assembly 200 includes a battery module 201, and all the battery cells 2011 of the battery module 201 together form the peripheral battery cell. Alternatively, the battery assembly 200 includes a plurality of battery modules 201, and the plurality of battery modules 201 are arranged sequentially in a fifth direction (e.g., the Y2 direction shown in FIG. 11). The plurality of battery cells 2011, located at the most periphery of the battery assembly 200, of the plurality of battery modules 201 together form the peripheral battery cell. The third direction, the fourth direction, and the fifth direction are arranged at angles to each other.

The number of the battery module 201 included in the battery assembly 200 can be designed according to actual conditions, and the number of the battery module 201 can be one or more, for example, the number of the battery module 201 can be one, two, three or more.

When the battery assembly 200 includes one battery module 201, all the battery cells 2011 of the battery module 201 together form the peripheral battery cell. In this case, the entire second heat exchange segment 12 and the first heat exchange segment 11 both exchange heat with the peripheral battery cell. Specifically, the second heat exchange segment 12 exchanges heat with the peripheral edge of the peripheral battery cell, and the first heat exchange segment 11 exchanges heat with the middle position of the peripheral battery cell.

When the battery assembly 200 includes a plurality of battery modules 201, the plurality of battery cells 2011, located on the most periphery of the battery assembly 200, of the plurality of battery modules 201 together form the peripheral battery cell. This can limit the heat exchange position of the second heat exchange segment 12, which thus is beneficial to the layout of the heat exchange flow channel.

In the above embodiment, when the battery assembly 200 includes one battery module 201, all the battery cells 2011 of the battery module 201 together form the peripheral battery cell. In this case, the entire second heat exchange segment 12 and the first heat exchange segment 11 exchange heat with the peripheral battery cell. Therefore, the specific structure and layout of the second heat exchange segment 12 and the first heat exchange segment 11 are not limited, thereby reducing the layout complexity of the first heat exchange flow channel 10. By disposing the plurality of battery cells 2011, located at the most periphery of the battery assembly 200, of the plurality of battery modules 201 to jointly form the peripheral battery cell, the heat exchange position of the second heat exchange segment 12 can be limited, which thus is beneficial to the layout of the heat exchange flow channel.

In the above embodiment, by disposing the plurality of battery cells 2011, located on the most periphery of the battery assembly 200, of the plurality of battery modules 201 to jointly form the peripheral battery cell, the heat exchange position of the second heat exchange segment 12 can be limited, which thus is beneficial to the layout of the heat exchange flow channel.

Referring to FIG. 3 and FIG. 10 again, the peripheral battery cell group includes a first group of battery cells 202, a second group of battery cells 203, and a third group of battery cells 204 arranged adjacent to each other. The first group of battery cells 202 includes a plurality of battery cells 2011 stacked in the third direction. The second group of battery cells 203 includes a plurality of battery cells 2011 stacked in the fifth direction. The third group of battery cells 204 includes a plurality of battery cells 2011 stacked in the fifth direction.

For example, as shown in FIG. 10, the third direction can be the thickness direction of the battery cell 2011, i.e., the X2 direction shown in FIG. 10, and the fifth direction is the thickness direction of the battery cell 2011, i.e., the Y2 direction shown in FIG. 10. Thus, the plurality of battery cells 2011 included in the first group of battery cells 202 are stacked in the thickness direction of the battery cell 2011, while the plurality of battery cells 2011 included in the second group of battery cells 203 are stacked in the length direction of the battery cell 2011. The plurality of battery cells 2011 included in the third group of battery cells 204 are stacked in the length direction of the battery cell 2011. As shown in FIG. 10, the first group of battery cells 202 is arranged at one end of both ends of the battery assembly 200 in the Y2 direction; and the second group of battery cells 203 and the third group of battery cells 204 are respectively arranged at both ends of the battery assembly 200 in the X1 direction.

The second heat exchange segment 12 includes the second heat exchange portion 121, the third heat exchange portion 122, and the fourth heat exchange portion 125 connected together; the second heat exchange portion 121 extends and is attached to the first group of battery cells 202 to enable heat exchange, and/or the third heat exchange portion 122 extends and is attached to the second group of battery cells 203 to enable heat exchange, and/or the fourth heat exchange portion 125 extends and is attached to the third group of battery cells 204 to enable heat exchange.

When the second heat exchange segment 12 is attached to the peripheral battery cells for heat exchange, only one of the second heat exchange portion 121, the third heat exchange portion 122, or the fourth heat exchange portion 125 may be attached to the peripheral battery cells. For example, the second heat exchange portion 121 is attached to the first group of battery cells 202 for heat exchange, or the third heat exchange portion 122 is attached to the second group of battery cells 203 for heat exchange, or the fourth heat exchange portion 125 is attached to the third group of battery cells 204 for heat exchange. Alternatively, two of the second heat exchange portion 121, the third heat exchange portion 122, or the fourth heat exchange portion 125 are attached to the peripheral battery cells. For example, the second heat exchange portion 121 is attached to the first group of battery cells 202 for heat exchange, and the third heat exchange portion 122 is attached to the second group of battery cells 203 for heat exchange. Or, the second heat exchange portion 121 is attached to the first group of battery cells 202 for heat exchange, and the fourth heat exchange portion 125 is attached to the third group of battery cells 204 for heat exchange; or the third heat exchange portion 122 is attached to the second group of battery cells 203 for heat exchange, and the fourth heat exchange portion 125 is attached to the third group of battery cells 204 for heat exchange. Alternatively, all the second heat exchange portion 121, the third heat exchange portion 122, and the fourth heat exchange portion 125 can be attached to the peripheral battery cells, for example, the second heat exchange portion 121 is attached to the first group of battery cells 202 for heat exchange, the third heat exchange portion 122 is attached to the second group of battery cells 203 for heat exchange, and the fourth heat exchange portion 125 is attached to the third group of battery cells 204 for heat exchange.

In the above embodiment, since the first group of battery cells 202, the second group of battery cells 203, and the third group of battery cells 204 are all the peripheral battery cell groups, and the peripheral battery cell groups are arranged at the most periphery of the battery assembly 200, closest to the side wall of the battery box 300, and have more heat exchange with the environment, the temperature thereof is relatively lower than that of the battery cells in other positions. Therefore, by disposing at least one of the second heat exchange portion 121, the third heat exchange portion 122, and the fourth heat exchange portion 125 to be attached to the peripheral battery cells for heat exchange, the heat exchange member 100 can stably and reliably cool or heat the peripheral battery cell groups, so that the battery assembly 200 can have a good heat exchange effect, the temperature distribution inside the battery assembly 200 is more uniform, and thus the battery 400 operates more stably.

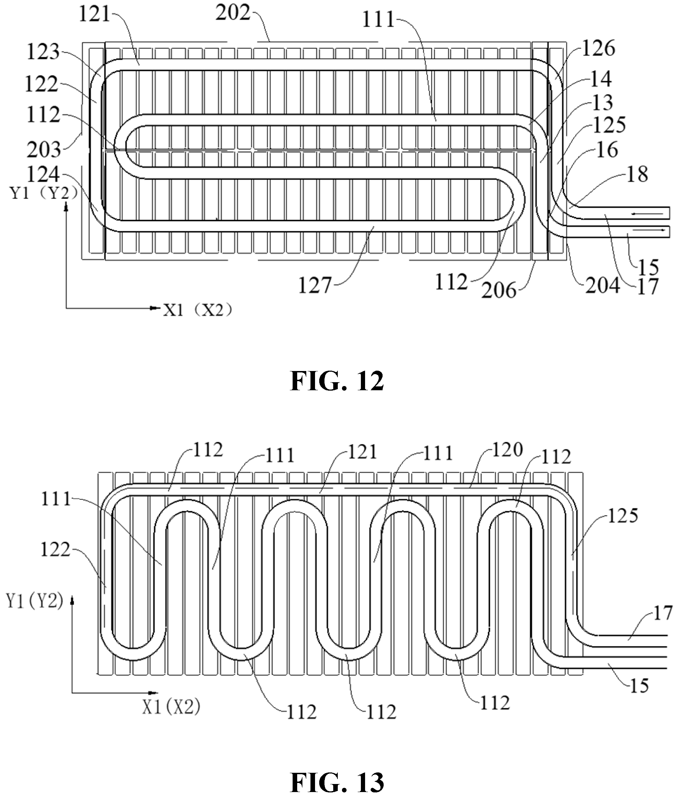

According to some embodiments of the present application, as shown in FIG. 12, the peripheral battery cell further comprises a fourth group of battery cells 205. The plurality of battery cells 2011 included in the fourth group of battery cells 205 are arranged in the third direction. The second heat exchange segment 12 further includes a fifth heat exchange portion 127, the fifth heat exchange portion 127 encloses at least part of the opening of the U-shaped region 120 formed by the second heat exchange portion 121, the third heat exchange portion 122, and the fourth heat exchange portion 125. The fifth heat exchange portion 127 extends and is attached to the fourth group of battery cells 205 to enable heat exchange.

In the above embodiment, the peripheral battery cell group also includes the fourth group of battery cells 205. The fourth group of battery cells 205 can be arranged opposite to the first group of battery cells 202 in the fifth direction. The fourth group of battery cells 205 are disposed on the side of the battery assembly 200 close to the side wall of the battery 400. For example, the fourth group of battery cells 205 and the first group of battery cells 202 can be arranged at the both ends of the battery assembly 200 in the Y2 direction, respectively. The fifth heat exchange portion 127 of the second heat exchange segment 12 is attached to the fourth group of battery cells 205. When the heat exchange fluid flows along the second heat exchange segment 12, the heat exchange fluid exchanges heat with the fourth battery cell group along the fifth heat exchange portion 127.

When the heat exchange member 100 exchanges heat with the battery assembly 200, the heat exchange fluid can first enter the second heat exchange segment 12. In the second heat exchange segment 12, the heat exchange fluid first flows into the fourth heat exchange portion 125 and flows in the fifth direction in the fourth heat exchange portion 125 to be attached to the third group of battery cells 204 for heat exchange. Then, the heat exchange fluid enters the second heat exchange portion 121 and flows in the third direction in the second heat exchange portion 121 to be attached to the first group of battery cells 202 for heat exchange. Next, the heat exchange fluid enters the third heat exchange portion 122 and flows in the fifth direction in the third heat exchange portion 122 to be attached to the second group of battery cells 203 for heat exchange. Finally, the heat exchange fluid enters the fifth heat exchange portion 127 and flows in the third direction to be attached to the fourth group of battery cells 205 for heat exchange. Finally, the heat exchange fluid flows back into the first heat exchange segment 11 to exchange heat with the battery cells 2011 located inside the peripheral battery cell group in the battery assembly 200. Of course, the heat exchange fluid can also flow into the first heat exchange segment 11 first and then flows into the second heat exchange segment 12 to exchange heat with the battery assembly 200, which will not be repeated herein.

In the above embodiment, the fifth heat exchange portion 127 is disposed in the second heat exchange segment 12 to be attached to the fourth group of battery cells 205. This allows the heat exchange member 100 to better match the heat dissipation of the battery cells 2011 at different positions in the battery 400 for the arrangement of the heat exchange flow channel. This makes the heat exchange member 100 have a better heat exchange effect on the battery assembly 200, thereby making the internal temperature distribution of the battery 400 more uniform during operation thereof and making the operation of the battery 400 more stable.

Referring to FIG. 3 and FIG. 10 again, in the embodiments of the present application, the second heat exchange portion 121 extends in the second direction, and the second direction is the same as the third direction. The third heat exchange portion 122 and the fourth heat exchange portion 125 extend in the first direction, and the first direction is the same as the fifth direction.

The battery module 201 includes a plurality of battery cells 2011 stacked sequentially in the third direction. The plurality of battery modules 201 are arranged sequentially in the fifth direction. Thus, the second heat exchange portion 121 extends in the stacking direction of the plurality of battery cells 2011, and the third heat exchange portion 122 and the fourth heat exchange portion 125 extend in the arrangement direction of the plurality of battery modules 201. That is, the second heat exchange portion 121 can exchange heat with the plurality of battery cells 2011 of one battery module 201, and the third heat exchange portion 122 and the fourth heat exchange portion 125 can exchange heat with the plurality of battery cells 2011 of the plurality of battery modules 201.

The plurality of battery cells 2011 are generally stacked in two ways, one way is to stack the battery cells 2011 in the thickness direction thereof, and the other way is to stack the battery cells 2011 in the length direction thereof. When the plurality of battery cells 2011 are stacked in the thickness direction of the battery cell 2011, the plurality of battery modules 201 are arranged sequentially in the length direction of the battery cell 2011; and when the plurality of battery cells 2011 are stacked in the length direction of the battery cell 2011, the plurality of battery modules 201 are arranged sequentially in the thickness direction of the battery cell 2011. Therefore, when the plurality of battery cells 2011 are stacked in the thickness direction of the battery cells 2011, the second heat exchange portion 121 can exchange heat with the plurality of battery cells 2011 of one battery module 201 in the thickness direction of the battery cells 2011, and the third heat exchange portion 122 and the fourth heat exchange portion 125 can exchange heat with the plurality of battery cells 2011 of the plurality of battery modules 201 in the length direction of the battery cells 2011; and when the plurality of battery cells 2011 are stacked in the length direction of the battery cells 2011, the second heat exchange portion 121 can exchange heat with the plurality of battery cells 2011 of one battery module 201 in the length direction of the battery cells 2011, and the third heat exchange portion 122 and the fourth heat exchange portion 125 can exchange heat with the battery cells 2011 of the plurality of battery modules 201 in the width direction of the battery cells 2011, thus ensuring the heat exchange efficiency and effect.

Referring to FIG. 10 again, the second direction is the thickness direction of the battery cell 2011, i.e., the X2 direction shown in FIG. 10. The first direction is the length direction of the battery cell 2011, i.e., the Y2 direction shown in FIG. 10. Thus, the plurality of battery cells 2011 included in the battery module 201 are stacked in the thickness direction of the battery cell 2011, and the plurality of battery modules 201 included in the battery assembly 200 are arranged sequentially in the length direction of the battery cell 2011. Thus, the second heat exchange portion 121 can extend in the thickness direction of the battery cell 2011 to achieve heat exchange with the plurality of battery cells 2011. The third heat exchange portion 122 and the fourth heat exchange portion 125 can extend in the length direction of the battery cell 2011 and exchange heat with the battery cell 2011. Thus, the arrangement of the first heat exchange flow channel 10 of the heat exchange member 100 can be more reasonable, and the heat exchange effect of the heat exchange member 100 on the battery assembly 200 can be enhanced.

In the above embodiment, the second heat exchange portion 121 is disposed to extend in the second direction which is the same as the third direction, and the third heat exchange portion 122 and the fourth heat exchange portion 125 are disposed to extend in the first direction which is the same as the fifth direction, so that the extension directions of the second heat exchange portion 121, the third heat exchange portion 122, and the fourth heat exchange portion 125 can be designed according to the arrangement mode of the battery module 201. As a result, the arrangement mode of the first heat exchange flow channel 10 can better meet the heat exchange requirements of the battery assembly 200, thereby improving the heat exchange efficiency.

Referring to FIG. 13 again, in the embodiment of the present application, the first heat exchange portion 111 extends in the first direction which is the same as the fifth direction.

In this embodiment, the first heat exchange portion 111, the third heat exchange portion 122, and the fourth heat exchange portion 125 can all extend in the first direction, and the second heat exchange portion 121 extends in the second direction. In this way, the plurality of first heat exchange portions 111 connected together can form an S-shaped heat exchange flow channel extending in the second direction.

The first direction can be the length direction of the battery cell 2011, as shown in FIG. 13, the first direction is the length direction of the battery cell 2011, i.e., the Y2 direction shown in FIG. 13. Thus, the first heat exchange portion 111 extends in the length direction of the battery cell 2011 and exchanges heat with the battery cell 2011, so that the heat exchange area between the first heat exchange portion 111 and the battery cell 2011 can be increased, thereby improving the heat exchange effect of the battery cell 2011. Alternatively, the first direction is the thickness direction of the battery cell 2011, so that heat exchange with the plurality of battery cells 2011 can be achieved.

In the above embodiment, the first heat exchange portion 111 is disposed to extend in the first direction which is the same as the fifth direction, so that the first heat exchange portion 111 can extend in the arrangement direction of the plurality of battery modules 201, and then the first heat exchange portion 111 can perform heat exchange with the plurality of battery cells 2011 of the plurality of battery modules 201. When the plurality of battery modules 201 are arranged sequentially in the thickness direction of the battery cells 2011, the first heat exchange portion 111 can perform heat exchange with the plurality of battery cells 2011. When the plurality of battery modules 201 are arranged sequentially in the length direction of the battery cells 2011, the heat exchange area between the first heat exchange portion 111 and the battery cell 2011 increases, thereby enhancing the heat exchange effect of the battery cell 2011.

In some embodiments of the present application, the first heat exchange portion 111 extends in the second direction which is the same as the third direction.

The first heat exchange portion 111 and the second heat exchange portion 121 extend in the same direction, and the first heat exchange portion 111 and the second heat exchange portion 121 are spaced apart from each other in parallel.

For example, as shown in FIG. 12, the second direction is the thickness direction of the battery cell 2011, that is, the X2 direction shown in FIG. 12. In this case, both the first heat exchange portion 111 and the second heat exchange portion 121 can exchange heat with the plurality of battery cells 2011. This helps to reduce the number of the first heat exchange portions 111, reduce the number of bends in the first heat exchange flow channel 10, reduce the pressure drop of the heat exchange fluid in the first heat exchange flow channel 10, and improve the heat exchange efficiency.

In the above embodiment, by disposing the first heat exchange portion 111 to extend in the second direction, the number of the first heat exchange portions 111 can be reduced, and the number of bends of the first heat exchange flow channel 10 can be reduced, thereby reducing the pressure drop of the heat exchange fluid in the first heat exchange flow channel 10, and improving the heat exchange efficiency.

Referring to FIG. 10 to FIG. 15 again, in the embodiment of the present application, the battery assembly 200 includes a plurality of battery modules 201 arranged sequentially in the fifth direction. At least one battery module 201 located at both ends in the fifth direction is the first group of battery cells 202. The second heat exchange portion 121 and at least one first heat exchange portion 111 of the first heat exchange segment 11 are jointly attached to the first group of battery cells 202 so as to perform heat exchange.

The above expression "at least one battery module 201 at both ends in the fifth direction is the first group of battery cells 202" is intended to indicate that one of the battery modules 201 located at both ends in the fifth direction can be formed as the first group of battery cells 202, or the two battery modules 201 located at both ends in the fifth direction can both be formed as the first group of battery cells 202.

The above expression "the second heat exchange portion 121 and at least one first heat exchange portion 111 of the first heat exchange segment 11 are jointly attached to the first group of battery cells 202" is intended to indicate that the first group of battery cells 202 can be attached to the second heat exchange portion 121 and one first heat exchange portion 111 for heat exchange, or can be attached to the second heat exchange portion 121 and the plurality of first heat exchange portions 111 for heat exchange. For example, the number of the first heat exchange portions 111 attached to the first group of battery cells 202 for heat exchange can be two, three or more.

In the above embodiment, by disposing the second heat exchange portion 121 and at least one first heat exchange portion 111 of the first heat exchange segment 11 to be jointly attached to the first group of battery cells 202 for heat exchange, the heat exchange area between the first heat exchange flow channel 10 and the first group of battery cells 202 can be increased. Meanwhile, the temperature difference at different positions of the first group of battery cells 202 can be balanced, thereby improving the temperature uniformity of the first group of battery cells 202.

According to some embodiments of the present application, as shown in FIG. 10, a plurality of first heat exchange portions 111 are disposed and sequentially bent to be connected in the first direction (e.g., the Y1 direction shown in FIG. 10); and the second heat exchange portion 121 and the first heat exchange portion 111 furthest from the second heat exchange portion 121 along the sequentially connected connection line exchange heat with the first group of battery cells 202.

The first heat exchange portion 111 and the second heat exchange portion 121 both extend in the second direction (e.g., the X1 direction shown in FIG. 10). The first heat exchange portion 111 and the second heat exchange portion 121 are connected through the third heat exchange portion 122. The third heat exchange portion 122 is connected to the first heat exchange portion, furthest from the second heat exchange portion 121 in the first direction, in the plurality of first heat exchange portions 111. Thus, the second heat exchange portion 121 and the first heat exchange portion 111 furthest from the second heat exchange portion 121 along the sequentially connected connection line exchange heat with the first group of battery cells 202. In other words, the second heat exchange portion 121 and the first heat exchange portion 111 closest to the second heat exchange portion 121 exchange heat with the first group of battery cells 202.

When the battery assembly 200 is heated, the high-temperature heat exchange fluid can enter the second heat exchange portion 121 through the fourth heat exchange portion 125. At this moment, the temperature of the heat exchange fluid in the second heat exchange portion 121 is relatively high. Then, the heat exchange fluid circulates through the third heat exchange portion 122 into the first heat exchange segment 11. In the first heat exchange segment 11, the heat exchange fluid first enters the first heat exchange portion 111 furthest from the second heat exchange portion 121, and then sequentially passes through the plurality of first heat exchange portions 111 to exchange heat with the battery assembly 200 until the heat exchange fluid flows into the furthest first heat exchange portion 111 in the fluid flow direction. The first heat exchange portion 111 is closest to the second heat exchange portion 121 in a straight line and exchanges heat with the first group of battery cells 202 together with the second heat exchange portion 121. The temperature of the heat exchange fluid entering the second heat exchange portion 121 is relatively high, approaching the inlet temperature of the first heat exchange flow channel 10. The temperature of the heat exchange fluid in the first heat exchange portion 111 closest to the second heat exchange portion 121 is relatively low, approaching the outlet temperature of the first heat exchange flow channel 10.

When the battery assembly 200 is cooled, the low-temperature heat exchange fluid can enter the first heat exchange segment 11 first, and the heat exchange fluid in the first heat exchange segment 11 first enters the first heat exchange portion 111 arranged adjacent to the second heat exchange portion 121 to exchange heat with the first group of battery cells 202, sequentially flows in the plurality of first heat exchange portions 111 to exchange heat with the battery assembly 200, enters the third heat exchange portion 122 through the first heat exchange portion 111 furthest from the second heat exchange portion 121, and circulates into the second heat exchange portion 121 through the third heat exchange portion 122. During heat exchange, the temperature of the heat exchange fluid in the first heat exchange portion 111 closest to the second heat exchange portion 121 is relatively low, approaching the inlet temperature of the first heat exchange flow channel 10. The temperature of the heat exchange fluid entering the second heat exchange portion 121 is relatively high, approaching the outlet temperature of the first heat exchange flow channel 10.

The second heat exchange portion 121 and the adjacent first heat exchange portion 111 jointly exchange heat with the first group of battery cells 202, which can balance the temperature difference of the first group of battery cells 202, thereby improving the temperature uniformity of the first group of battery cells 202. Meanwhile, due to heat dissipation of the peripheral side of the battery assembly 200 with the environment, the first group of battery cells 202 dissipate more heat than the battery cells 2011 located in the middle of the battery assembly 200, resulting in a lower temperature. Therefore, the higher-temperature fluid flowing in the second heat exchange portion 121 exchanges heat with the first group of battery cells 202, which can increase the temperature of the first group of battery cells 202 and make up for the heat loss of the first group of battery cells 202 caused by heat exchange with the environment, thereby improving the temperature uniformity of the first group of battery cells 202 and the remaining battery cells 2011.

The temperature at the edge of the first group of battery cells 202 is relatively lower than that on the opposite side. Consequently, the first group of battery cells 202 exchange heat with the second heat exchange portion 121 and the first heat exchange portion 111 furthest from the second heat exchange portion 121 along the sequentially connected connection line, which can balance the temperature difference between the two sides of the first group of battery cells 202, thereby improving the temperature uniformity of the first group of battery cells 202.

In the above embodiment, by disposing the second heat exchange portion 121 and the first heat exchange portion 111, furthest from the second heat exchange portion 121 along the sequentially connected connection line to exchange heat with the first group of battery cells 202, the second heat exchange portion 121 and the adjacent first heat exchange portion 111 exchange heat with the first group of battery cells 202, which allows the second heat exchange portion 121 to exchange heat with the edge of the first group of battery cells 202, and the first heat exchange portion 111 to exchange heat with the other side of the first group of battery cells 202. The temperature difference between the heat exchange fluid in the second heat exchange portion 121 and the fluid in the first heat exchange portion 111 is large, and the heat exchange temperature of the first group of battery cells 202 is approximately the average temperature of the second heat exchange portion 121 and the adjacent first heat exchange portion 111, which thus can balance the temperature difference of the first group of battery cells 202, thereby improving the temperature uniformity of the first group of battery cells 202.

According to some embodiments of the present application, as shown in FIG. 3, the second heat exchange segment 12 includes the second heat exchange portion 121, the third heat exchange portion 122, and the fourth heat exchange portion 125 connected together, the first end of the third heat exchange portion 122 is connected to the second heat exchange portion 121 at an angle, and the second end of the third heat exchange portion 122 is connected to the first heat exchange segment 11 at an angle.

In some embodiments, the second heat exchange portion 121 extends and is attached to the first group of battery cells 202 to enable heat exchange, the third heat exchange portion 122 extends and is attached to the second group of battery cells 203 to enable heat exchange, and the fourth heat exchange portion 125 extends and is attached to the third group of battery cells 204 to enable heat exchange.

Since the plurality of battery cells 2011 included in the first group of battery cells 202 are stacked in the third direction, the plurality of battery cells 2011 included in the second group of battery cells 203 are stacked in the fifth direction, and the plurality of battery cells 2011 included in the third group of battery cells 204 are stacked in the fifth direction. Thus, the second heat exchange portion 121 extends and is attached to the first group of battery cells 202, that is, the second heat exchange portion 121 extends in the third direction and performs heat exchange with the first group of battery cells 202; the third heat exchange portion 122 extends and is attached to the second group of battery cells 203, that is, the third heat exchange portion 122 extends in the fifth direction and performs heat exchange with the second group of battery cells 203; and the fourth heat exchange portion 125 extends and is attached to the third group of battery cells 204, that is, the fourth heat exchange portion 125 extends in the fifth direction and performs heat exchange with the third group of battery cells.

In the above embodiment, the second heat exchange portion 121 extends and is attached to the first group of battery cells 202 to enable heat exchange, the third heat exchange portion 122 extends and is attached to the second group of battery cells 203 to enable heat exchange, and the fourth heat exchange portion 125 extends and is attached to the third group of battery cells 204 to enable heat exchange, so that the second heat exchange segment 12 can perform heat exchange with the peripheral edge of the battery assembly 200, thereby balancing the temperature difference of the battery assembly 200 caused by heat dissipation.

In some other embodiments, the second heat exchange portion 121 is attached to the second group of battery cells 203 to enable heat exchange, and the third heat exchange portion 122 is attached to the first group of battery cells 202 to enable heat exchange.

Since the plurality of battery cells 2011 included in the first group of battery cells 202 are stacked in the third direction, the plurality of battery cells 2011 included in the second group of battery cells 203 are stacked in the fifth direction. The second heat exchange portion 121 is attached to the second group of battery cells 203, the third heat exchange portion 122 is attached to the first group of battery cells 202, that is, the second heat exchange portion 121 extends in the fifth direction and is attached to the second group of battery cells 203 for heat exchange, and the third heat exchange portion 122 extends in the third direction and is attached to the first group of battery cells 202 for heat exchange.

In the above embodiment, the second heat exchange portion 121 is attached to the second group of battery cells 203 to enable heat exchange, and the third heat exchange portion 122 is attached to the first group of battery cells 202 to enable heat exchange, which allows the heat exchange member 100 to design the heat exchange flow channel based on the arrangement of the plurality of battery cells 2011, so that the applicability of the heat exchange member 100 can be enhanced, and the heat exchange member can meet the cooling requirements of different batteries 400, thereby improving the heat exchange efficiency and temperature equalization effect of the battery 400.

According to some embodiments of the present application, as shown in FIG. 3 and FIG. 10, the first heat exchange flow channel 10 further includes the third heat exchange segment 13, the third heat exchange segment 13 is connected to the end of the first heat exchange segment 11 away from the second heat exchange segment 12 in the fluid flow direction, and is connected to the first heat exchange segment 11 at an angle; and the battery assembly 200 is also provided with a fifth group of battery cells 206, a plurality of battery cells 2011 included in the fifth group of battery cells 206 are stacked in the fifth direction, and the fifth group of battery cells 206 are arranged adjacent to the third group of battery cells 204.

In some embodiments, both the third heat exchange segment 13 and the fourth heat exchange segment 125 are attached to the third group of battery cells 204 to enable heat exchange.

The third heat exchange segment 13 is in communication with the end of the first heat exchange segment 11 away from the second heat exchange segment 12 in the fluid flow direction. The fourth heat exchange portion 125, the second heat exchange portion 121, and the third heat exchange portion 122 are connected in sequence to form a U-shaped structure, and the other end of the third heat exchange portion 122 is bent to be connected to the first heat exchange segment 11. Thus, the third heat exchange segment 13 and the fourth heat exchange portion 125 can be used as the liquid input end and the liquid output end of the first heat exchange flow channel 10, respectively. When the third heat exchange segment 13 serves as the liquid input end of the first heat exchange flow channel 10, the fourth heat exchange portion 125 can serve as the liquid output end of the first heat exchange flow channel 10; and when the third heat exchange segment 13 serves as the liquid output end of the first heat exchange flow channel 10, the fourth heat exchange portion 125 can serve as the liquid input end of the first heat exchange flow channel 10.

The flow directions of the heat exchange fluid in the third heat exchange segment 13 and the fourth heat exchange portion 125 are opposite, resulting in the greatest temperature difference. For example, when liquid is introduced from the fourth heat exchange portion 125 to heat and keep the battery 400 warm, the temperature of the fourth heat exchange portion 125 is the highest, and the temperature of the third heat exchange segment 13 is the lowest. When the battery 400 is cooled for heat exchange, the temperature of the fourth heat exchange portion 125 is the lowest, and the temperature of the third heat exchange segment 13 is the highest. Therefore, when the third heat exchange segment 13 and the fourth heat exchange portion 125 are both attached to the third group of battery cells 204 to enable heat exchange, the temperature difference of the third group of battery cells 204 can be balanced, so that the temperature uniformity of the third group of battery cells 204 can be improved.

In some other embodiments, the third heat exchange segment 13 is attached to the fifth group of battery cells 206 to enable heat exchange, and the fourth heat exchange portion 125 is attached to the third group of battery cells 204 to enable heat exchange.

In this embodiment, both the third heat exchange segment 13 and the fourth heat exchange portion 125 extend in the fifth direction. When the fifth direction is the length direction of the battery cell 2011, the contact area between the third heat exchange segment 13 and the fourth heat exchange segment 31 and the battery cell 2011 can be increased, thereby increasing the heat exchange effect on the fifth group of battery cells 206 and the third group of battery cells 204. Meanwhile, since the fifth group of battery cells 206 and the third group of battery cells 204 are arranged adjacent to each other, the third heat exchange segment 13 is attached to the fifth group of battery cells 206 to enable heat exchange, and the fourth heat exchange portion 125 is attached to the third group of battery cells 204 to enable heat exchange. This also balances the temperature difference caused by the water temperature difference at the edge of the battery assembly 200.

In some other embodiments, the third heat exchange segment 13 is attached to the third group of battery cells 204 to enable heat exchange, and the fourth heat exchange portion 125 is arranged on the outer side of the battery assembly 200 in the third direction.

The fourth heat exchange portion 125 does not exchange heat with the battery assembly 200. The third heat exchange portion 122 extends in the fifth direction and is attached to the third group of battery cells 204 for heat exchange. Therefore, when the fifth direction is the length direction of the battery cell 2011, the contact area between the third heat exchange segment 13 and the third group of battery cells 204 can be increased, thereby improving the heat exchange effect of the heat exchange member 100.

In the above embodiment, by disposing both the third heat exchange segment 13 and the fourth heat exchange portion 125 to be attached to the third group of battery cells 204 for heat exchange, the temperature difference of the third group of battery cells 204 can be balanced, and the temperature uniformity of the third group of battery cells 204 can be improved. By disposing the third heat exchange segment 13 to be attached to the third group of battery cells 204 for heat exchange, and arranging the fourth heat exchange portion 125 on the outer side of the battery assembly 200 in the third direction, the heat exchange process can be simplified, and the production difficulty of the heat exchange member 100 can be reduced.

According to some embodiments of the present application, as shown in FIG. 10 to FIG. 15, the first heat exchange portion 111 of the first heat exchange segment 11 and the second heat exchange portion 121 of the second heat exchange segment 12 both extend in the second direction (e.g., the X1 direction shown in FIG. 10) and are spaced apart from each other in the first direction (e.g., the Y1 direction shown in FIG. 10). One battery module 201 is attached to one second heat exchange portion 121 and at least one first heat exchange portion 111 to enable heat exchange; or, one battery module 201 is attached to at least two first heat exchange portions 111 to enable heat exchange.

In some embodiments, one battery module 201 is attached to one second heat exchange portion 121 and at least one first heat exchange portion 111 to enable heat exchange. The number of the first heat exchange portions 111 that exchanges heat with the same battery module 201 together with the second heat exchange portion 121 may be one, two, three, or more. In some other embodiments, one battery module 201 is attached to at least two first heat exchange portions 111 to enable heat exchange. For example, when one battery module 201 exchanges heat only with the first heat exchange portion 111, the number of the first heat exchange portions 111 may be two, three, four, or more. In other words, one battery module 201 exchanges heat with at least two heat exchange portions, which increases the heat exchange area, thereby improving the heat exchange effect, and also improves the temperature uniformity of the battery module 201.

In the above embodiment, one battery module 201 is disposed to be attached to one second heat exchange portion 121 and at least one first heat exchange portion 111 to enable heat exchange; or, one battery module 201 is disposed to be attached to at least two first heat exchange portions 111 to enable heat exchange, so that one battery module 201 can exchange heat with at least two heat exchange portions, which thus can increase the heat exchange area, thereby improving the heat exchange effect.

According to some embodiments of the present application, the total number of the first heat exchange portion 111 and the second heat exchange portion 121 of the first heat exchange flow channel 10 is greater than or equal to 4.

The total number of the first heat exchange portion 111 and the second heat exchange portion 121 of the first heat exchange flow channel 10 can be 4, 5, 6, 7, or more.

In the above embodiment, the total number of the first heat exchange portion 111 and the second heat exchange portion 121 of the first heat exchange flow channel 10 is greater than or equal to 4, which can increase the length of each heat exchange flow channel, and reduce the total number of the heat exchange flow channel, thereby improving the sealing performance of the heat exchange member 100.

According to some embodiments of the present application, as shown in FIG. 3 and FIG. 10, two first heat exchange flow channels 10 are disposed. Each first heat exchange flow channel 10 includes three first heat exchange portions 111, one second heat exchange portion 121, one third heat exchange portion 122, one fourth heat exchange portion 125, and one third heat exchange segment 13. Four battery modules 201 are disposed. The battery module 201 located at the end in the fifth direction is attached to one first heat exchange portion 111 and one second heat exchange portion 121 to enable heat exchange. Each of the remaining battery modules 201 is attached to two first heat exchange portions 111 to enable heat exchange. The third heat exchange portion 122 connects the second heat exchange portion 121 and the first heat exchange portion 111 furthest from the second heat exchange portion 121, and is attached to the second group of battery cells 203 to enable heat exchange. The third heat exchange segment 13 is connected to the first heat exchange portion 111 closest to the second heat exchange portion 121. The third heat exchange segment 13 and/or the fourth heat exchange portion 125 are/is attached to the third group of battery cells 204 to enable heat exchange.

For the four battery modules 201, since the peripheral edge of the battery assembly 200 dissipates more heat, the temperature of the two first group of battery cells 202 located at both ends in the fifth direction is lower than the temperature of the two battery modules 201 in the middle; and the temperature of the second group of battery cells 203 and the third group of battery cells 204 located at both ends in the third direction is lower than the temperature of the battery cells 2011 in other positions.

The battery module 201 located at the end in the fifth direction is attached to the first heat exchange portion 111 closest to the second heat exchange portion 121 and the second heat exchange portion 121, and each of the remaining battery modules 201 is attached to the other two first heat exchange portions 111. When the battery assembly 200 is cooled or heated, the temperature of the heat exchange fluid flowing in the second heat exchange portion 121 is relatively high, approaching the inlet temperature of the first heat exchange flow channel 10, the temperature of the first heat exchange portion 111 closest to the second heat exchange portion 121 is relatively low, approaching the outlet temperature of the first heat exchange flow channel 10, the temperature of the remaining two first heat exchange portions 111 falls between the two temperatures, and the temperature difference of the three first heat exchange portions 111 is not significant. Therefore, the average temperature of the second heat exchange portion 121 and the first heat exchange portion 111 closest to the second heat exchange portion 121 is higher than the average temperature of the remaining two first heat exchange portions 111. Consequently, the average heat exchange temperature of the battery module 201 located at the end in the fifth direction is relatively high, which thus can compensate for the temperature difference caused by heat dissipation.

In addition, the third heat exchange segment 13 and/or the fourth heat exchange portion 125 are/is attached to the third group of battery cells 204 to enable heat exchange, it is possible that only the third heat exchange segment 13 is attached to the third group of battery cells 204 for heat exchange, or only the fourth heat exchange portion 125 is attached to the third group of battery cells 204 for heat exchange, or both the third heat exchange segment 13 and the fourth heat exchange portion 125 are attached to the third group of battery cells 204 for heat exchange.

For example, as shown in FIG. 10, the fifth direction is the length direction of the battery cell 2011, i.e., the Y2 direction shown in the figure, and the third direction is the thickness direction of the battery cell 2011, i.e., the X2 direction shown in the figure. The plurality of battery cells 2011 included in the four battery modules 201 extend in the thickness direction of the battery cells 2011 and are spaced apart from each other in the length direction of the battery cells 2011; and the two first heat exchange flow channels 10 are symmetrically arranged in the Y2 direction and exchange heat with the two battery modules 201 respectively.

Taking the first heat exchange flow channel 10 arranged on the side away from the origin of coordinates in the Y2 direction as an example, the first heat exchange flow channel 10 includes one second heat exchange portion 121, three first heat exchange portions 111, one third heat exchange portion 122, one fourth heat exchange portion 125, and one third heat exchange segment 13. The second heat exchange portion 121 and the first heat exchange portions 111a, 111b, and 111c extend in the thickness direction of the battery cell 2011 and are arranged sequentially from the side away from the origin of coordinates to the side close to the origin of coordinates in the Y2 direction. The first heat exchange portions 111a, 111b, and 111c are connected in sequence, and the second heat exchange portion 121 and the first heat exchange portion 111a exchange heat with the first group of battery cells 202. The first heat exchange portions 111b and 111c exchange heat with the battery module 201 adjacent to the first group of battery cells 202. The third heat exchange portion 122 extends in the length direction of the battery cell 2011 and is connected between the end of the second heat exchange portion 121 close to the origin of coordinates in the X2 direction and the first heat exchange portion 111c, for heat exchange with the second group of battery cells 203; the fourth heat exchange portion 125 is connected to the end of the second heat exchange portion 121 away from the origin of coordinates in the X2 direction and extends in the length direction of the battery cell 2011 to a position close to the first heat exchange portion 111c; the third heat exchange segment 13 is connected to the end of the first heat exchange portion 111a away from the origin of coordinates in the X1 direction, extends in the length direction of the battery cell 2011 to a position close to the first heat exchange portion 111c, and exchanges heat with the third group of battery cells 204.

In the above embodiment, the four battery modules 201 are disposed to match two first heat exchange flow channels 10, and each first heat exchange flow channel 10 includes three first heat exchange portions 111 and one second heat exchange portion 121, so that each battery module 201 can exchange heat with the two heat exchange portions. In this way, the temperature uniformity of each battery module 201 can be improved, thereby improving the temperature uniformity of the entire battery 400.

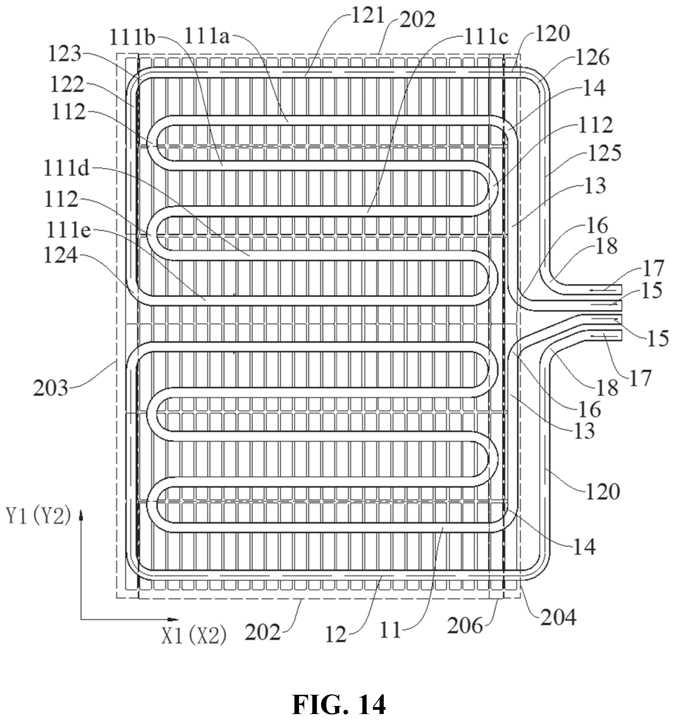

According to some embodiments of the present application, as shown in FIG. 14, two first heat exchange flow channels 10 are disposed. Each first heat exchange flow channel 10 includes five first heat exchange portions 111, one second heat exchange portion 121, one third heat exchange portion 122, one fourth heat exchange portion 125, and one third heat exchange segment 13. Six battery modules 201 are disposed. The battery module 201 located at the end in the fifth direction is attached to one first heat exchange portion 111 and one second heat exchange portion 121 to enable heat exchange. Each of the remaining battery modules 201 is attached to two first heat exchange portions 111 to enable heat exchange. The third heat exchange portion 122 is connected to the second heat exchange portion 121 and the first heat exchange portion 111 furthest from the second heat exchange portion 121, and is attached to the second group of battery cells 203 to enable heat exchange. The third heat exchange segment 13 is connected to the first heat exchange portion 111 closest to the second heat exchange portion 121. The third heat exchange segment 13 and/or the fourth heat exchange portion 125 are/is attached to the third group of battery cells 204 to enable heat exchange.

For six battery modules 201 matched with two first heat exchange flow channels 10, each first heat exchange flow channel 10 needs to exchange heat with three battery modules 201. Each first heat exchange flow channel 10 includes five first heat exchange portions 111 and one second heat exchange portion 121, so that each battery cell 201 exchanges heat with two heat exchange portions.

The battery module 201 located at the end in the fifth direction is attached to the first heat exchange portion 111 closest to the second heat exchange portion 121 and the second heat exchange portion 121, and each of the remaining battery modules 201 is attached to the other two first heat exchange portions 111. When the battery assembly 200 is cooled or heated, the temperature of the heat exchange fluid flowing in the second heat exchange portion 121 is relatively high, approaching the inlet temperature of the first heat exchange flow channel 10, the temperature of the first heat exchange portion 111 closest to the second heat exchange portion 121 is relatively low, approaching the outlet temperature of the first heat exchange flow channel 10, the temperature of the remaining four first heat exchange portions 111 falls between the two temperatures, and the temperature difference of the five first heat exchange portions 111 is not significant. Consequently, the average temperature of the second heat exchange portion 121 and the first heat exchange portion 111 closest to the second heat exchange portion 121 is higher than the average temperature of the remaining two first heat exchange portions 111. Thus, the average heat exchange temperature corresponding to the battery module 201 at the end in the fifth direction is relatively high, thereby compensating for the temperature difference caused by heat dissipation.

The third heat exchange segment 13 and/or the fourth heat exchange portion 125 are/is attached to the third group of battery cells 204 to enable heat exchange, it can be understood that it is possible that only the third heat exchange segment 13 is attached to the third group of battery cells 204 for heat exchange, or only the fourth heat exchange portion 125 is attached to the third group of battery cells 204 for heat exchange, or both the third heat exchange segment 13 and the fourth heat exchange portion 125 are attached to the third group of battery cells 204 for heat exchange.

For example, as shown in FIG. 14, the fifth direction is the length direction of the battery cell 2011, i.e., the Y2 direction shown in the figure, and the third direction is the thickness direction of the battery cell 2011, i.e., the X2 direction shown in the figure. The plurality of battery cells 2011 included in the six battery module 201 extend in the thickness direction of the battery cells 2011 and are spaced apart from each other in the length direction of the battery cells 2011; and the two first heat exchange flow channels 10 are symmetrically arranged in the Y2 direction and exchange heat with the three battery modules 201 respectively.

Taking the first heat exchange flow channel 10 arranged on the side away from the origin of coordinates in the Y2 direction as an example, the first heat exchange flow channel 10 includes one second heat exchange portion 121, five first heat exchange portions 111, one third heat exchange portion 122, one fourth heat exchange portion 125, and one third heat exchange segment 13. The second heat exchange portion 121 and the first heat exchange portions 111a, 111b, 111c, 111d, and 111e extend in the thickness direction of the battery cell 2011 and are arranged sequentially from the side away from the origin of coordinates to the side close to the origin of coordinates in the Y2 direction. The first heat exchange portions 111a, 111b, 111c, 111d, and 111e are connected in sequence, and the second heat exchange portion 121 and the first heat exchange portion 111a exchange heat with the first group of battery cells 202. The first heat exchange portions 111b and 111c exchange heat with the battery module 201 adjacent to the first group of battery cells 202. The first heat exchange portions 111d and 111e exchange heat with the battery module 201 away from the first group of battery cells 202. The third heat exchange portion 122 extends in the length direction of the battery cell 2011 and is connected between the end of the second heat exchange portion 121 close to the origin of coordinates in the X2 direction and the first heat exchange portion 111e, for heat exchange with the second group of battery cells 203; the fourth heat exchange portion 125 is connected to the end of the second heat exchange portion 121 away from the origin of coordinates in the X2 direction and extends in the length direction of the battery cell 2011 to a position close to the first heat exchange portion 111e; the third heat exchange segment 13 is connected to the end of the first heat exchange portion 111a away from the origin of coordinates in the X2 direction, extends in the length direction of the battery cell 2011 to a position close to the first heat exchange portion 111e, and exchanges heat with the third group of battery cells 204.

In the above embodiment, the six battery modules 201 are disposed to match two first heat exchange flow channels 10, and each first heat exchange flow channel 10 includes five first heat exchange portions 111 and one second heat exchange portion 121, so that it can guarantee that each battery module 201 can exchange heat with the two heat exchange portions, thereby ensuring the temperature uniformity of each battery module 201.

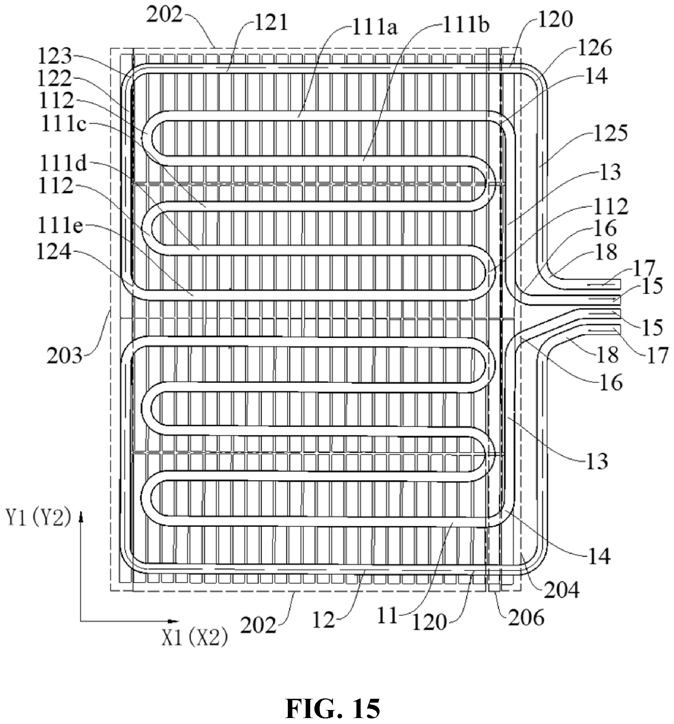

According to some embodiments of the present application, as shown in FIG. 15, two first heat exchange flow channels 10 are disposed. Each first heat exchange flow channel 10 includes five first heat exchange portions 111, one second heat exchange portion 121, one third heat exchange portion 122, one fourth heat exchange portion 125, and one third heat exchange segment 13. Four battery modules 201 are disposed. The battery module 201 located at the end in the fifth direction is attached to two first heat exchange portions 111 and one second heat exchange portion 121 to enable heat exchange. Each of the remaining battery modules 201 is attached to three first heat exchange portions 111 to enable heat exchange. The third heat exchange portion 122 is connected to the second heat exchange portion 121 and the first heat exchange portion 111 furthest from the second heat exchange portion 121, and is attached to the second group of battery cells 203 to enable heat exchange. The third heat exchange segment 13 is connected to the first heat exchange portion 111 closest to the second heat exchange portion 121. The third heat exchange segment 13 and/or the fourth heat exchange portion 125 are/is attached to the third group of battery cells 204 to enable heat exchange.

For four battery modules 201 matched with two first heat exchange flow channels 10, each first heat exchange flow channel 10 needs to exchange heat with two battery modules 201. Each first heat exchange flow channel 10 includes five first heat exchange portions 111 and one second heat exchange portion 121, so that each battery cell 201 exchanges heat with three heat exchange portions.

The battery module 201 located at the end in the fifth direction is attached to two first heat exchange portions 111 closest to the second heat exchange portion 121 and the second heat exchange portion 121 for heat exchange, and each of the remaining battery modules 201 is attached to the other three first heat exchange portions 111 for heat exchange. When the battery assembly 200 is cooled or heated, the temperature of the heat exchange fluid flowing in the second heat exchange portion 121 is relatively high, approaching the inlet temperature of the first heat exchange flow channel 10, the temperature of two first heat exchange portions 111 closest to the second heat exchange portion 121 is relatively low, approaching the outlet temperature of the first heat exchange flow channel 10, the temperature of the remaining three first heat exchange portions 111 falls between the two temperatures, and the temperature difference of the five first heat exchange portions 111 is not significant. Consequently, the average temperature of the second heat exchange portion 121 and two first heat exchange portions 111 closest to the second heat exchange portion 121 is higher than the average temperature of the remaining two first heat exchange portions 111. Thus, the average heat exchange temperature corresponding to the battery module 201 at the end in the fifth direction is relatively high, thereby balancing the temperature difference caused by heat dissipation.

The third heat exchange segment 13 and/or the fourth heat exchange portion 125 are/is attached to the third group of battery cells 204 to enable heat exchange, it can be understood that it is possible that only the third heat exchange segment 13 is attached to the third group of battery cells 204 for heat exchange, or only the fourth heat exchange portion 125 is attached to the third group of battery cells 204 for heat exchange, or both the third heat exchange segment 13 and the fourth heat exchange portion 125 are attached to the third group of battery cells 204 for heat exchange.

As shown in FIG. 15, the fifth direction is the length direction of the battery cell 2011, i.e., the Y2 direction shown in the figure, and the third direction is the thickness direction of the battery cell 2011, i.e., the X2 direction shown in the figure. The plurality of battery cells 2011 included in the four battery modules 201 extend in the thickness direction of the battery cells 2011 and are spaced apart from each other in the length direction of the battery cells 2011; and the two first heat exchange flow channels 10 are symmetrically arranged in the Y2 direction and exchange heat with the two battery modules 201 respectively.

Taking the first heat exchange flow channel 10 arranged on the side away from the origin of coordinates in the Y2 direction as an example, the first heat exchange flow channel 10 includes one second heat exchange portion 121, five first heat exchange portions 111, one third heat exchange portion 122, one fourth heat exchange portion 125, and one third heat exchange segment 13. The second heat exchange portion 121 and the first heat exchange portions 111a, 111b, 111c, 111d, and 111e extend in the thickness direction of the battery cell 2011 and are arranged sequentially from the side away from the origin of coordinates to the side close to the origin of coordinates in the Y2 direction. The first heat exchange portions 111a, 111b, 111c, 111d, and 111e are connected in sequence, and the second heat exchange portion 121 and the first heat exchange portions 111a and 111b exchange heat with the first group of battery cells 202. The first heat exchange portions 111c, 111d, and 111e exchange heat with the battery modules 201 adjacent to the first group of battery cells 202. The third heat exchange portion 122 extends in the length direction of the battery cell 2011 and is connected between the end of the second heat exchange portion 121 close to the origin of coordinates in the X2 direction and the first heat exchange portion 111e, for heat exchange with the second group of battery cells 203; the fourth heat exchange portion 125 is connected to the end of the second heat exchange portion 121 away from the origin of coordinates in the X2 direction and extends in the length direction of the battery cell 2011 to a position close to the first heat exchange portion 111e; and the third heat exchange segment 13 is connected to the end of the first heat exchange portion 111a away from the origin of coordinates in the X2 direction, extends in the length direction of the battery cell 2011 to a position close to the first heat exchange portion 111e, and exchanges heat with the third group of battery cells 204.

In the above embodiment, the four battery modules 201 are disposed to match two first heat exchange flow channels 10, and each first heat exchange flow channel 10 includes five first heat exchange portions 111 and one second heat exchange portion 121, so that each battery module 201 can exchange heat with three heat exchange portions. In this way, the temperature uniformity of each battery module 201 can be further improved, and meanwhile, the heat exchange area of the heat exchange member 100 for each battery module 201 can be increased, thereby improving the heat exchange effect of the heat exchange member 100 and improving the temperature uniformity of the battery 400.

According to some embodiments of the present application, the number of the battery modules 201 is 2 to 8.

The number of the battery modules 201 can be 2, 3, 4, 5, 6, 7 or 8.

In the above embodiments, by setting the number of the battery modules 201 to 2 to 8, it is beneficial for the overall design of the battery 400 and the heat exchange member 100, and reduce the production difficulty of the heat exchange member 100 and the battery 400, and meanwhile, it can also increase the application range of the battery 400 and improve the market competitiveness of the battery 400.

The present application provides an electrical apparatus, including the battery in the above embodiment.

Other structures and operations of the box, the battery, and the electrical apparatus according to the embodiments of the present utility model are known to those of ordinary skill in the art and will not be described in detail here.

In the description of the specification, the explanation with reference to the terms such as "an embodiment", "some embodiments", "exemplary embodiments", "examples", "specific examples", or "some examples" means that specific features, structures, materials, or characteristics described in combination with the embodiment(s) or example(s) are included in at least one embodiment or example of the present application. In the specification, the illustrative expressions of the above-mentioned terms do not necessarily refer to the same embodiment or example. Moreover, the specific features, structures, materials, or characteristics described herein may be combined in any one or more embodiments or examples in a suitable manner.

Although the embodiments of the present application have been shown and described, those of ordinary skill in the art will understand that various changes, modifications, substitutions and modifications can be made to these embodiments without departing from the principles and purposes of the present application. The scope of the present application is defined by the claims and their equivalents.

## Claims

1. A box, comprising:
a frame (310); and
a supporting plate (320), wherein the supporting plate (320) is disposed on one side of the frame (310) and defines, in an enclosing mode, an accommodating space with the frame (310), the supporting plate (320) comprises a plurality of structural plates (321), a buffer layer (322) disposed between adjacent structural plates (321), and a heat exchange member disposed on the structural plate (321) adjacent to the accommodating space on a side away from the frame (310), and at least one of the structural plates (321) is connected to the frame (310).

2. The box according to claim 1, wherein the heat exchange member comprises a first heat exchange flow channel (10), and the first heat exchange flow channel (10) comprises a first heat exchange segment (11) and a second heat exchange segment (12); and the second heat exchange segment (12) is bent to form a U-shaped region (120), and the first heat exchange segment (11) is bent to be disposed in the U-shaped region (120) and bent to be connected to the second heat exchange segment (12).

3. The box according to claim 2, wherein the second heat exchange segment (12) is located on an outermost side of the first heat exchange flow channel (10) in a circumferential direction; and/or, the first heat exchange segment (11) and the second heat exchange segment (12) are bent in a same plane.

4. The box according to claim 2, wherein the first heat exchange segment (11) comprises a plurality of first heat exchange portions (111), and the plurality of first heat exchange portions (111) are spaced apart from each other and sequentially bent to be connected; and the plurality of first heat exchange portions (111) are spaced apart from each other in a first direction, each first heat exchange portion (111) extends linearly in a second direction, and the first direction and the second direction are arranged at an angle.

5. The box according to any one of claims 2 to 4, wherein the second heat exchange segment (12) comprises a second heat exchange portion (121), a third heat exchange portion (122), and a fourth heat exchange portion (125), the second heat exchange portion (121) extends along a first side periphery of the first heat exchange segment (11), the third heat exchange portion (122) is connected between the second heat exchange portion (121) and the first heat exchange segment (11) and extends along a second side periphery of the first heat exchange segment (11), a first end of the third heat exchange portion (122) is connected to the second heat exchange portion (121) at an angle, and a second end of the third heat exchange portion (122) is connected to the first heat exchange segment (11) at an angle; and the fourth heat exchange portion (125) is in communication with the second heat exchange portion (121), is connected to the second heat exchange portion (121) at an angle, and extends along a third side periphery of the first heat exchange segment (11).

6. The box according to claim 5, wherein the first heat exchange segment (11) comprises a plurality of first heat exchange portions (111), and the plurality of first heat exchange portions (111) are sequentially bent to be connected in the first direction, wherein
the second heat exchange portion (121) is located on one side of the plurality of first heat exchange portions (111) in the first direction, and the third heat exchange portion (122) is located on one side of the plurality of first heat exchange portions (111) in the second direction, and the first direction and the second direction are arranged at an angle; the first end of the third heat exchange portion (122) is connected to one end of the second heat exchange portion (121) in the second direction, the second end of the third heat exchange portion (122) is connected to the first heat exchange portion, furthest from the second heat exchange portion (121) in the first direction, in the plurality of first heat exchange portions (111), the fourth heat exchange portion (125) is located on the other side of the plurality of first heat exchange portions (111) in the second direction, one end of the fourth heat exchange portion (125) is connected to an end of the second heat exchange portion (121) away from the third heat exchange portion (122), and the other end of the fourth heat exchange portion (125) extends, in the first direction, in a direction away from the second heat exchange portion (121); or,
the second heat exchange portion (121) is located on one side of the plurality of first heat exchange portions (111) in the second direction, the third heat exchange portion (122) is located on one side of the plurality of first heat exchange portions (111) in the first direction, and the first direction and the second direction are arranged at an angle; the first end of the third heat exchange portion (122) is connected to one end of the second heat exchange portion (121) in the first direction, the second end of the third heat exchange portion (122) is connected to the first heat exchange portion, closest to the third heat exchange portion (122) in the first direction, in the plurality of first heat exchange portions (111), the fourth heat exchange portion (125) is located on the other side of the plurality of first heat exchange portions (111) in the first direction, one end of the fourth heat exchange portion (125) is connected to an end of the second heat exchange portion (121) away from the third heat exchange portion (122), and the other end of the fourth heat exchange portion (125) extends, in the second direction, in a direction away from the second heat exchange portion (121).

7. The box according to claim 6, wherein the third heat exchange portion (122) and the fourth heat exchange portion (125) extend in the first direction, and both the first heat exchange portion (111) and the second heat exchange portion (121) extend in the second direction; or,
the first heat exchange portion (111), the third heat exchange portion (122), and the fourth heat exchange portion (125) all extend in the second direction, and the second heat exchange portion (121) extends in the first direction.

8. The box according to claim 7, wherein both the third heat exchange portion (122) and the fourth heat exchange portion (125) extend in the first direction, and in the first direction, a length of the fourth heat exchange portion (125) is less than or equal to a length of the third heat exchange portion (122); or,
the first heat exchange portion (111) and the third heat exchange portion (122) extend in the second direction, the second heat exchange portion (121) extends in the first direction, and in the second direction, a length of the third heat exchange portion (122) is greater than or equal to a length of the first heat exchange portion (111).

9. The box according to claim 7, wherein the fourth heat exchange portion (125) extends in the first direction and extends to a position close to the first heat exchange portion, furthest from the second heat exchange portion (121), in the plurality of first heat exchange portions (111).

10. The box according to claim 5, wherein the second heat exchange segment (12) further comprises a fifth heat exchange portion, and the fifth heat exchange portion extends along a fourth side periphery of the first heat exchange segment (11) and closes at least part of an opening of the U-shaped region (120) formed by the second heat exchange portion (121), the third heat exchange portion (122), and the fourth heat exchange portion (125).

11. The box according to claim 10, wherein the fifth heat exchange portion is arranged opposite to the second heat exchange portion (121),
the fifth heat exchange portion is connected between the second end of the third heat exchange portion (122) and the first heat exchange segment (11), connected to the third heat exchange portion (122) at an angle, and connected to the first heat exchange segment (11) at an angle; or, one end of the fifth heat exchange portion is connected to an end of the fourth heat exchange portion (125) away from the second heat exchange portion (121), and the fifth heat exchange portion and the fourth heat exchange portion (125) are connected at an angle.

12. The box according to claim 5, wherein the first heat exchange flow channel (10) further comprises a third heat exchange segment (13), the first heat exchange segment (11) is connected between the third heat exchange segment (13) and the second heat exchange segment (12), and the third heat exchange segment (13) and the first heat exchange segment (11) are connected at an angle.

13. The box according to claim 12, wherein the first heat exchange segment (11) comprises a plurality of first heat exchange portions (111), and the plurality of first heat exchange portions (111) are sequentially bent to be connected in the first direction; and
the third heat exchange segment (13) is arranged on a side of the first heat exchange segment (11) away from the third heat exchange portion (122), and the third heat exchange segment (13) is connected to the first heat exchange portion, closest to the second heat exchange portion (121) in the first direction, in the plurality of first heat exchange portions (111).

14. The box according to claim 13, wherein the third heat exchange segment (13) extends, in the first direction, in the direction away from the second heat exchange portion (121), and the first heat exchange portion (111) extends in the second direction, wherein the first direction and the second direction are arranged at an angle.

15. The box according to claim 14, wherein the third heat exchange segment (13) extends in the first direction to a position close to the first heat exchange portion, furthest from the second heat exchange portion (121), in the plurality of first heat exchange portions (111).

16. The box according to any one of claims 2 to 4, wherein the first heat exchange segment (11) is connected downstream of the second heat exchange segment (12) in a fluid flow direction; or, the heat exchange member is configured such that: when a battery assembly is heated, the first heat exchange segment (11) is connected downstream of the second heat exchange segment (12) in the fluid flow direction; and when the battery assembly of a battery is cooled, the first heat exchange segment (11) is connected upstream of the second heat exchange segment (12) in the fluid flow direction.

17. The box according to any one of claims 2 to 4, wherein the box is provided with one or more heat exchange flow channels, when a plurality of heat exchange flow channels are disposed, the plurality of heat exchange flow channels are spaced apart from each other in the first direction or arranged around each other, at least one of the heat exchange flow channels is formed as the first heat exchange flow channel (10), and the plurality of heat exchange flow channels are arranged in parallel.

18. The box according to claim 17, wherein the plurality of heat exchange flow channels are spaced apart from each other in the first direction, and two heat exchange flow channels located at two ends in the first direction are both the first heat exchange flow channel (10); and the two first heat exchange flow channels (10) are symmetrically arranged about a centerline of the box in the second direction, wherein the second direction and the first direction are arranged at an angle.

19. The box according to claim 17, wherein the plurality of heat exchange flow channels are symmetrically arranged about the centerline of the box in the second direction.

20. The box according to claim 17, wherein the plurality of heat exchange flow channels further comprise at least one second heat exchange flow channel (30), and the second heat exchange flow channel (30) is disposed between the two first heat exchange flow channels (10), wherein a structure of any second heat exchange flow channel (30) is same as or different from a structure of the first heat exchange flow channel (10).

21. The box according to claim 20, wherein the second heat exchange flow channel (30) comprises a plurality of fourth heat exchange segments (31), and the plurality of fourth heat exchange segments (31) are sequentially connected, wherein the fourth heat exchange segment (31) extends in the second direction, and the plurality of fourth heat exchange segments (31) are spaced apart from each other in the first direction.

22. The box according to claim 17, wherein the heat exchange member is provided with a plurality of heat exchange flow channels, the plurality of heat exchange flow channels comprise one first heat exchange flow channel (10) and at least one fourth heat exchange flow channel, the fourth heat exchange flow channel is bent to be disposed in the U-shaped region (120) of the first heat exchange flow channel (10), the first heat exchange flow channel (10) and the fourth heat exchange flow channel are bent in a same plane, and bending structures of the first heat exchange flow channel (10) and the fourth heat exchange flow channel are same or different.

23. The box according to claim 22, wherein the fourth heat exchange flow channel comprises a U-shaped region (120) structurally identical to the first heat exchange flow channel (10), and at least part of the first heat exchange segment (11) of the first heat exchange flow channel (10) is disposed in the U-shaped region (120) of the fourth heat exchange flow channel.

24. The box according to claim 22, wherein the U-shaped region (120) of the first heat exchange flow channel (10) is located in a circumferential direction of an outermost side of the heat exchange member.

25. The box according to claim 17, wherein the box comprises at least one heat exchange tube, when a plurality of heat exchange tubes are disposed, the plurality of heat exchange tubes are spaced apart from each other in the first direction, and each heat exchange tube defines one heat exchange flow channel on an inner side thereof.

26. The box according to any one of claims 1-4, wherein the buffer layer (322) is constructed as a porous structure.

27. The box according to claim 26, wherein a hole in the buffer layer (322) extends in an opposite direction of the adjacent structural plate (321).

28. The box according to claim 26, wherein the buffer layer (322) is constructed as a plastic material member or a metal material member; when the buffer layer (322) is constructed as the plastic material member, the buffer layer (322) is connected to the structural plate (321) through thermocompression bonding; and when the buffer layer (322) is constructed as the metal material member, the buffer layer (322) is connected to the structural plate (321) through brazing.

29. The box according to any one of claims 1-4, wherein the structural plates (321) comprise a first structural plate (3211) to an Nth structural plate (3212) sequentially disposed in an arrangement direction of the frame (310) and the supporting plate (320), N≥2, and at least the first structural plate (3211) and the Nth structural plate (3212) are connected to the frame (310).

30. The box according to claim 29, wherein a connecting flange (311) is disposed on a side of the frame (310) facing the supporting plate (320), a structural dimension of the buffer layer (322) is less than a structural dimension of the structural plate (321) to define an inserting groove, and the connecting flange (311) extends into the inserting groove; or the connecting flange (311) is connected to the first structural plate (3211) in an overlapping mode.

31. The box according to claim 30, wherein a minimum overlapping dimension of the structural plate (321) and the connecting flange (311) is 6 mm.

32. The box according to claim 30 or 31, wherein a structural dimension of the first structural plate (3211) is less than a structural dimension of the Nth structural plate (3212), and the first structural plate (3211) is connected to the connecting flange (311), while the Nth structural plate (3212) is connected to an end surface of the frame (310); or,
the structural dimension of the first structural plate (3211) is equal to the structural dimension of the Nth structural plate (3212), and both the first structural plate (3211) and the Nth structural plate (3212) are connected to the connecting flange (311).

33. A battery, comprising the box according to any one of claims 1 to 32.

34. An electrical apparatus, comprising the battery according to claim 33.
